# EUROPÄISCHE PATENTSCHRIFT

(11) **EP 3 331 965 B1**
(45) Veröffentlichungstag und Bekanntmachung des Hinweises auf die Patenterteilung: **05.01.2022**
(21) Anmeldenummer: 16741863.1
(22) Anmeldetag: 22.07.2016
(51) Int. Cl.: C09K 19/30, C09K 19/12, C09K 19/04

(54) **FLÜSSIGKRISTALLINES MEDIUM**
LIQUID CRYSTAL MEDIUM
MILIEU CRISTAL LIQUIDE

(30) Priorität: 05.08.2015 DE 102015010116
(43) Veröffentlichungstag der Anmeldung: 13.06.2018
(73) Patentinhaber: Merck Patent GmbH, 64293 Darmstadt (DE)
(72) Erfinder: HIRSCHMANN, Harald, 64291 Darmstadt (DE); POHLE, Andreas, 64319 Pfungstadt (DE); SCHOEN, Sabine, 45701 Herten (DE)
(86) Internationale Anmeldenummer: PCT/EP2016/001278
(87) Internationale Veröffentlichungsnummer: WO 2017/020998

(56) Entgegenhaltungen:
- EP-A1- 1 956 069
- EP-A1- 2 116 587
- EP-A1- 2 182 043
- WO-A1-2015/072368
- DE-A1-102007 041 245
- DE-A1-102009 009 414
- US-A1- 2012 044 453
- US-A1- 2014 306 158

## Beschreibung

Die vorliegende Erfindung betrifft ein flüssigkristallines Medium (FK-Medium), dessen Verwendung für elektrooptische Zwecke und dieses Medium enthaltende FK-Anzeigen.

Flüssigkristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Zur Realisierung von 3D-Effekten mittels Shutterbrillen werden insbesondere schnell schaltende Mischungen mit niedrigen Rotationsviskositäten und einer entsprechend hohen optischen Anisotropie (Δn) eingesetzt. Elektrooptische Linsensyteme, mit denen eine 2-dimensionale Darstellung eines Displays in eine 3-dimensionale autostereoskopische Darstellung geschaltet werden kann, können unter Verwendung von Mischungen mit hoher optischer Anisotropie (Δn) realisiert werden.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung.

Mit den aus dem Stand der Technik zur Verfügung stehenden Medien, wie z. B. bekannt aus WO 2015/072368 A1, US 2014/306158 A1, EP 2 182 043 A1, US 2012/044453 A1, EP 2 116 587 A1, DE 10 2007 041245 A1, EP 1 956 069 A1, DE 10 2009 009414 A1, ist es nicht möglich, diese Vorteile unter gleichzeitigem Erhalt der übrigen Parameter zu realisieren. Moderne LCD-Flachbildschirme erfordern immer schnellere Schaltzeiten um Multimediainhalte, wie z.B. Filme und Videospiele, realistisch wiedergeben zu können. Dies wiederum erfordert nematische Flüssigkristallmischungen, die eine sehr kleine Rotationsviskosität γ₁ mit einer hohen optischen Anisotropie Δn aufweisen. Um die geforderten Rotationsviskositäten zu erhalten, werden Substanzen gesucht, die ein besonders vorteilhaftes γ₁/Klärpunkt-Verhältnis bei gleichzeitig hohem Δn mit hoher Polarität aufweisen.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Insbesondere bei FK-Anzeigen für TV- und Video-Anwendungen (z. B. LCD-TV, Monitore, PDAs, Notebooks, Spielkonsolen) ist eine deutliche Verringerung der Schaltzeiten gewünscht. Dies erfordert FK-Mischungen mit niedrigen Rotationsviskositäten und hohen dielektrischen Anisotropien. Gleichzeitig sollten die FK-Medien ein breite nematische Phase und einen möglichst niedrigen Wert der Temperatur des Phasenübergangs smektisch-nematisch bzw. des Schmelzpunktes aufweisen.

Der Erfindung liegt die Aufgabe zugrunde Medien, insbesondere für derartige MFK-, TN-, PS-TN-, STN-, ECB-, OCB-, IPS-, PS-IPS-, FFS-, PS-FFS- oder positiv-VA-Anzeigen, bereitzustellen, die die oben angegebenen Nachteile nicht oder nur in geringerem Maße zeigen, und vorzugsweise schnelle Schaltzeiten und niedrige Rotationsviskositäten bei gleichzeitig hohem Klärpunkt, sowie eine hohe dielektrische Anisotropie und eine niedrige Schwellenspannung aufweisen.

Es wurde nun gefunden, dass diese Aufgabe gelöst werden kann, wenn man FK-Medien, wie nachfolgend beschrieben, verwendet.

Gegenstand der Erfindung ist ein flüssigkristallines Medium gemäß Anspruch 1, dadurch gekennzeichnet, dass es
eine oder mehrere Verbindungen der Formel 1, und 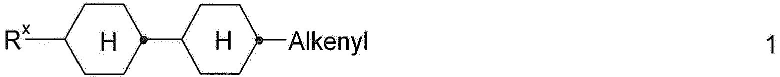 eine oder mehrere Verbindungen der Formel 2, und 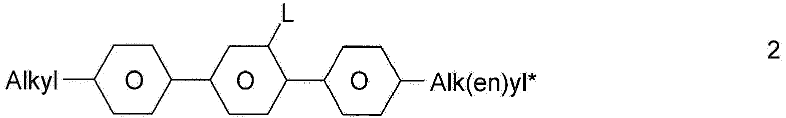 eine oder mehrere Verbindungen ausgewählt aus den Verbindungen der Formeln 3, 4 und 5, 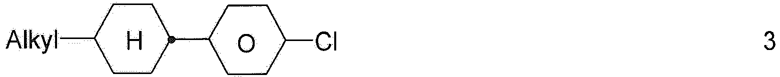 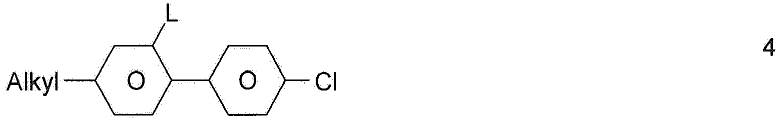 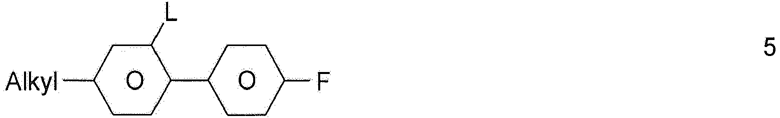 enthält,
worin die einzelnen Reste, jeweils unabhängig voneinander und bei jedem Auftreten gleich oder verschieden, die folgende Bedeutung besitzen:
- Alkenyl: C₂₋₆-Alkenyl,
- R^{x}: C₁₋₆-Alkyl oder C₂₋₆-Alkenyl,
- Alkyl oder Alkyl*: jeweils unabhängig voneinander C₁₋₆-Alkyl,
- L: H oder F,
- Alk(en)yl*: C₁₋₆-Alkyl oder C₂₋₆-Alkenyl,
und
es zusätzlich eine oder mehrere Verbindungen ausgewählt aus den Formeln XV und XVI enthält, 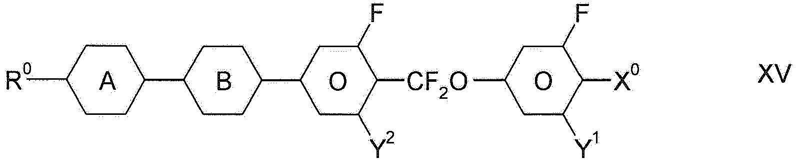 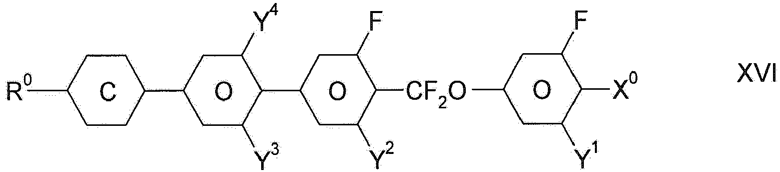 worin R⁰, X⁰ und Y¹⁻⁴ die in Anspruch 9 angegebenen Bedeutungen besitzen, 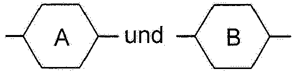 jeweils unabhängig voneinander 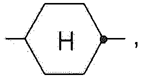 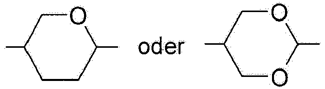 bedeuten, und 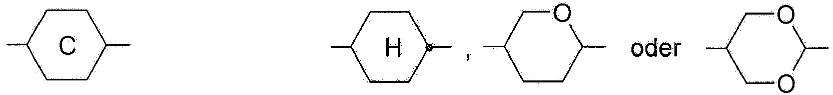 bedeutet, und es zusätzlich eine oder mehrere Verbindungen der Formel XXX enthält, 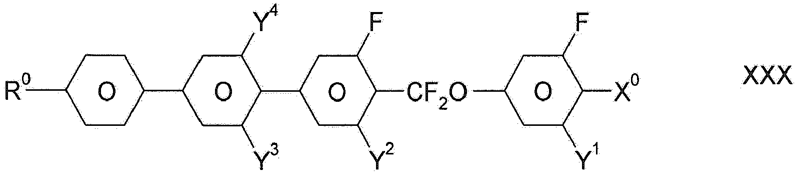 worin R⁰, X⁰ und Y¹⁻⁴ die in Anspruch 9 angegebenen Bedeutungen besitzen,
und das Medium mindestens drei Verbindungen der Formel PGP-n-m und/oder PGP-n-2V, 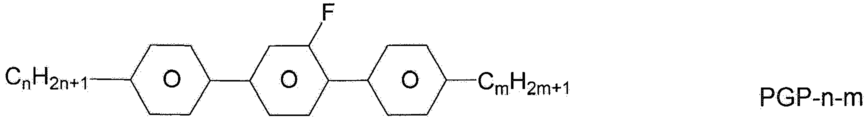 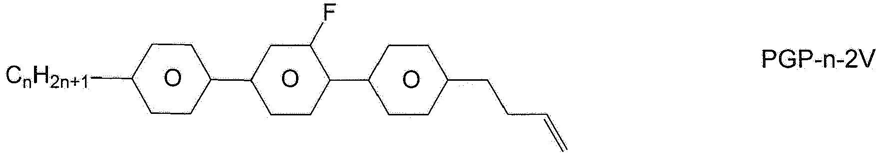 worin n und m jeweils unabhängig voneinander 2, 3, 4 oder 5 bedeuten,
enthält.

Überraschenderweise wurde gefunden, dass FK-Medien enthaltend eine oder mehrere Verbindungen aus gewählt aus den Formeln 1-5 eine hohe dielektrische Anisotropie Δε , eine hohe Doppelbrechung Δn, eine niedrige Rotationsviskosität γ₁ und eine niedrige Temperatur des Phasenübergangs smektisch-nematisch bzw. des Schmelzpunktes aufweisen. Sie sind daher zur Realisierung von Flüssigkristallmischungen mit niedrigem γ₁ und hohem Δn besonders geeignet. Darüber hinaus zeigen die Verbindungen der Formeln 1-5 eine gute Löslichkeit und ein sehr gutes Phasenverhalten in FK-Medien.

Erfindungsgemäße FK-Medien enthaltend Verbindungen der Formeln 1-5 besitzen eine niedrige Rotationsviskosität, schnelle Schaltzeiten, einen hohen Klärpunkt, eine sehr hohe positive dielektrische Anisotropie, eine relativ hohe Doppelbrechung und einen breiten nematischen Phasenbereich. Sie sind deshalb besonders gut für mobile Telefone, TV-und Video-Anwendungen geeignet.

Die Verbindungen der Formeln 1-5 besitzen einen breiten Anwendungsbereich. In Abhängigkeit von der Auswahl der Substituenten können sie als Basismaterialien dienen, aus denen flüssigkristalline Medien zum überwiegenden Teil zusammengesetzt sind; es können aber auch den Verbindungen der Formeln 1-5 flüssigkristalline Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formeln 1-5 besitzen relativ niedrige Schmelzpunkte, zeigen ein gutes Phasenverhalten, sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

In den oben- und untenstehenden Formeln kann ein Alkylrest oder Alkoxyrest geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy. R^{A} und R^{B} bedeuten jeweils vorzugsweise geradkettiges Alkyl mit 2-6 C-Atomen.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Ein Alkenylrest kann geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3-oder Pent-4-enyl, Hex-1-, 2-, 3-, 4- oder Hex-5-enyl, Hept-1-, 2-, 3-, 4-, 5-oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls eine Alkyl- oder Alkenylrest mindestens einfach durch Halogen substituiert ist, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

In den oben- und untenstehenden Formeln ist X⁰ vorzugsweise F, Cl oder ein- oder mehrfach fluorierter Alkyl- oder Alkoxyrest mit 1, 2 oder 3 C-Atomen oder ein- oder mehrfach fluorierter Alkenylrest mit 2 oder 3 C-Atomen bedeutet. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃, OCH=CF₂ oder CH=CF₂, ganz besonders bevorzugt F oder OCF₃, ferner CF₃, OCF=CF₂, OCHF₂ und OCH=CF₂.

Besonders bevorzugt sind Verbindungen der Formel 1, worin "Alkenyl" Vinyl, Prop-1-enyl, Prop-2-enyl oder But-3-enyl bedeutet.

Ferner bevorzugt sind Verbindungen der Formel 1, worin R^{x} Methyl, Ethyl, n-Propyl, n-Butyl oder n-Pentyl bedeutet.

Besonders bevorzugt sind Verbindungen der Formel 2, worin L F bedeutet.

Ferner bevorzugt sind Verbindungen der Formel 2, worin "Alkyl" Methyl, Ethyl, n-Propyl, n-Butyl oder n-Pentyl bedeutet.

Ferner bevorzugt sind Verbindungen der Formel 2, worin "Alkenyl" Vinyl, Prop-1-enyl, Prop-2-enyl oder But-3-enyl, besonders bevorzugt But-3-enyl bedeutet.

Besonders bevorzugt sind Verbindungen der Formel 4 worin L F bedeutet.

Besonders bevorzugt sind Verbindungen der Formel 5 worin L H bedeutet.

Ferner bevorzugt sind Verbindungen der Formeln 3, 4 und 5 worin "Alkyl" Ethyl, n-Propyl oder n-Pentyl bedeutet.

Die Verbindungen der Formel 1 sind vorzugsweise ausgewählt aus den folgenden Formeln, 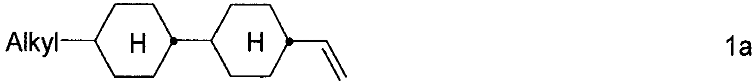 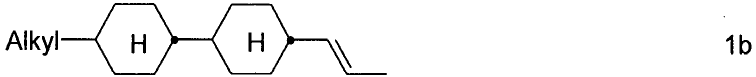 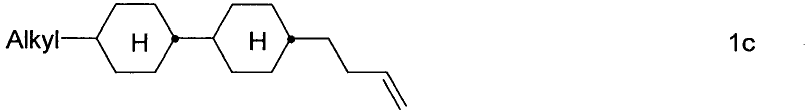 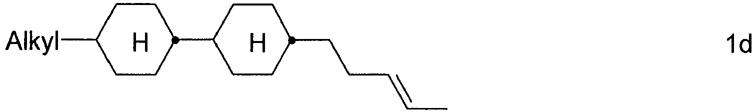 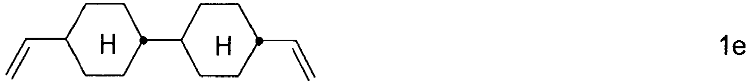 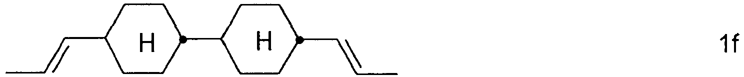 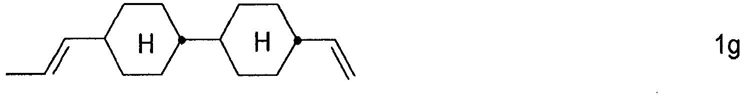 worin "Alkyl" die in Formel 1 angegeben Bedeutung besitzt und besonders bevorzugt Methyl, Ethyl. n-Propyl, n-Butyl oder n-Pentyl bedeutet.

Besonders bevorzugt sind Verbindungen der Formel 1a und 1b, insbesondere solche worin "Alkyl" n-Propyl bedeutet.

Die Verbindungen der Formel 2 sind vorzugsweise ausgewählt aus den folgenden Formeln:

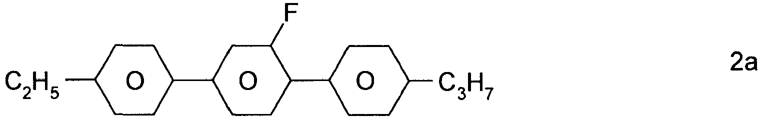

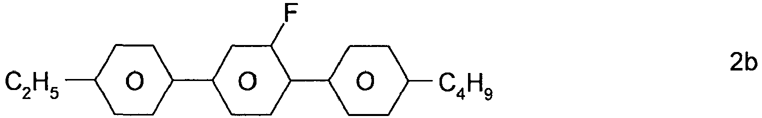

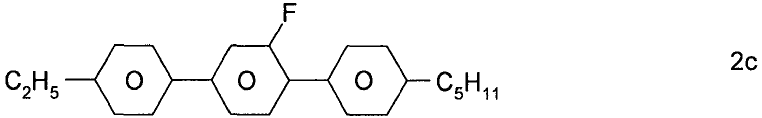

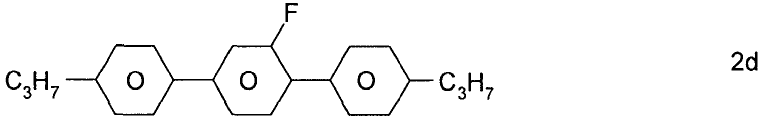

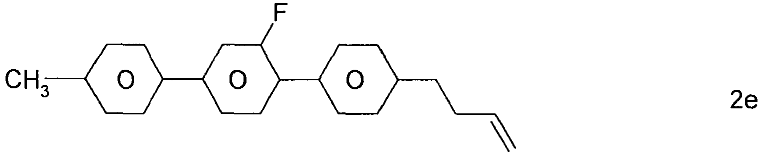

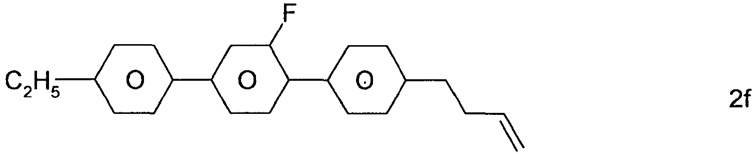

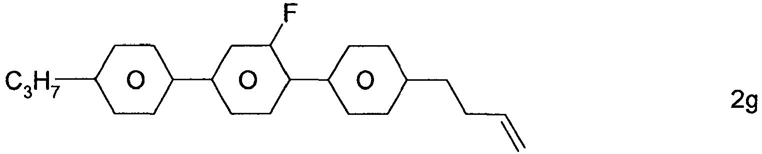

Die Verbindungen der Formel 3 sind vorzugsweise ausgewählt aus den folgenden Formeln

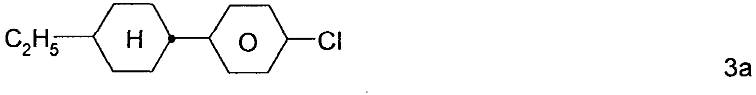

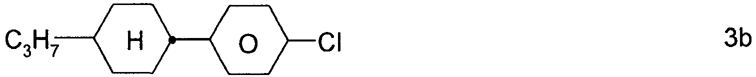

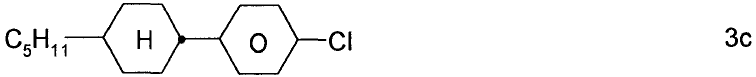

Besonders bevorzugt sind Verbindungen der Formel 3b.

Die Verbindungen der Formel 4 sind vorzugsweise ausgewählt aus den folgenden Formeln

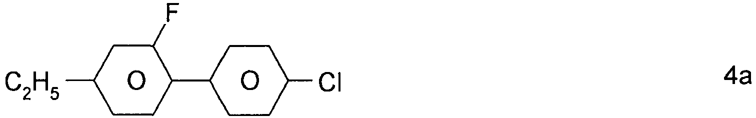

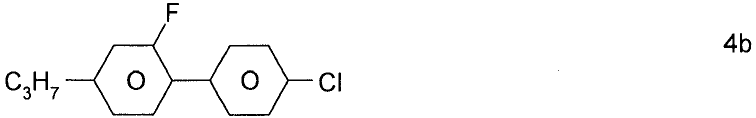

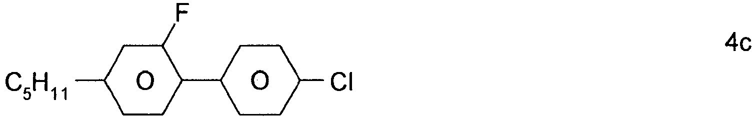

Besonders bevorzugt sind Verbindungen der Formel 4b.

Die Verbindungen der Formel 5 sind vorzugsweise ausgewählt aus den folgenden Formeln

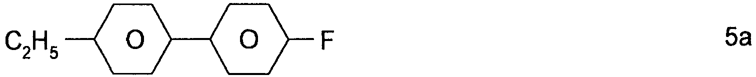

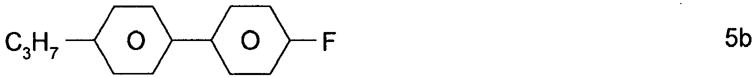

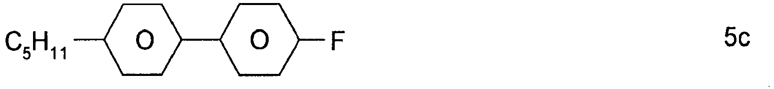

Besonders bevorzugt sind Verbindungen der Formel 5c.

Besonders bevorzugte Medien sind im Folgenden beschrieben:
Medium enthaltend jeweils eine oder mehrere Verbindungen der Formel 1, 2 und 3.
Medium enthaltend jeweils eine oder mehrere Verbindungen der Formel 1, 2 und 4.
Medium enthaltend jeweils eine oder mehrere Verbindungen der Formel 1, 2 und 5.
Medium enthaltend eine oder mehrere Verbindungen der Formel 1, eine oder mehrere Verbindungen der Formel 2, sowie eine oder mehrere Verbindungen der Formel 3 oder 5.

### Medium enthaltend

eine oder mehrere Verbindungen ausgewählt aus den Formeln 1a und 1b, und zwei oder mehrere Verbindungen ausgewählt aus den Formeln 2a bis 2d, und eine Verbindung der Formel 3b oder 4b oder 5c.

### Medium enthaltend:

eine oder mehrere Verbindungen ausgewählt aus den Formeln 1a und 1b, und zwei oder mehrere Verbindungen ausgewählt aus den Formeln 2a bis 2d, und eine Verbindung der Formel 3b oder 5c.

Der Anteil an Verbindungen der Formel 1 im Gesamtgemisch beträgt vorzugsweise 20 bis 65 Gew.%, besonders bevorzugt 25 bis 60 Gew.%.

Der Anteil an Verbindungen der Formel 2 im Gesamtgemisch beträgt vorzugsweise 5 bis 35 Gew.%, besonders bevorzugt 5 bis 25 Gew.%.

Der Anteil an Verbindungen der Formel 3 im Gesamtgemisch beträgt vorzugsweise 2 bis 20 Gew.%, besonders bevorzugt 2 bis 15 Gew.%.

Der Anteil an Verbindungen der Formel 4 im Gesamtgemisch beträgt vorzugsweise 2 bis 20 Gew.%, besonders bevorzugt 2 bis 15 Gew.%.

Der Anteil an Verbindungen der Formel 5 im Gesamtgemisch beträgt vorzugsweise 2 bis 20 Gew.%, besonders bevorzugt 2 bis 15 Gew.%.

### Besonders bevorzugt sind Medien enthaltend

- 20 bis 65 Gew.% einer oder mehrerer Verbindungen der Formel 1, vorzugsweise ausgewählt aus den Formeln 1a und 1b, und
- 5 bis 30 Gew.% einer oder mehrerer Verbindungen der Formel 2, vorzugsweise ausgewählt aus den Formeln 2a, 2b, 2c und 2d, und
- 2 bis 20 Gew.% einer oder mehrerer Verbindungen ausgewählt aus den Formeln 3, 4 und 5, vorzugsweise ausgewählt aus den Formeln 3b, 4b und 5c.

Die Verbindungen der Formeln 1-5 werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Bevorzugte Ausführungsformen für die erfindungsgemäßen Mischungen sind im Folgenden angegeben:
- Das Medium enthält zusätzlich eine oder mehrere Verbindungen der Formel II und/oder III 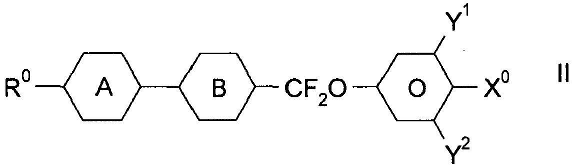 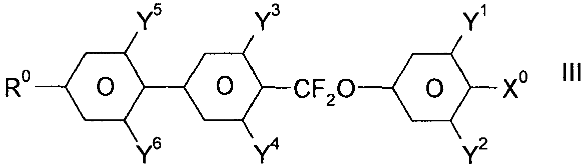 worin
   - R⁰: unsubstituiertes oder halogeniertes Alkyl oder Alkoxy mit 1 bis 15 C-Atomen, Cyclopentyl, Cyclobutyl, wobei in diesen Resten auch eine oder mehrere CH₂-Gruppen jeweils unabhängig voneinander durch -C≡C-, -CF₂O-, -CH=CH-, 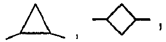 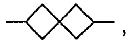 -O-, -CO-O- oder -O-CO- so ersetzt sein können, dass O-Atome nicht direkt miteinander verknüpft sind,
   - X⁰: F, Cl, halogeniertes Alkyl, halogeniertes Alkoxy, halogeniertes Alkenyl oder halogeniertes Alkenyloxy mit jeweils bis zu 6 C-Atomen,
   - Y¹⁻⁶: jeweils unabhängig voneinander H oder F 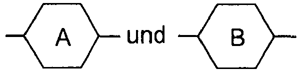 jeweils unabhängig voneinander 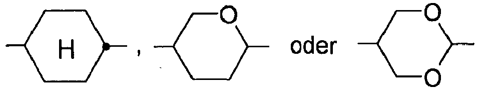 bedeuten.
- Die Verbindungen der Formel II sind vorzugsweise ausgewählt aus den folgenden Formeln, 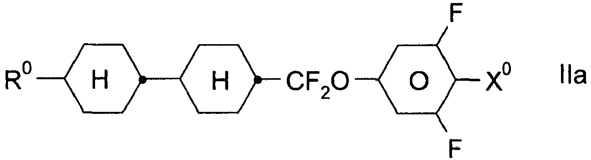 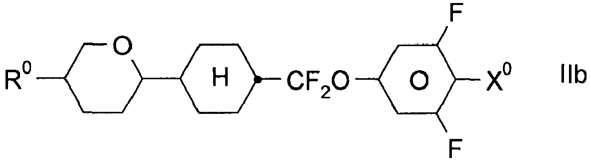 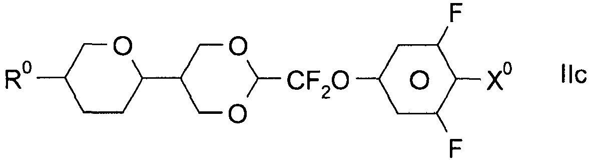 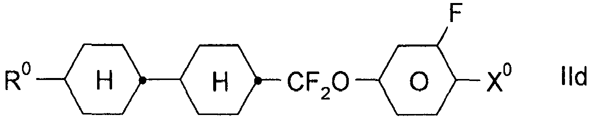 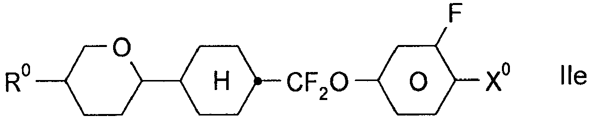 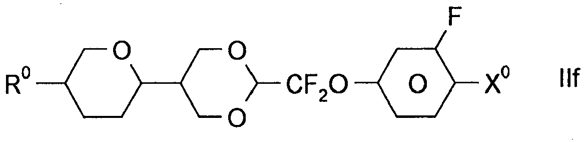 worin R⁰ und X⁰ die oben angegebenen Bedeutungen haben.

Vorzugsweise bedeutet R⁰ Alkyl mit 1 bis 6 C-Atomen oder Cyclopentyl. X⁰ bedeutet vorzugsweise F. Besonders bevorzugt sind Verbindungen der Formel IIa und IIb, insbesondere Verbindungen der Formeln IIa und IIb, worin X⁰ F bedeutet.
- Die Verbindungen der Formel III sind vorzugsweise ausgewählt aus den folgenden Formeln, 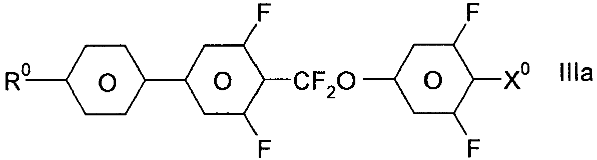 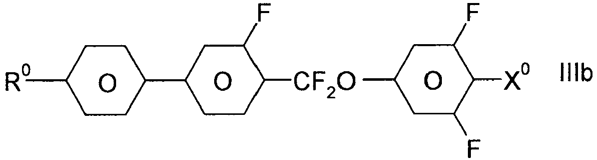 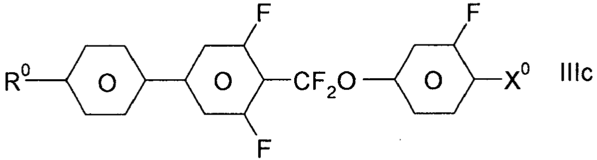 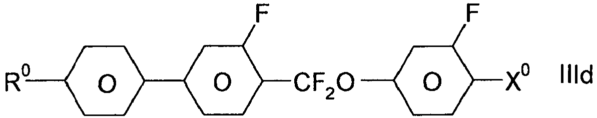 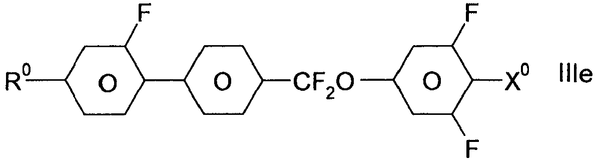 worin R⁰ und X⁰ die oben angegebenen Bedeutungen haben.

Vorzugsweise bedeutet R⁰ Alkyl mit 1 bis 6 C-Atomen oder Cyclopentyl. X⁰ bedeutet vorzugsweise F. Besonders bevorzugt sind Verbindungen der Formeln lila und IIIa, insbesondere der Formel lila;
- Das Medium enthält zusätzlich eine oder mehrere Verbindungen ausgewählt aus den folgenden Formeln, 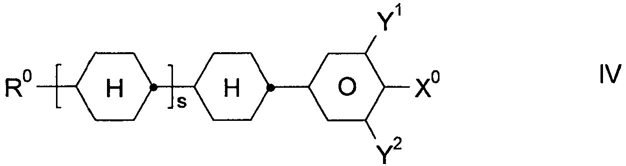 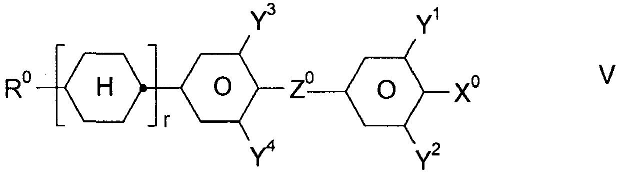 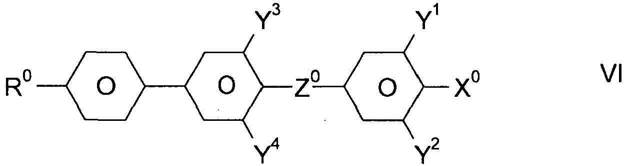 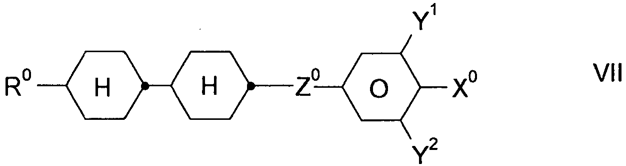 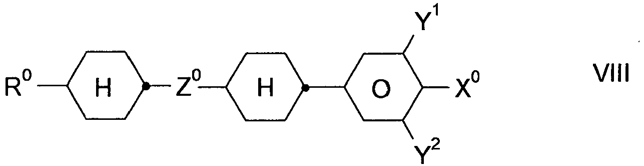 worin R⁰, X⁰ und Y¹⁻⁴ die oben angegebenen Bedeutungen besitzen, und
   - Z⁰: -C₂H₄-, -(CH₂)₄-, -CH=CH-, -CF=CF-, -C₂F₄-, -CH2CF2-, -CF₂CH₂-, -CH₂O-, -OCH₂-, -COO- oder -OCF₂-, in Formel V und VI auch eine Einfachbindung, in Formel V und VIII auch -CF₂O-,
   - r: 0 oder 1, und
   - s: 0 oder 1
   bedeuten;
- Die Verbindungen der Formel IV sind vorzugsweise ausgewählt aus folgenden Formeln, 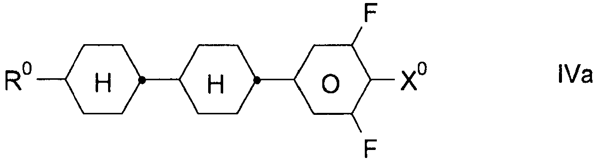 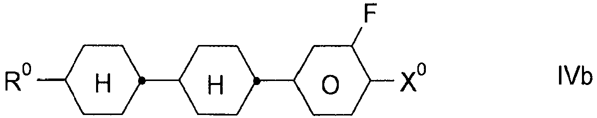 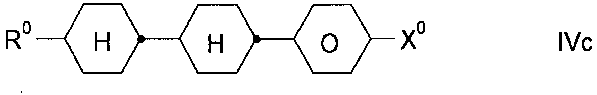 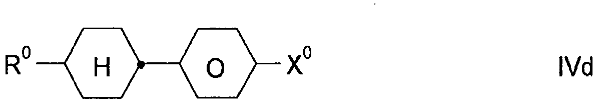 worin R⁰ und X⁰ die oben angegebenen Bedeutungen haben.

Vorzugsweise bedeutet R⁰ Alkyl mit 1 bis 6 C-Atomen oder Cyclopentyl. X⁰ bedeutet vorzugsweise F oder OCF₃, ferner OCF=CF₂, CF₃ und Cl;
- Die Verbindungen der Formel V sind vorzugsweise ausgewählt aus den folgenden Formeln, 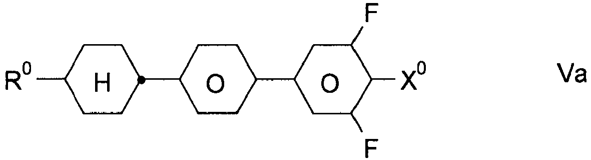 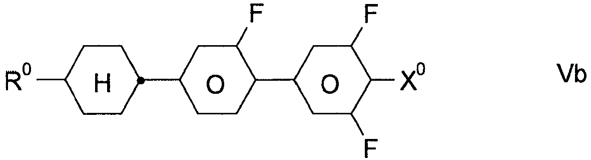 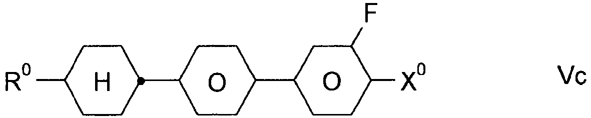 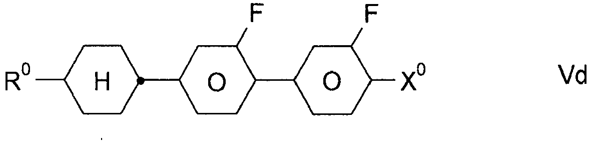 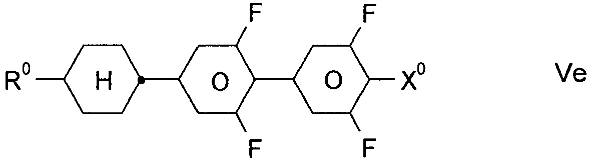 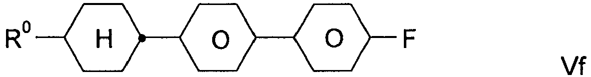 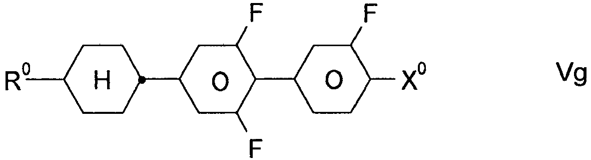 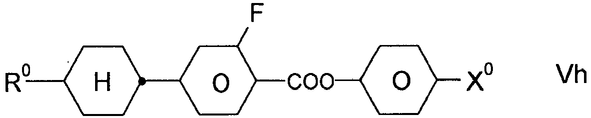 worin R⁰ und X⁰ die oben angegebenen Bedeutungen haben.
   Vorzugsweise bedeutet R⁰ Alkyl mit 1 bis 6 C-Atomen oder Cyclopentyl. X⁰ bedeutet vorzugsweise F und OCF₃, ferner OCHF₂, CF₃, OCF=CF₂ und OCH=CF₂;
- Die Verbindungen der Formel VI sind vorzugsweise ausgewählt aus den folgenden Formeln, 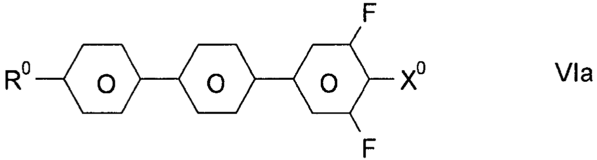 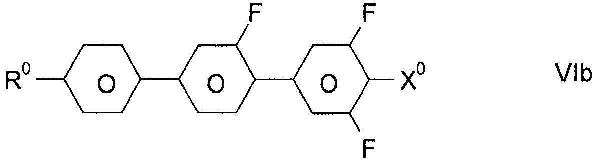 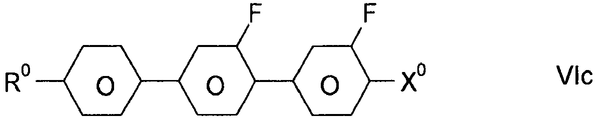 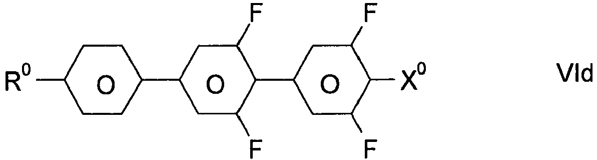 worin R⁰ und X⁰ die oben angegebenen Bedeutungen haben.

Vorzugsweise bedeutet R⁰ Alkyl mit 1 bis 6 C-Atomen oder Cyclopenyl. X⁰ bedeutet vorzugsweise F, ferner OCF₃, CF₃, CF=CF₂, OCHF₂ und OCH=CF₂.
- Die Verbindungen der Formel VII sind vorzugsweise ausgewählt aus den folgenden Formeln, 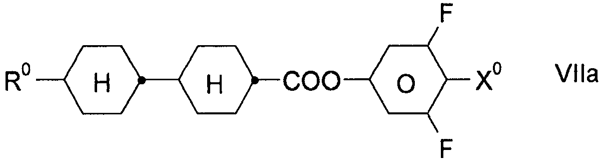 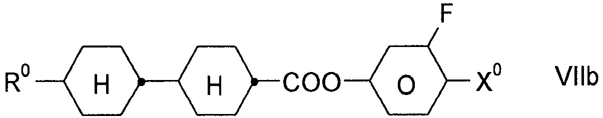 worin R⁰ und X⁰ die oben angegebenen Bedeutungen haben.

Vorzugsweise bedeutet R⁰ Alkyl mit 1 bis 6 C-Atomen oder Cyclpentyl. X⁰ bedeutet vorzugsweise F, ferner OCF₃, CF₃, OCHF₂ und OCH=CF₂.
- Das Medium enthält zusätzlich eine oder mehrere Verbindungen ausgewählt aus den folgenden Formeln, 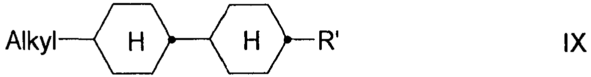 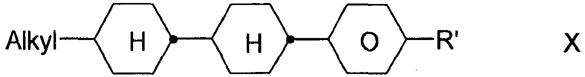 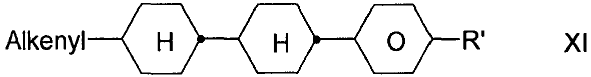 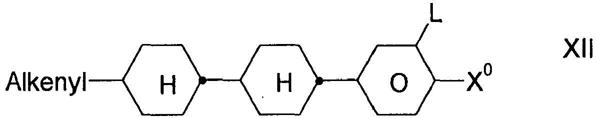 worin X⁰ die oben angegebenen Bedeutungen besitzt, und
   - L: H oder F,
   - "Alkyl": C₁₋₆-Alkyl,
   - R': C₁₋₆-Alkyl, C₁₋₆-Alkoxy oder C₂₋₆-Alkenyl, und
   "Alkenyl" und "Alkenyl*" jeweils unabhängig voneinander C₂₋₆-Alkenyl bedeuten.
- Die Verbindungen der Formeln IX-XII sind vorzugsweise ausgewählt aus den folgenden Formeln, 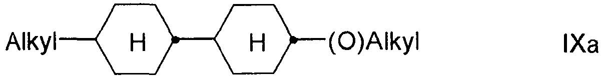 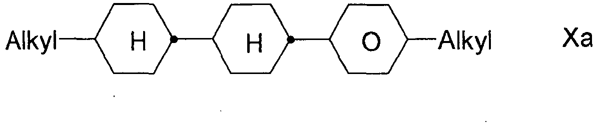 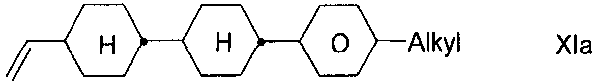 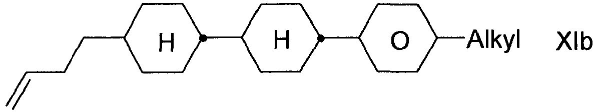 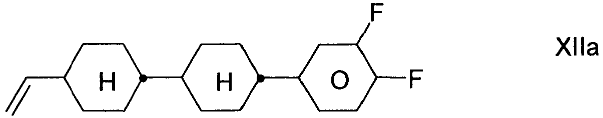 worin "Alkyl" die oben angegebene Bedeutung hat. (O)Alkyl bedeutet "Alkyl" oder "OAlkyl" (= Alkoxy)
- Das Medium enthält zusätzlich eine oder mehrere Verbindungen ausgewählt aus den folgenden Formeln, 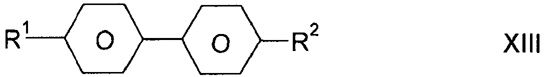 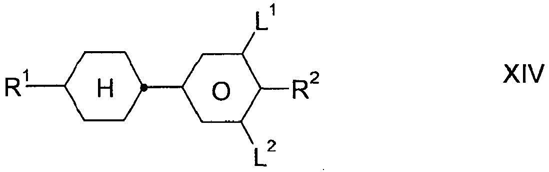 worin L¹ und L² jeweils unabhänigig voneinander H oder F bedeuten. R¹ und R² bedeuten jeweils unabhängig voneinander n-Alkyl, Alkoxy, Oxaalkyl, Fluoralkyl oder Alkenyl mit jeweils bis zu 6 C-Atomen und vorzugsweise jeweils unabhängig voneinander Alkyl mit 1 bis 6 C-Atomen. In der Verbindung der Formel XIII bedeutet vorzugsweise mindestens einer der Reste R¹ und R² Alkenyl mit 2 bis 6 C-Atomen.
- Das Medium enthält eine oder mehrere Verbindungen der Formel XIII, worin mindestens einer der Reste R¹ und R² Alkenyl mit 2 bis 6 C-Atomen bedeutet, vorzugsweise solche ausgewählt aus folgenden Formeln, 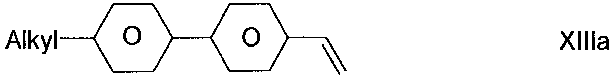 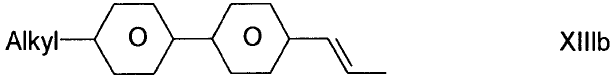 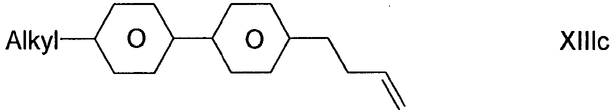 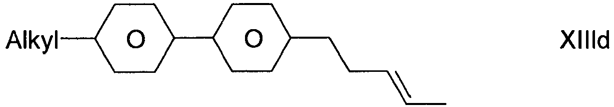 worin "Alkyl" die oben angegebene Bedeutung hat, und vorzugsweise Methyl oder Ethyl bedeutet. Besonders bevorzugt sind Verbindungen der Formel Xllld.
- Das Medium enthält eine oder mehrere Verbindungen der folgenden Formeln, 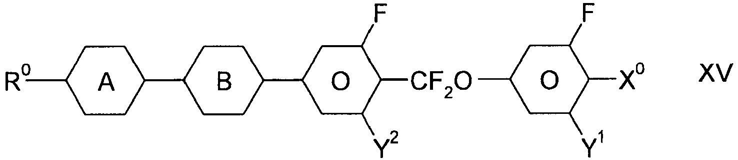 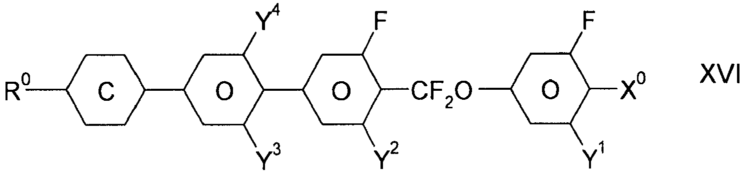 worin R⁰, X⁰ und Y¹⁻⁴ die in Formel II angegebenen Bedeutungen besitzen, und 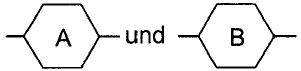 jeweils unabhängig voneinander 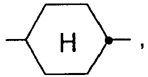 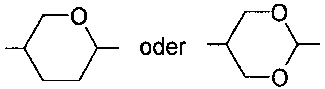 bedeuten, und 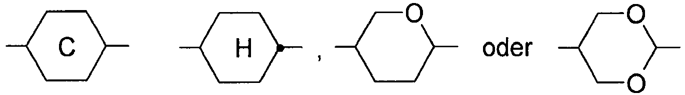 bedeutet;
- Die Verbindungen der Formeln XV und XVI sind vorzugsweise ausgewählt aus den folgenden Formeln, 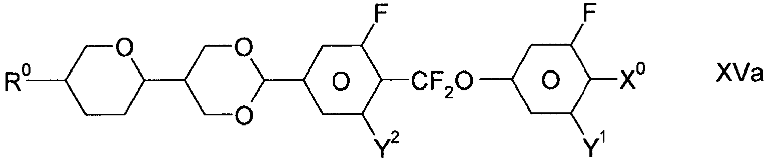 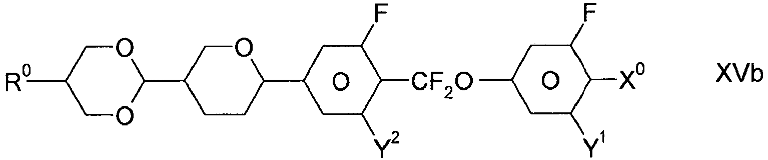 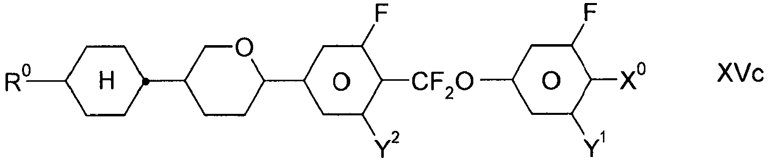 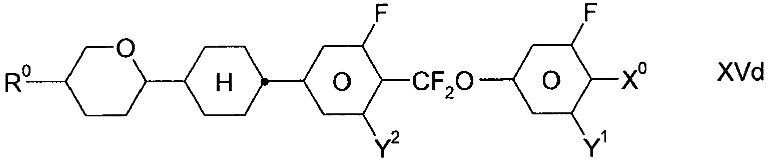 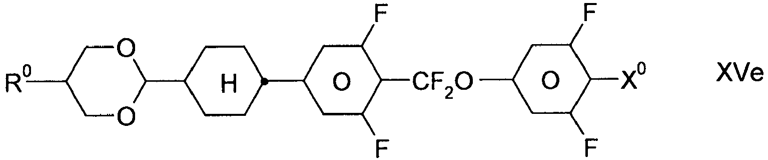 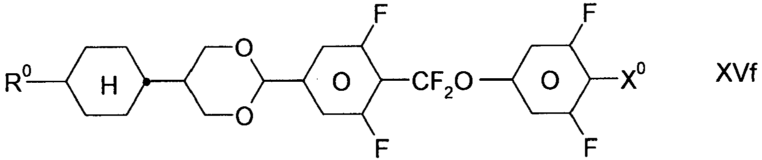 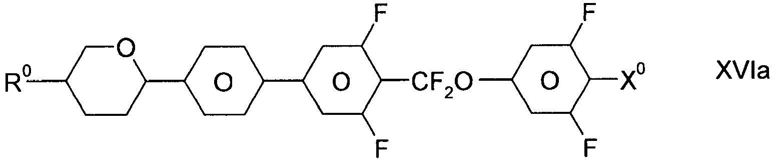 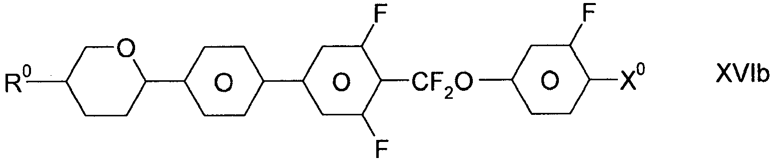 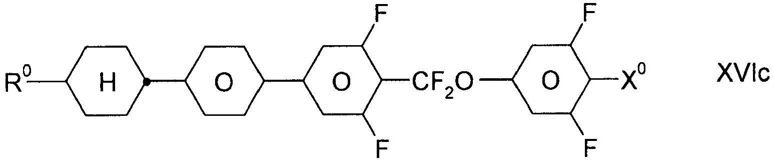 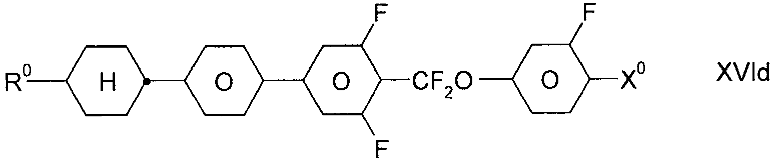 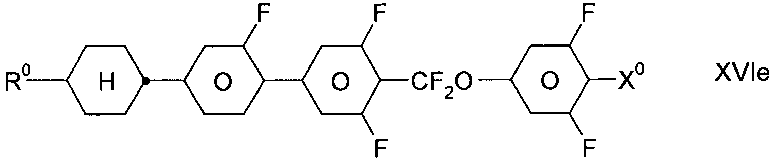 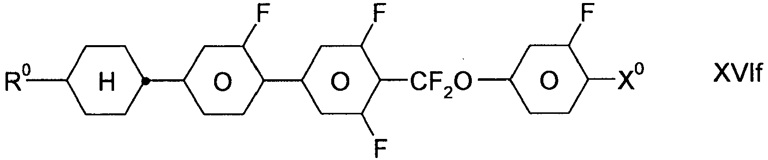 worin R⁰ und X⁰ die oben angegebenen Bedeutungen haben.

Vorzugsweise bedeutet R⁰ Alkyl mit 1 bis 6 C-Atomen. X⁰ bedeutet vorzugsweise F, ferner OCF₃. Besonders bevorzugte Verbindungen der Formeln XV und XVI sowie deren Unterformeln sind solche, worin Y¹ F und Y² H oder F, vorzugsweise F, bedeutet. Besonders bevorzugt enthält die erfindungsgemäße Mischung mindestens eine Verbindung der Formel XVa, XVf und/oder XVIa.
- Das Medium enthält eine oder mehrere Verbindungen der Formel XVII, 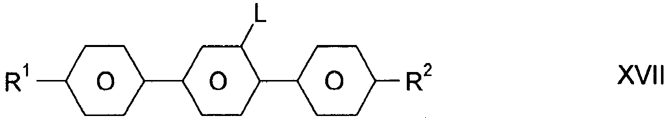 worin
   - R¹: C₂₋₆-Alkenyl,
   - R²: C₁₋₆-Alkyl und C₂₋₆-Alkenyl, und
   - L: H oder F, vorzugsweise F
   bedeuten.

Besonders bevorzugte Verbindungen der Formel XVII sind solche der Unterformeln, 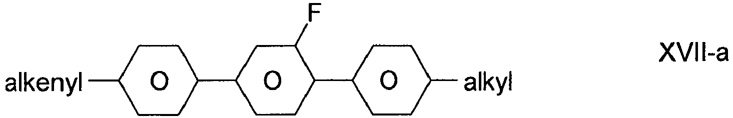 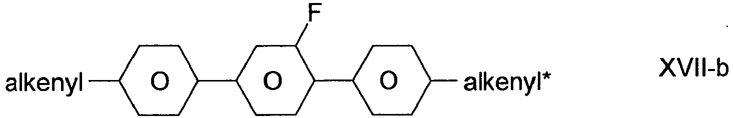 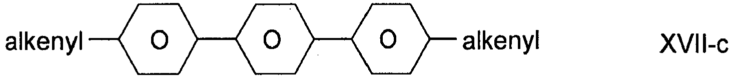 worin
- alkyl: ein geradkettiger Alkylrest mit 1-6 C-Atomen, insbesondere Ethyl, Propyl und Pentyl,
- alkenyl und alkenyl*: jeweils unabhängig voneinander einen geradkettigen Alkenylrest mit 2-6 C-Atomen, insbesondere CH₂=CHC₂H₄, CH₃CH=CHC₂H₄, CH₂=CH und CH₃CH=CH,
bedeuten.
- Das Medium enthält zusätzlich eine oder mehrere Verbindungen der folgenden Formeln, 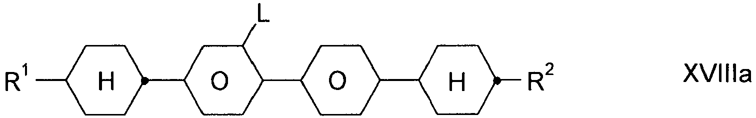 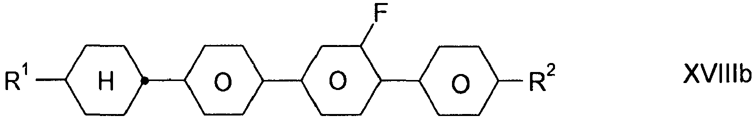 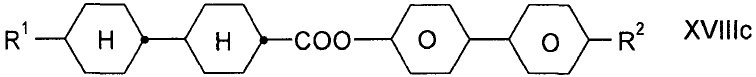 worin
   - R¹ und R²: jeweils unabhängig voneinander unsubstituiertes oder halogeniertes Alkyl oder Alkoxy mit 1 bis 15 C-Atomen, Cyclopentyl, Cyclobutyl, wobei in diesen Resten auch eine oder mehrere CH₂-Gruppen jeweils unabhängig voneinander durch -C≡C-, -CF₂O-,-CH=CH-, 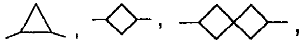 -O-, -CO-O- oder -O-CO- so ersetzt sein können, dass O-Atome nicht direkt miteinander verknüpft sind,
   bedeuten, und vorzugsweise jeweils unabhängig voneinander Alkyl mit 1 bis 6 C-Atomen bedeuten. L bedeutet H oder F;
- Das Medium enthält zusätzlich eine oder mehrere Verbindungen ausgewählt aus den folgenden Formeln, 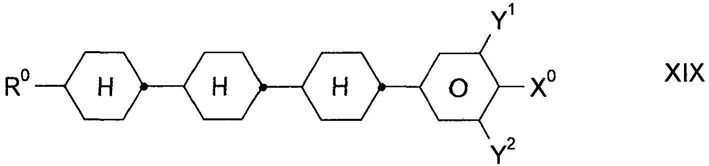 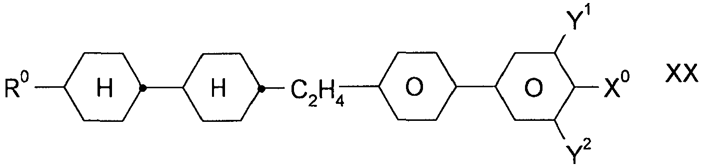 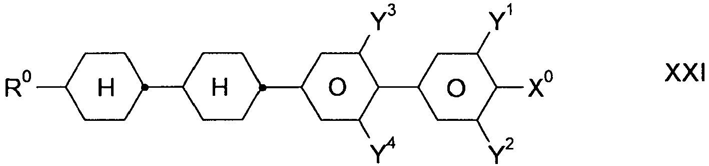 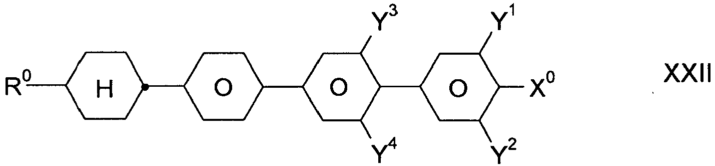 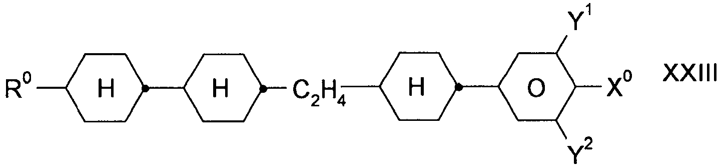 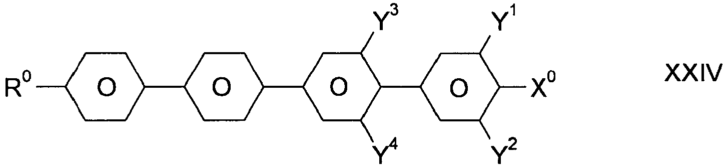 worin R⁰ und X⁰ jeweils unabhängig voneinander eine der oben angegebenen Bedeutungen haben und Y¹⁻⁴ jeweils unabhängig voneinander H oder F bedeuten. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 6 C-Atomen.
- Das Medium enthält eine oder mehrere Verbindungen der Formel XXIV-a, 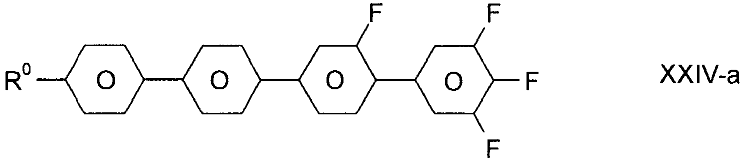 worin R⁰ die oben angegebene Bedeutungen hat. Vorzugsweise bedeutet R⁰ geradkettiges Alkyl, insbesondere Ethyl, n-Propyl, n-Butyl und n-Pentyl, und ganz besonders bevorzugt n-Propyl. Die Verbindung(en) der Formel XXIV, insbesondere der Formel XXIV-a werden vorzugsweise in Mengen von 0,5-20 Gew.%, besonders bevorzugt 1-15 Gew.% in den erfindungsgemäßen Mischungen eingesetzt.
- Das Medium enthält eine oder mehrere Verbindungen der Formel XXIa und/oder XXIIa 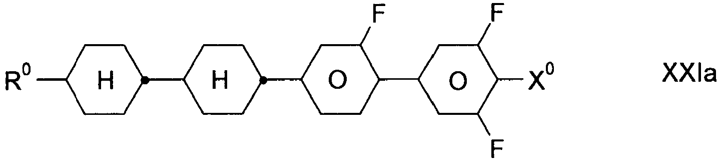 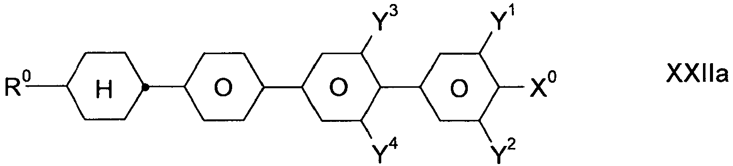 worin R⁰ und X⁰ die oben angegebenen Bedeutungen besitzen. Vorzugsweise bedeutet R⁰ geradkettiges Alkyl, insbesondere Ethyl, n-Propyl, n-Butyl und n-Pentyl, und ganz besonders bevorzugt n-Propyl. X⁰ ist vorzugsweise F oder OCF₃.
- Das Medium enthält zusätzlich eine oder mehrere Verbindungen aus der Formel XXIV, 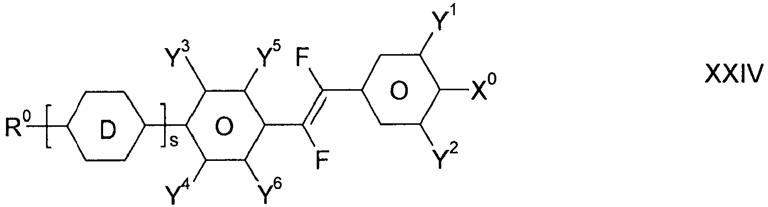 worin R⁰, X⁰ und Y¹⁻⁶ die in Anspruch 9 angegebenen Bedeutungen besitzen, s 0 oder 1, und 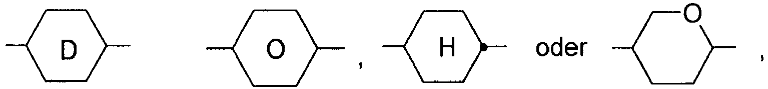 bedeuten.

In der Formel XXIV kann X⁰ auch ein Alkylrest mit 1-6 C-Atomen oder ein Alkoxyrest mit 1-6 C-Atomen bedeuten. Vorzugsweise ist der Alkyl-oder Alkoxyrest geradkettig.

Vorzugsweise bedeutet R⁰ Alkyl mit 1 bis 6 C-Atomen. X⁰ bedeutet vorzugsweise F;
- Die Verbindungen der Formel XXIV sind vorzugsweise ausgewählt aus den folgenden Formeln, 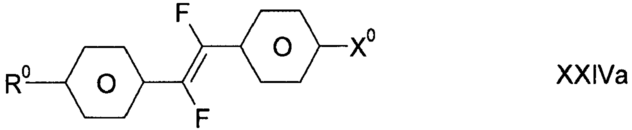 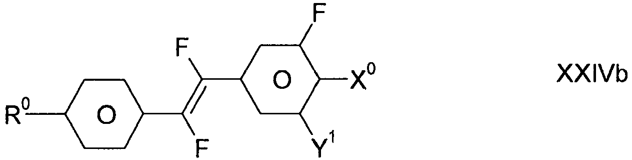 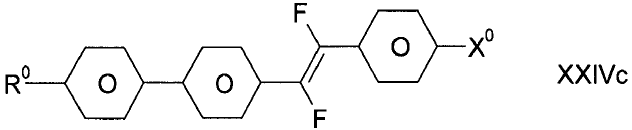 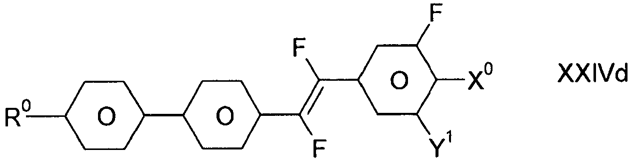 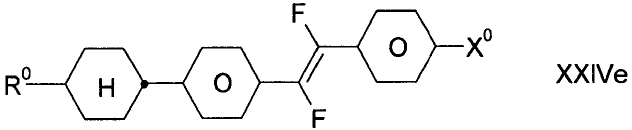 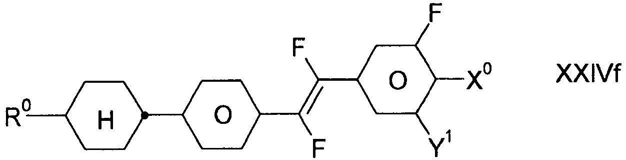 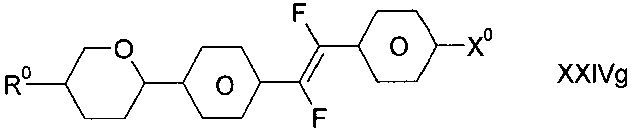 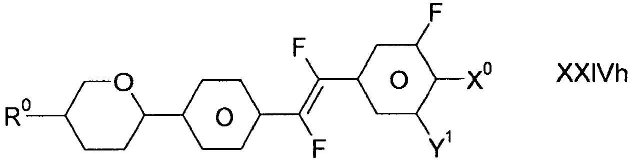 worin R⁰, X⁰ und Y¹ die oben angegebenen Bedeutungen haben. Vorzugsweise bedeutet R⁰ Alkyl mit 1 bis 6 C-Atomen. X⁰ bedeutet vorzugsweise F und Y¹ ist vorzugsweise F; 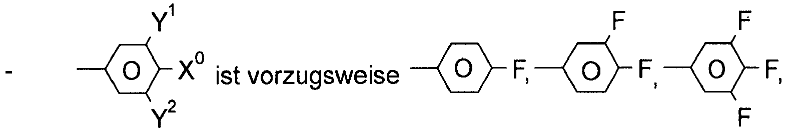 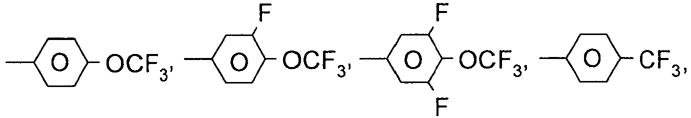 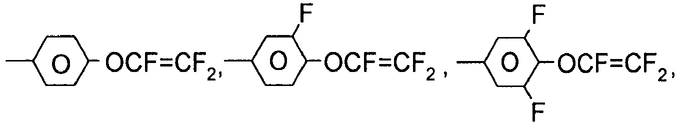 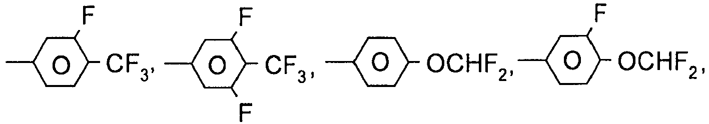 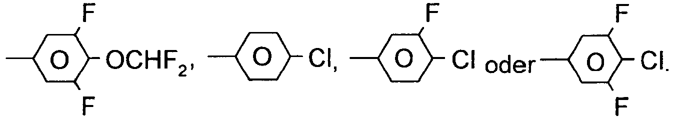
- R⁰ ist geradkettiges Alkyl oder Alkenyl mit 2 bis 6 C-Atomen;
- Das Medium enthält eine oder mehrere Verbindungen der folgenden Formeln 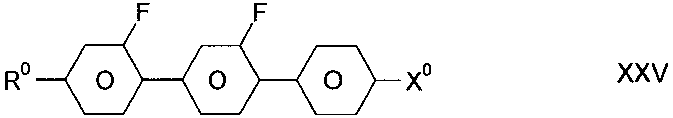 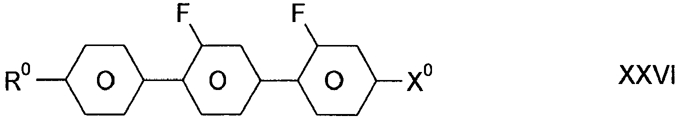 worin R⁰ und X⁰ die oben angegebenen Bedeutungen besitzen. R⁰ bedeutet vorzugsweise Alkyl mit 1 bis 6 C-Atomen. X⁰ bedeutet vorzugsweise F oder Cl. In der Formel XXV bedeutet X⁰ ganz besonders bevorzugt Cl.
- Das Medium enthält eine oder mehrere Verbindungen der folgenden Formeln, 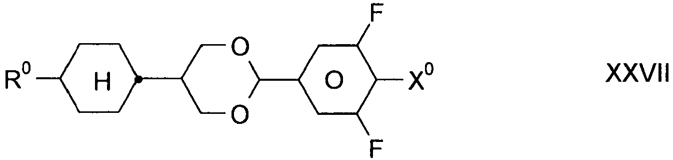 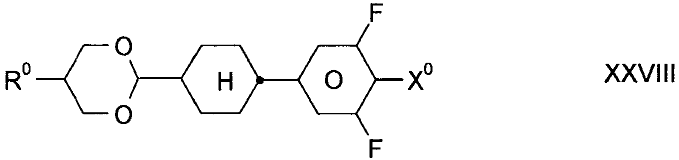 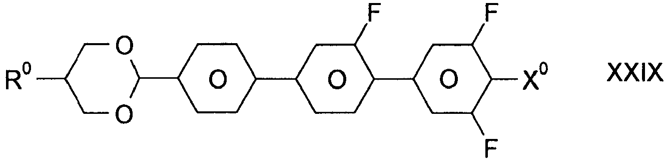 worin R⁰ und X⁰ die oben angegebene Bedeutung besitzen. R⁰ bedeutet vorzugsweise Alkyl mit 1 bis 6 C-Atomen. X⁰ bedeutet vorzugsweise F; Insbesondere bevorzugt enthält das erfindungsgemäße Medium eine oder mehrere Verbindungen der Formel XXIX, worin X⁰ vorzugsweise F bedeutet. Die Verbindung(en) der Formeln XXVII - XXIX werden vorzugsweise in Mengen von 1-20 Gew.%, besonders bevorzugt 1-15 Gew.% in den erfindungsgemäßen Mischungen eingesetzt. Besonders bevorzugte Mischungen enthalten mindestens eine Verbindung der Formel XXIX.
- Das Medium enthält eine oder mehrere Verbindungen der folgenden Formel, 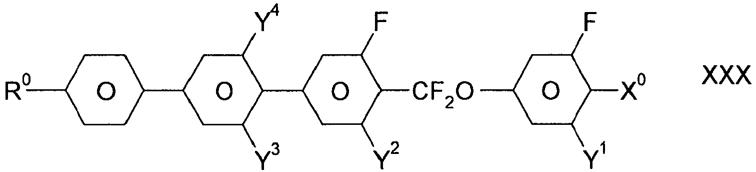 worin R⁰, X⁰ und Y¹⁻⁴ die in Formel II angegebenen Bedeutungen besitzen. R⁰ bedeutet vorzugsweise Alkyl mit 1 bis 6 C-Atomen. X⁰ bedeutet vorzugsweise F.
- Die Verbindungen der Formel XXX sind vorzugsweise ausgewählt aus den folgenden Formeln, 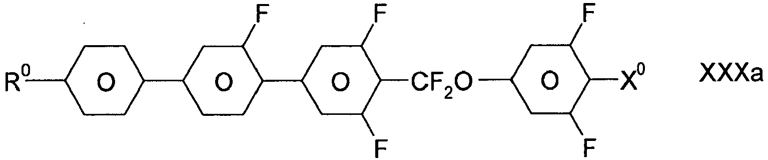 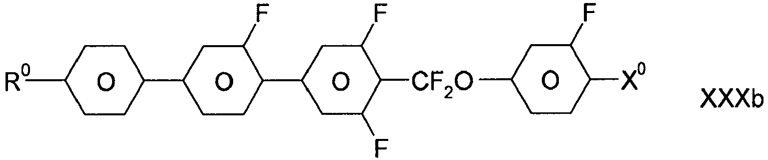 worin R⁰ und X⁰ die oben angegebenen Bedeutungen besitzen. R⁰ bedeutet vorzugsweise Alkyl mit 1 bis 6 C-Atomen. X⁰ bedeutet vorzugsweise F.

Nachfolgend werden weitere bevorzugte Ausführungsformen angegeben:
- Der Anteil an Verbindungen der Formeln II, III, IX-XIII, XVII und XVIII im Gesamtgemisch beträgt 40 bis 95 Gew.%;
- Das Medium enthält 10-50 Gew.%, besonders bevorzugt 12-40 Gew.% an Verbindungen der Formel II und/oder III;
- Das Medium enthält 20-70 Gew.%, besonders bevorzugt 25-65 Gew.% an Verbindungen der Formeln IX-XIII;
- Das Medium enthält 4-30 Gew.%, besonders bevorzugt 5-20 Gew.% an Verbindungen der Formel XVII;
- Das Medium enthält 1-20 Gew.%, besonders bevorzugt 2-15 Gew.% an Verbindungen der Formel XVIII.
- Das Medium enthält ≥ 20 Gew.%, vorzugsweise ≥ 24 Gew.%, vorzugsweise 25-60 Gew.%, an Verbindungen der Formel 1, insbesondere die Verbindung der Formel 1a1, 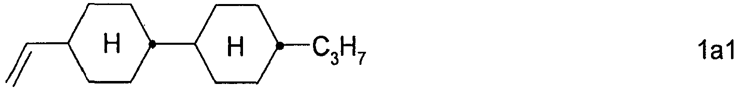
- Das Medium enthält mindestens eine Verbindung der Formel 1a oder 1a1 und mindestens eine Verbindung der Formel 1b1. 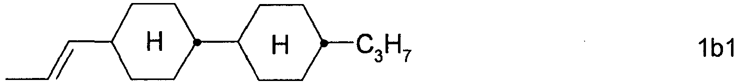
- Das Medium enthält mindestens eine Verbindung ausgewählt aus den folgenden Formeln 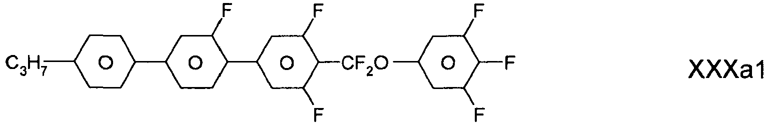 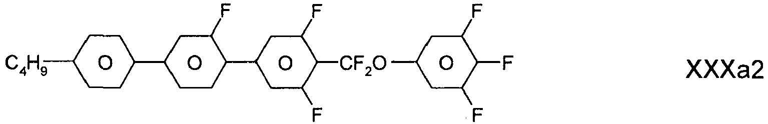 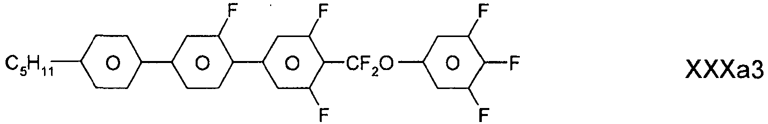
- Das Medium enthält mindestens eine Verbindung ausgewählt aus den folgenden Formeln 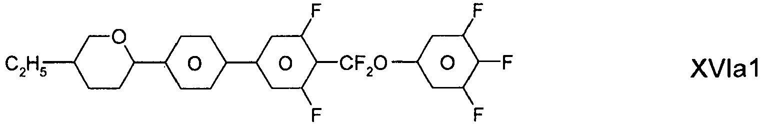 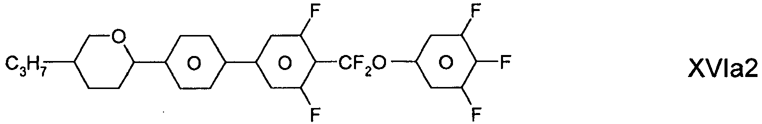 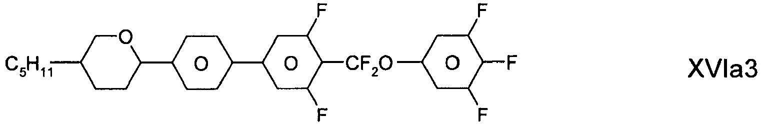
- Das Medium enthält mindestens eine Verbindung ausgewählt aus den folgenden Formeln 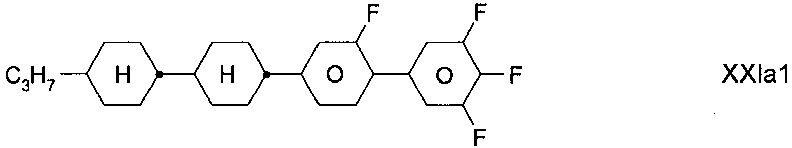 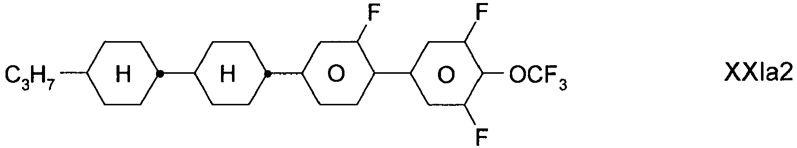 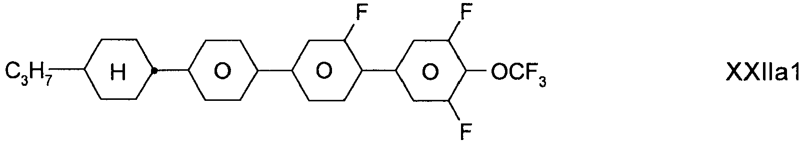 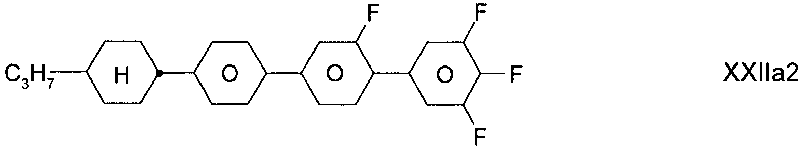
- Das Medium enthält mindestens drei Verbindungen der Formel PGP-n-m und/oder PGP-n-2V, worin n und m jeweils unabhängig voneinander 2, 3, 4 oder 5 bedeuten.

Es wurde gefunden, dass die Verwendung von Verbindungen der Formeln 1-5 wie oben beschrieben im Gemisch mit üblichen Flüssigkristallmaterialien, insbesondere jedoch mit einer oder mehreren Verbindungen der Formeln II bis XXX zu einer beträchtlichen Erhöhung der Lichtstabilität und zu relativ hohen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr niedrige Schwellenspannungen und sehr gute Werte für die VHR bei UV-Belastung und sehr hohe Klärpunkte.

Der Ausdruck "Alkyl" bzw. "Alkyl*" umfasst in dieser Anmeldung geradkettige und verzweigte Alkylgruppen mit 1-6 Kohlenstoffatomen, insbesondere die geradkettigen Gruppen Methyl, Ethyl, Propyl, Butyl, Pentyl und Hexyl. Gruppen mit 2-5 Kohlenstoffatomen sind im allgemeinen bevorzugt.

Der Ausdruck "Alkenyl" bzw. "Alkenyl*" umfasst geradkettige und verzweigte Alkenylgruppen mit 2-6 Kohlenstoffatomen, insbesondere die geradkettigen Gruppen. Bevorzugte Alkenylgruppen sind C₂-C₇-1E-Alkenyl, C₄-C₆-3E-Alkenyl, insbesondere C₂-C₆-1E-Alkenyl. Beispiele besonders bevorzugter Alkenylgruppen sind Vinyl, 1E-Propenyl, 1E-Butenyl, 1E-Pentenyl, 1E-Hexenyl, 3-Butenyl, 3E-Pentenyl, 3E-Hexenyl, 4-Pentenyl, 4Z-Hexenyl, 4E-Hexenyl und 5-Hexenyl. Gruppen mit bis zu 5 Kohlenstoffatomen sind im allgemeinen bevorzugt, insbesondere CH₂=CH, CH₃CH=CH.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst vorzugsweise geradkettige Reste der Formel CₙH₂ₙ₊₁-O-(CH₂)ₘ, worin n und m jeweils unabhängig voneinander 1 bis 6 bedeuten m kann auch 0 bedeuten. Vorzugsweise ist n = 1 und m 1-6 oder m = 0 und n = 1-3.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe Δε-Werte aus und besitzen somit deutlich schnellere Schaltzeilen als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formel II bis VIII (vorzugsweise II, III, IV und V, insbesondere IIa und IIIa), worin X⁰ F, OCF₃, OCHF₂, OCH=CF₂, OCF=CF₂ oder OCF₂-CF₂H bedeutet.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und TFT-Anwendungen, wie z. B. Mobiltelefone und PDAs geeignet. Weiterhin können die erfindungsgemäßen Mischungen in FFS-, HB-FFS, VA-IPS, OCB- und IPS-Anzeigen Anwendung finden.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 75 °C, vorzugsweise ≥ 80 °C, gleichzeitig Rotationsviskositäten γ₁ von ≤ 110 mPa·s, besonders bevorzugt ≤ 100 mPa·s zu erreichen, wodurch hervorragende MFK-Anzeigen mit schnellen Schaltzeiten erzielt werden können. Die Rotationsviskositäten sind bei 20 °C bestimmt.

Die dielektrische Anisotropie der erfindungsgemäßen Flüssigkristallmischungen Δε ist bei 20 °C vorzugsweise ≥ +7, besonders bevorzugt ≥ +8, insbesondere bevorzugt ≥ 10. Die Mischungen sind außerdem durch kleine Operationsspannungen gekennzeichnet. Die Schwellenspannung der erfindungsgemäßen Flüssigkristallmischungen ist vorzugsweise ≤ 2.0 V. Die Doppelbrechung Δn der erfindungsgemäßen Flüssigkristallmischungen ist bei 20 °C vorzugsweise ≥ 0,09, besonders bevorzugt ≥ 0,10.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von -25° bis +70°C.

Es versteht sich, dass durch geeignete Wahl der Komponenten der erfindungsgemäßen Mischungen auch höhere Klärpunkte (z.B. oberhalb 100 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend eine oder mehrere Verbindungen der Formel IA eine deutlich geringere Abnahme des HR unter UV-Belastung aufweisen als analoge Mischungen enthaltend anstelle einer oder mehrerer Verbindungen der Formel IA Cyanophenylcyclohexane der Formel 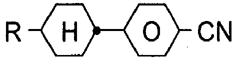 oder Ester der Formel

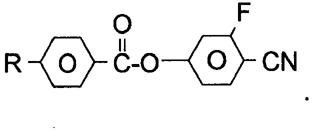

Die Lichtstabilität und UV-Stabilität der erfindungsgemäßen Mischungen ist erheblich besser, d.h. sie zeigen eine deutlich kleinere Abnahme des HR unter Licht- bzw. UV-Belastung.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise, beispielsweise indem man eine oder mehrere Verbindungen der Formel 1-5 mit einer oder mehreren Verbindungen der Formeln II-XXX oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Stabilisatoren wie Tinuvin^{®}, z.B. Tinuvin^{®} 770, der Fa. Ciba Chemicals, Antioxidantien, z.B. TEMPOL, Mikropartikel, Radikalfänger, Nanopartikel, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen B und C genannt.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. Ciba, wird vorzugsweise der Mischung enthaltend polymerisierbare Verbindungen in Mengen von 0-1 % zugesetzt. Derartige Mischungen können für sogenannte Polymer Stabilized (PS) Modes, bei denen eine Polymerisierung der reaktiven Mesogene in der flüssigkristallinen Mischung erfolgen soll, verwendet werden, z.B. für PS-IPS-, PS-FFS, PS-TN, PS-VA-IPS. Voraussetzung hierfür ist, dass die Flüssigkristallmischung selbst keine polymerisierbaren Komponenten enthält.

In einer bevorzugten Ausführungsform der Erfindung sind die polymerisierbaren Verbindungen ausgewählt aus den Verbindungen der Formel M

R^{Ma}-A^{M1}-(Z^{M1}-A^{M2})ₘ₁-R^{Mb} M

worin die einzelnen Reste folgende Bedeutung haben:
- R^{Ma} und R^{Mb}: jeweils unabhängig voneinander P, P-Sp-, H, Halogen, SFs, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
- P: eine polymerisierbare Gruppe,
- Sp: eine Abstandsgruppe oder eine Einfachbindung,
- A^{M1} und A^{M2}: jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substitutiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SFs, NO₂, eine Alkyl-, Alkenyl- oder Alkinylgruppe,
- Y¹: Halogen,
- Z^{M1}: -O-, -S-, -CO-, -CO-O-, -OCO-, -O-CO-O-, -OCH₂-, -CH₂O-, -SCH2-, -CH2S-, -CF₂O-, -OCF2-, -CF2S-, -SCF2-, -(CH₂)ₙ₁-, -CF2CH2-, -CH2CF2-, -(CF₂)ₙ₁-, -CH=CH-, -CF=CF-, -C≡C-, -CH=CH-, -COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4, und
- n1: 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält.

Besonders bevorzugte Verbindungen der Formel M sind solche, worin
- R^{Ma} und R^{Mb}: jeweils unabhängig voneinander P, P-Sp-, H, F, Cl, Br, I, -CN,-NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-,-CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{Ma} und R^{Mb} eine Gruppe P oder P-Sp- bedeutet oder enthält,
- A^{M1} und A^{M2}: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS,-OCN, -SCN, -C(=O)N(R^{x})₂, -C(=O)Y¹, -C(=O)R^{x}, -N(R^{x})2, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel M, worin einer von R^{Ma} und R^{Mb} oder beide P oder P-Sp- bedeuten.

Geeignete und bevorzugte RMs für die Verwendung in erfindungs-gemäßen flüssigkristallinen Medien und PS-Mode-Anzeigen, sind beispielsweise ausgewählt aus den folgenden Formeln: 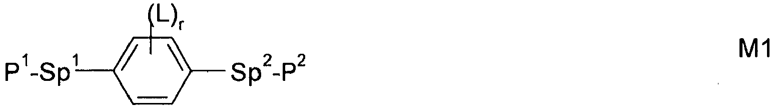 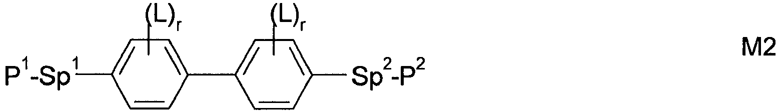 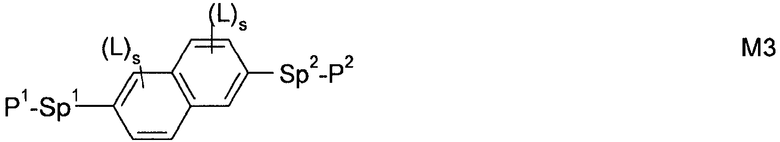 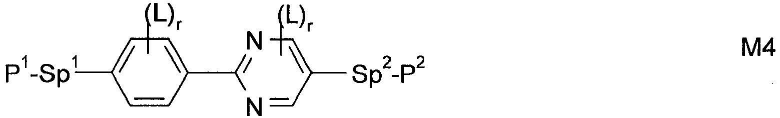 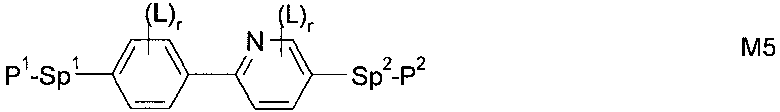 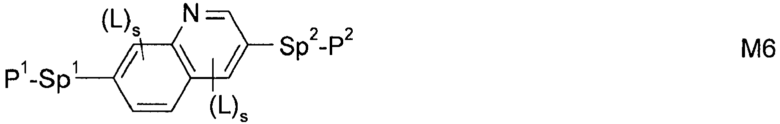 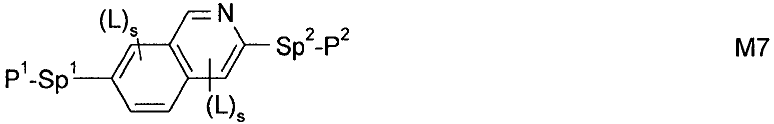 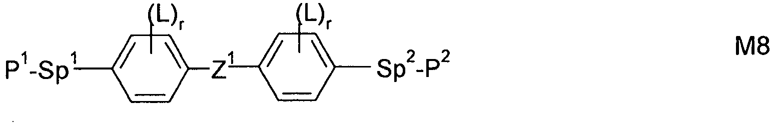 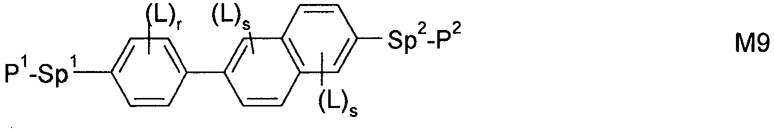 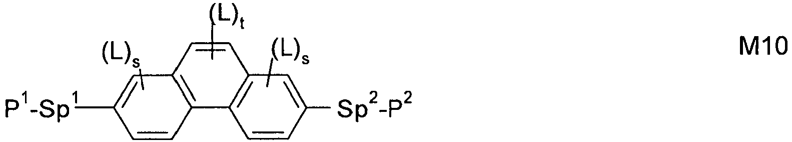 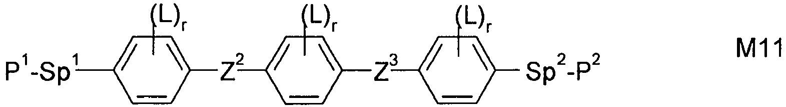 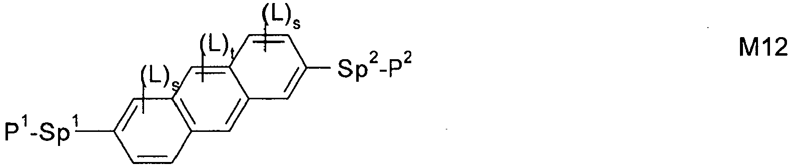 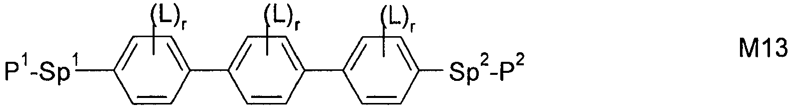 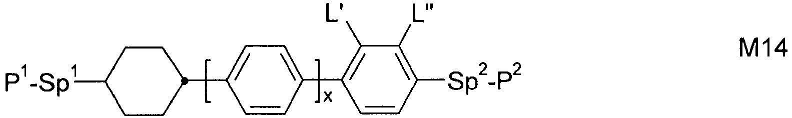 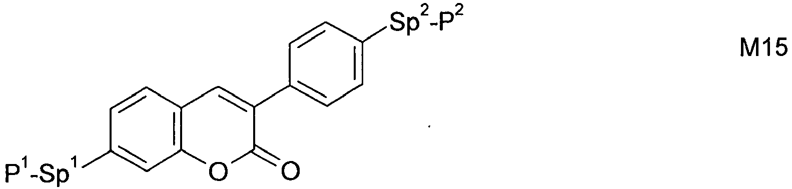 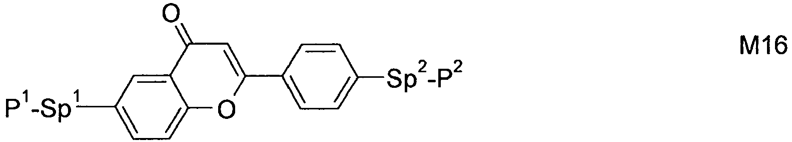 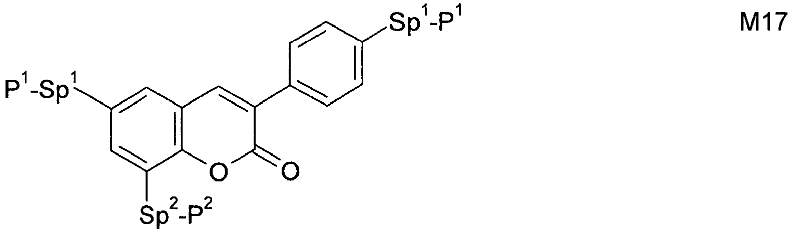 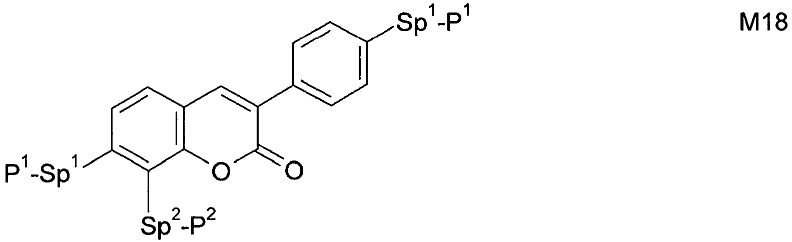 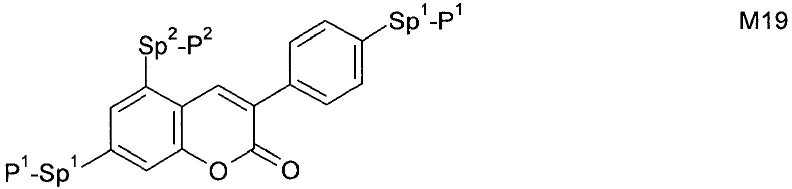 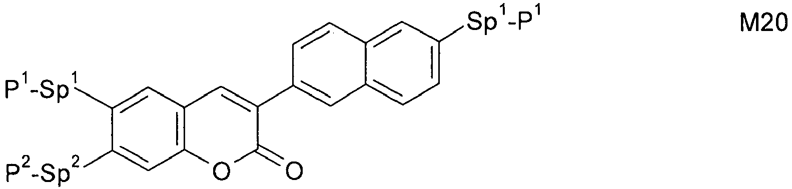 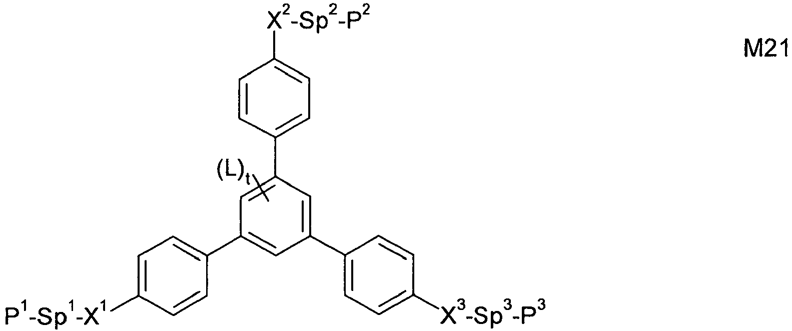 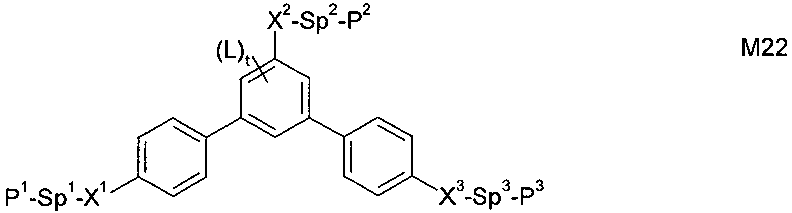 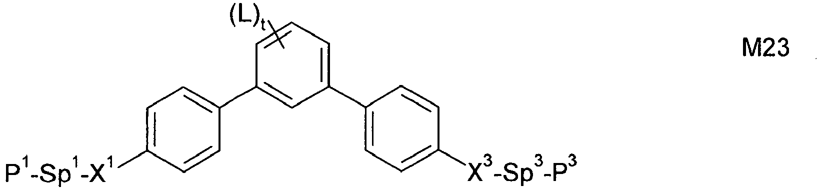 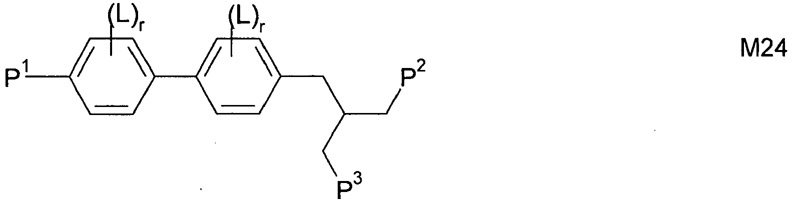 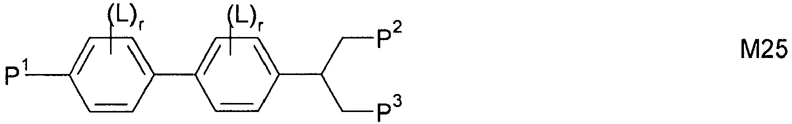 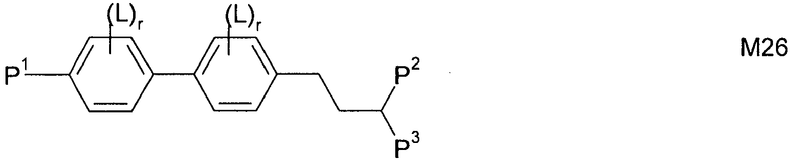 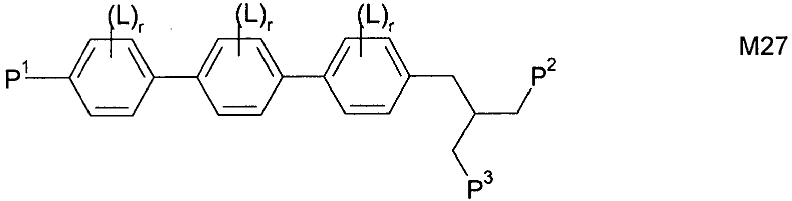 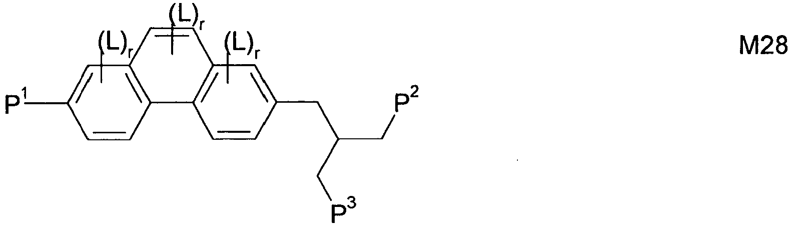 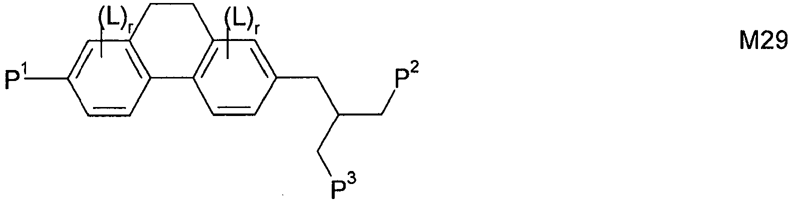 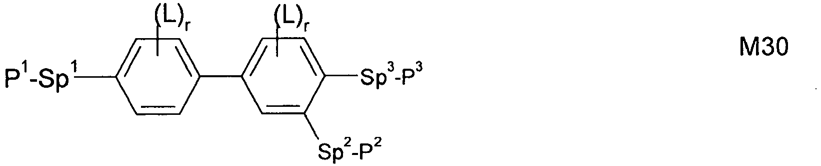 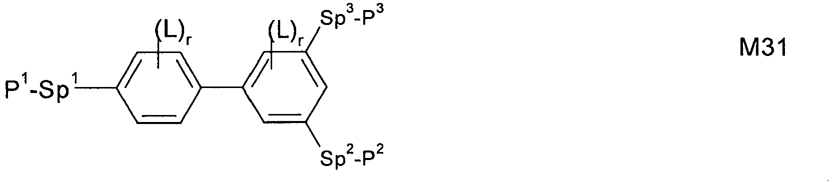 worin die einzelnen Reste folgende Bedeutung besitzen:
- P¹⁻³: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,

- Sp¹⁻³: jeweils unabhängig voneinander eine Einfachbindung oder eine Abstandsgruppe, vorzugsweise mit einer der vor- und nachstehend für Sp angegebenen Bedeutungen, und besonders bevorzugt -(CH₂)ₚ₁-, -(CH₂)ₚ₁-O-, -(CH₂)ₚ₁-CO-O-oder -(CH₂)ₚ₁-O-CO-O- bedeuten, worin p1 eine ganze Zahl von 1 bis 12 ist, und wobei in den letztgenannten Gruppen die Verknüpfung zur benachbarten Ring über das O-Atom erfolgt, wobei einer der Reste P¹-Sp¹-, P²-Sp²- und P³-Sp³- auch R^{aa} bedeuten kann,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl-und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2, und
- x: 0 oder 1.

Geeignete polymerisierbare Verbindungen sind beispielsweise in Tabelle D gelistet.

Bevorzugt enthalten die flüssigkristallinen Medien gemäß der vorliegenden Anmeldung insgesamt 0,01 bis 3 %, bevorzugt 0,1 bis 1,0 %, besonders bevorzugt 0,1 bis 0,5 %, an polymerisierbaren Verbindungen.

Insbesondere bevorzugt sind die polymerisierbaren Verbindungen der Formeln M2, M13, M17, M22, M23, M24 and M30.

Ferner bevorzugt sind die polymerisierbaren Verbindungen der Formeln M15 bis M31, insbesondere M17, M18, M19, M22, M23, M24, M25, M26, M30 und M31.

Gegenstand der vorliegenden Erfindung ist somit auch die Verwendung der erfindungsgemäßen Mischungen in elektrooptischen Anzeigen sowie der Einsatz der erfindungsgemäßen Mischungen in Shutter-Brillen, insbesondere für 3D-Anwendungen, und in TN-, PS-TN-, STN-, TN-TFT-, OCB-, IPS-, PS-IPS-, FFS-, HB-FFS, PS-FFS- und PS-VA-IPS-Anzeigen.

In der gesamten Patentanmeldung sowie in den Ausführungsbeispielen sind die Strukturen der Flüssigkristallverbindungen durch Acronyme angegeben.

Sofern nicht anders angegeben, erfolgt die Transformation in chemische Formeln gemäß der Tabellen 1-3. Alle Reste CₙH₂ₙ₊₁ und CₘH₂ₘ₊₁ bzw. CₙH₂ₙ und CₘH₂ₘ sind geradkettige Alkylreste bzw. Alkylenreste jeweils mit n und m C-Atomen. n, m und k bedeuten jeweils unabhängig voneinander 0, 1, 2, 3, 4, 5, 6, 7, 8, 9, 10, 11, 12, vorzugsweise 0, 1, 2, 3, 4, 5 oder 6. In Tabelle 1 sind die Ringelemente der jeweiligen Verbindung codiert, in Tabelle 2 sind die Brückenglieder aufgelistet und in Tabelle 3 sind die Bedeutungen der Symbole für die linken bzw. rechten Seitenketten der Verbindungen angegeben.

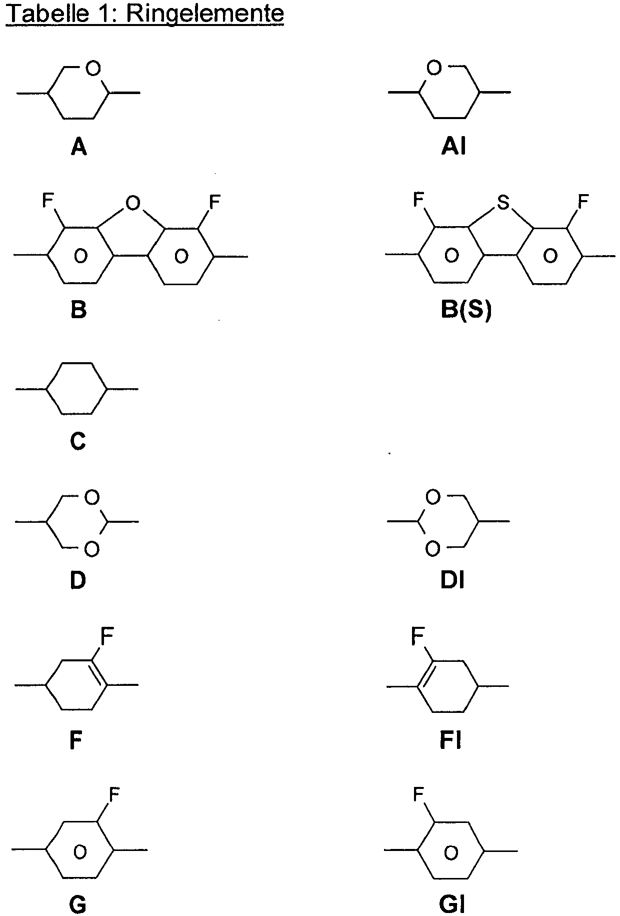

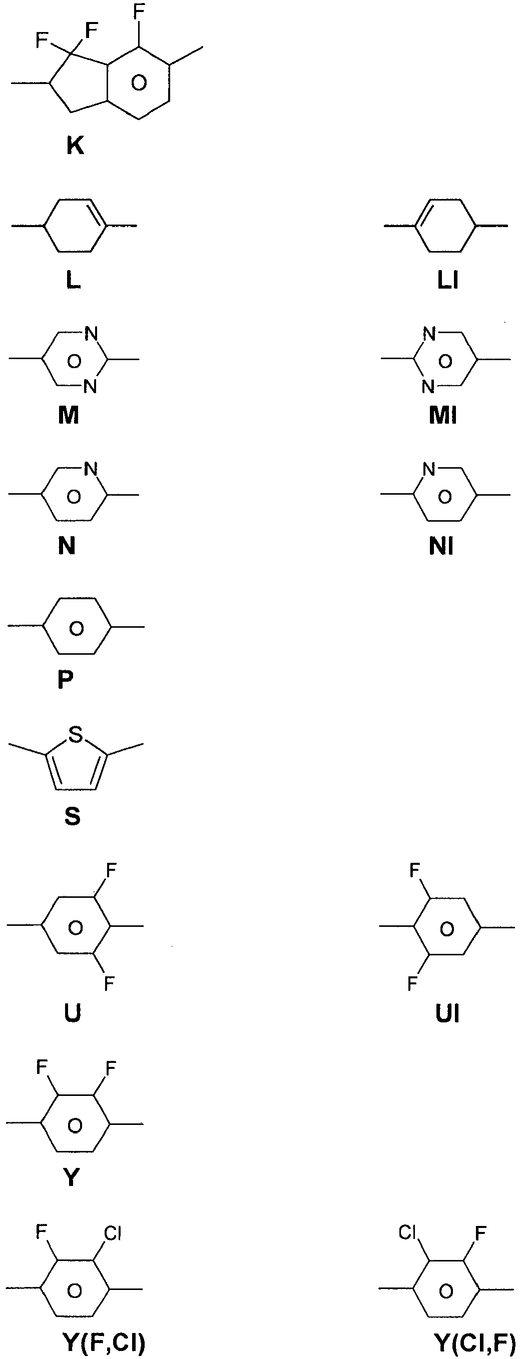

**Tabelle 2: Brückenglieder**

| | | | |
|---|---|---|---|
| **E** | -CH₂CH₂- | | |
| **V** | -CH=CH- | | |
| **T** | -C=C- | | |
| **W** | -CF2CF2- | | |
| **Z** | -COO- | **ZI** | -OCO- |
| **O** | -CH₂O- | **OI** | -OCH₂- |
| **Q** | -CF₂O- | **QI** | -OCF₂- |

**Tabelle 3: Seitenketten**

| Seitenkette links | | Seitenkette rechts | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CnH2n-CH=CH2 |
| **Vn-** | CH₂=CH- CₙH₂ₙ- | **-Vn** | -CH=CH-CₙH₂ₙ₊₁ |
| **.nVm-** | CₙH₂ₙ₊₁-CH=CH-CₘH₂ₘ- | **-nVm** | - CₙH₂ₙ-CH=CH-CₘH₂ₘ₊₁ |
| **N-** | N=C- | **-N** | -C=N |
| **F-** | F- | **-F** | -F |
| **CI-** | Cl- | **-CI** | -CI |
| **M-** | CFH₂- | **-M** | -CFH₂ |
| **D-** | CF₂H- | **-D** | -CF₂H |
| **T-** | CF3- | **-T** | -CF3 |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF3 |
| **A-** | H-C≡C- | **-A** | -C≡C-H |
| **C5-** | 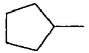 | **-C5** | 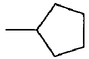 |

Bevorzugte Mischungskomponenten finden sich in der Tabelle A. Vorzugsweise enthalten die erfindungsgemäßen Mischungen neben einer oder mehreren Verbindungen der Formeln 1 bis 5 mindestens eine Verbindung ausgewählt aus den nachfolgend genannten Verbindungen der Tabelle A.

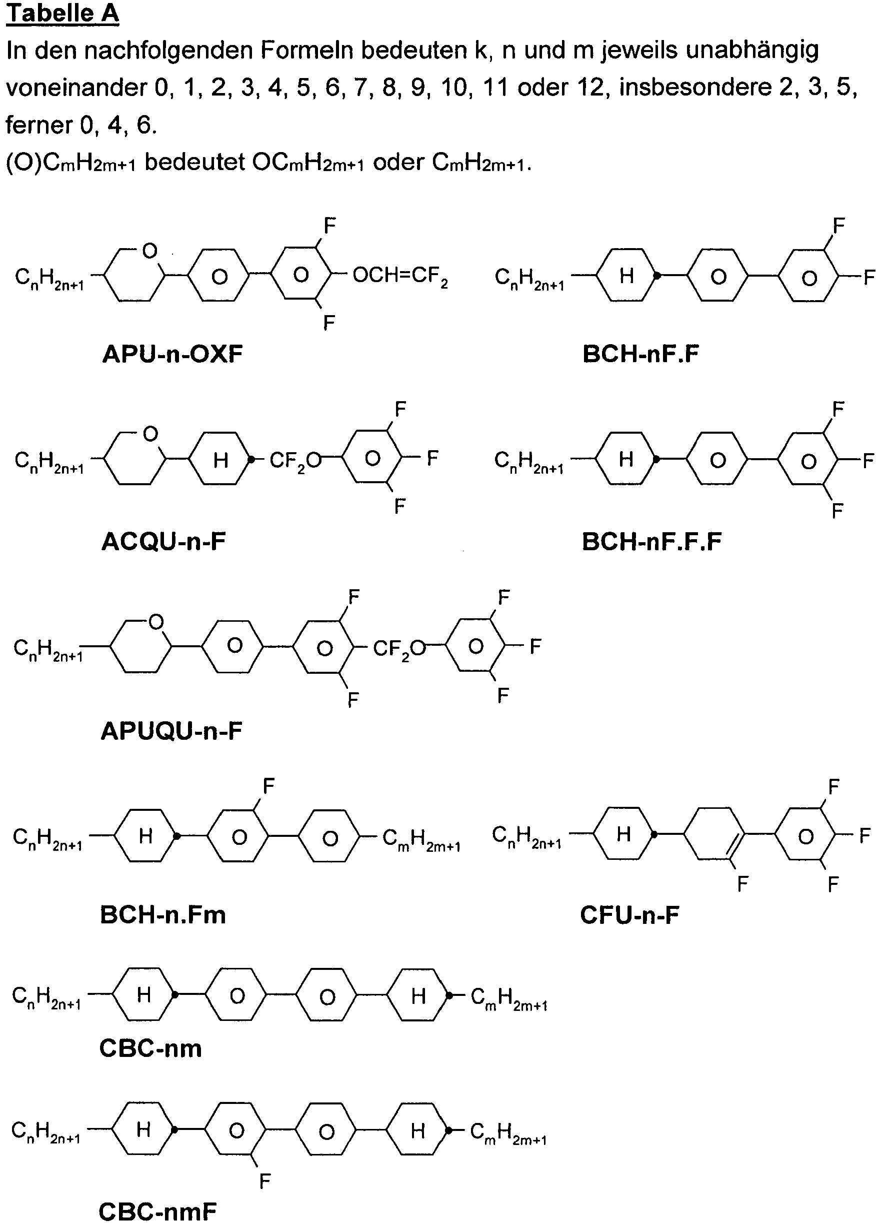

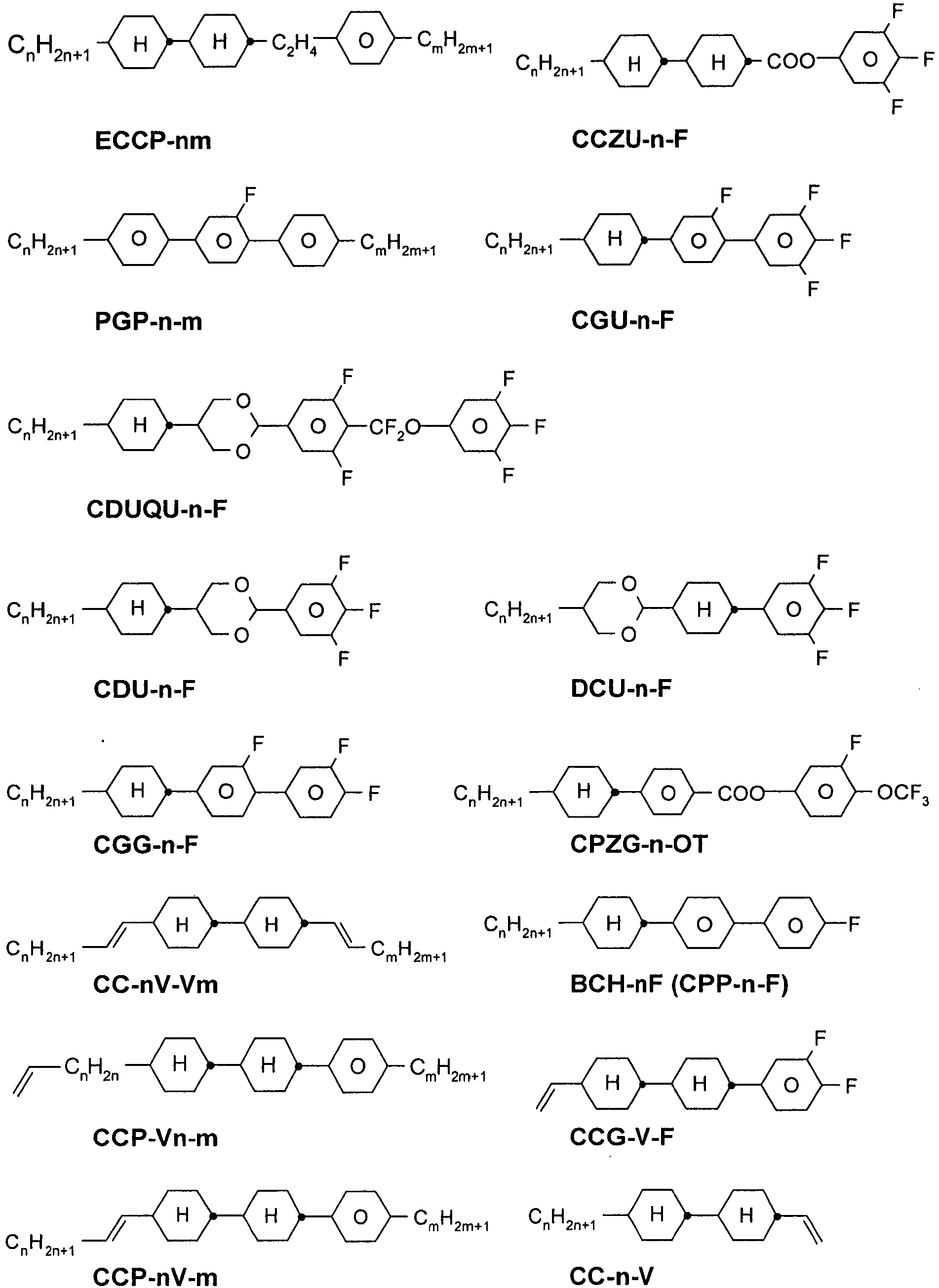

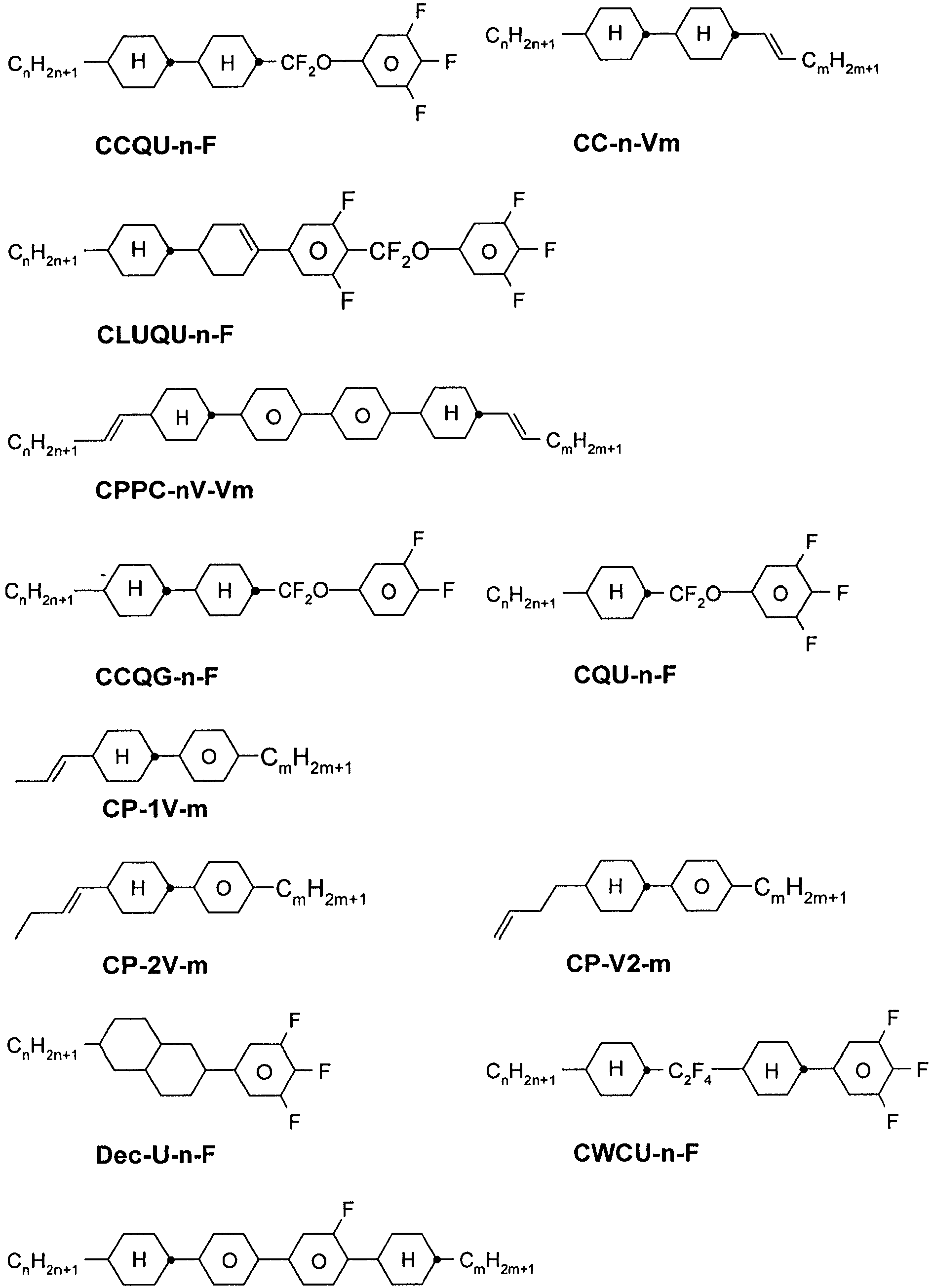

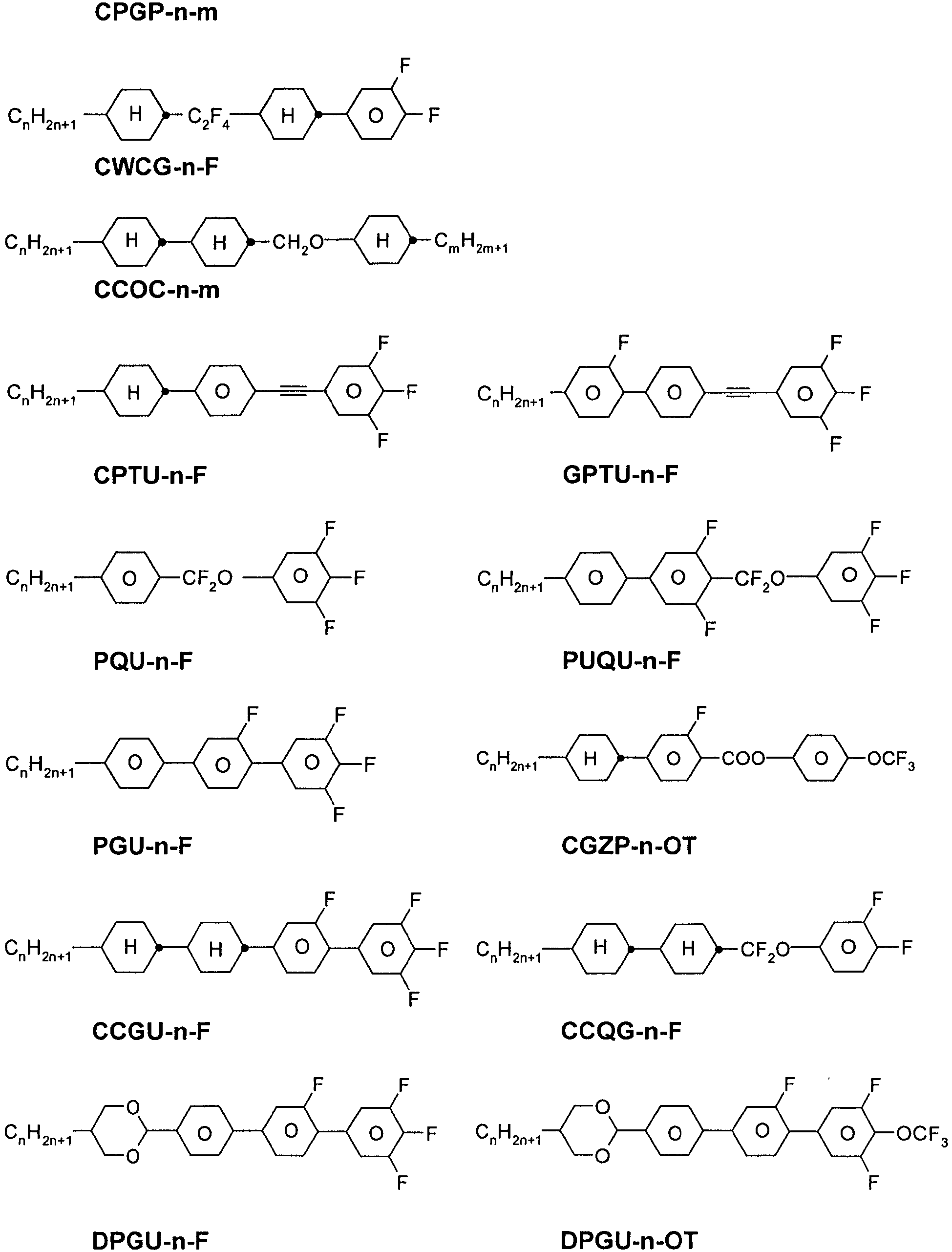

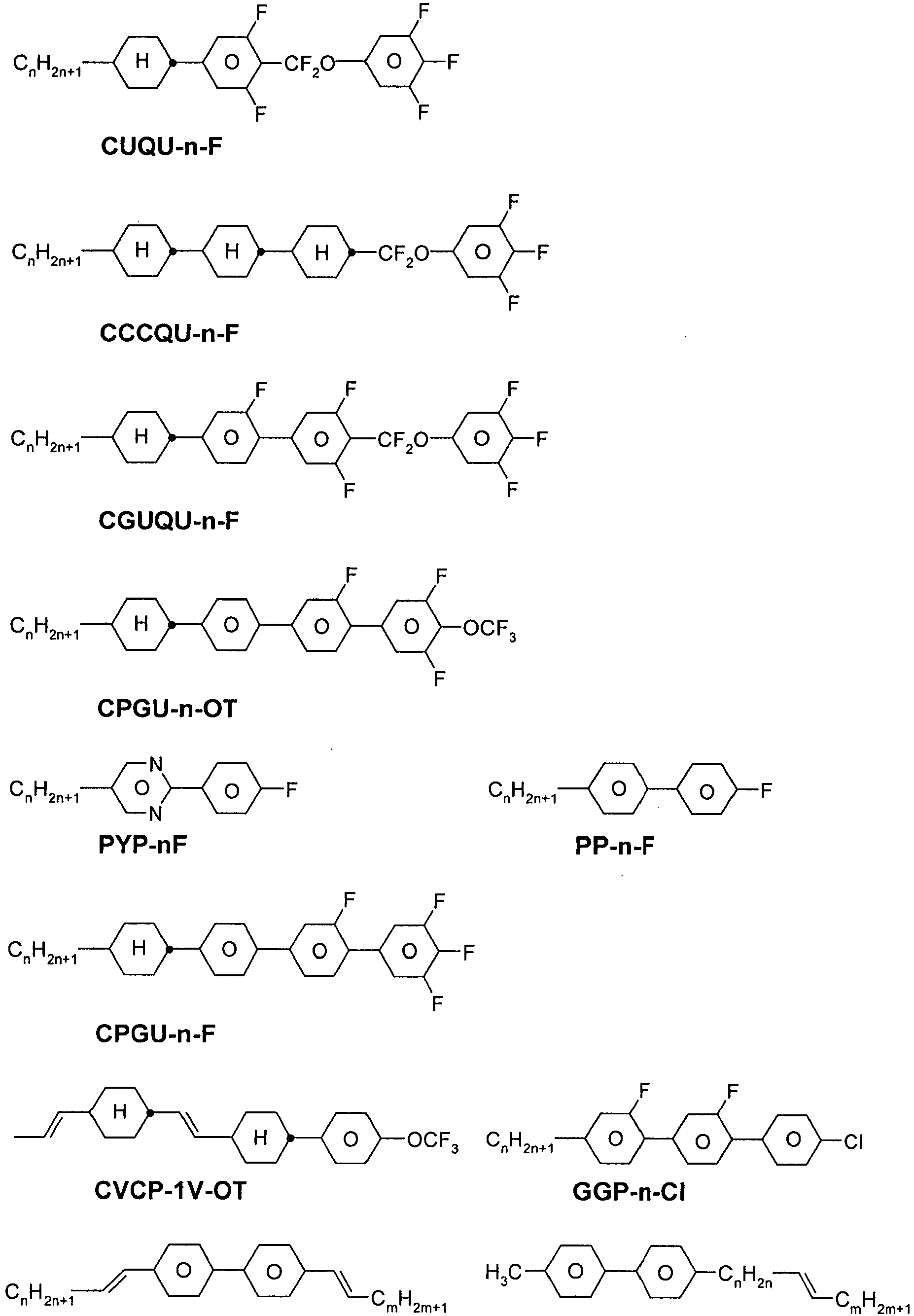

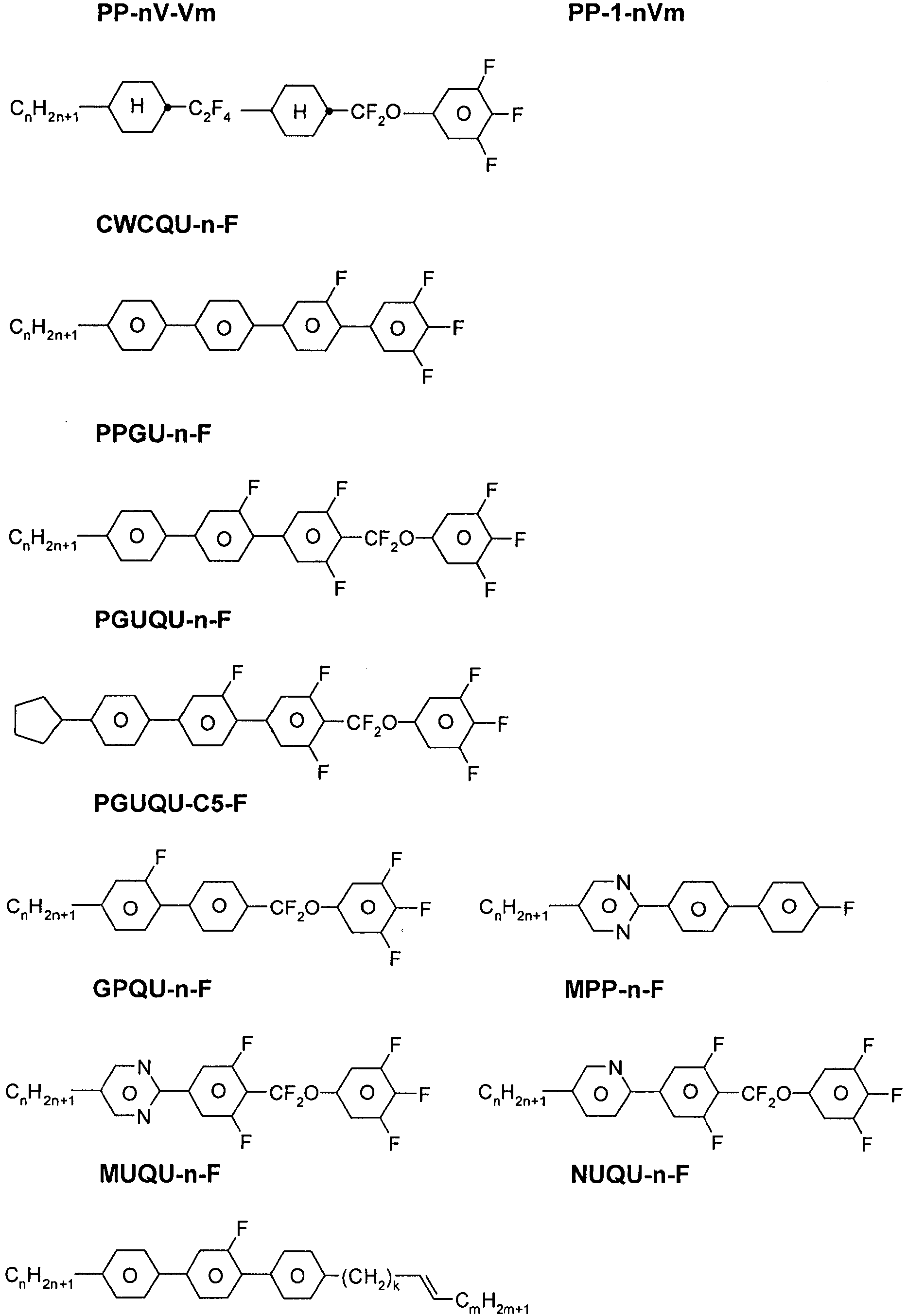

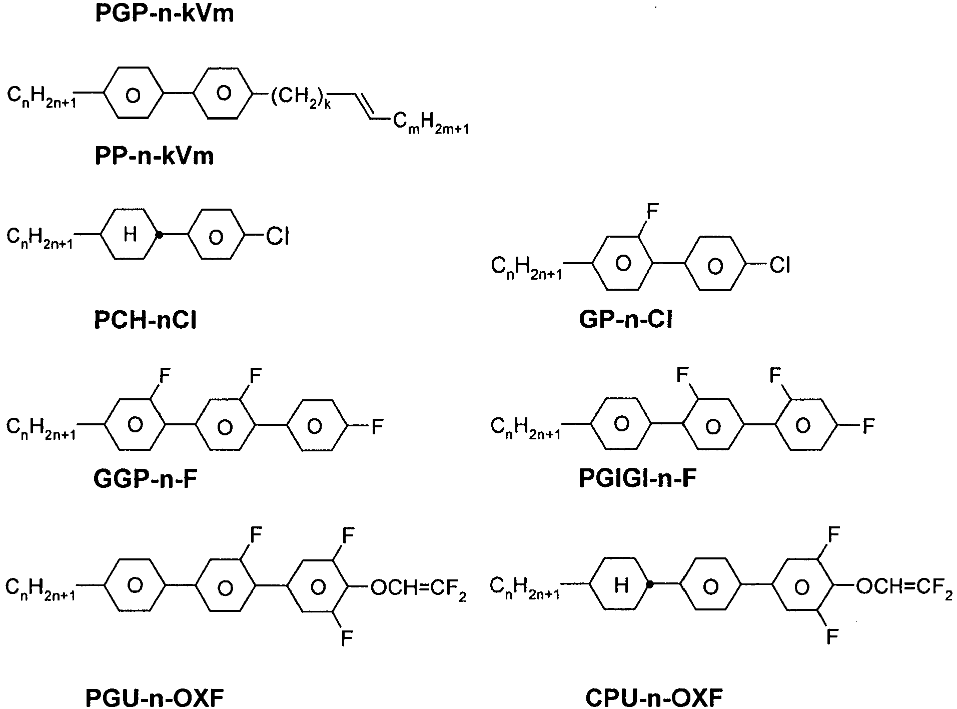

Besonders bevorzugt sind flüssigkristalline Mischungen, die neben den Verbindungen der Formeln 1 bis 5 mindestens ein, zwei, drei, vier oder mehr Verbindungen aus der Tabelle A enthalten.

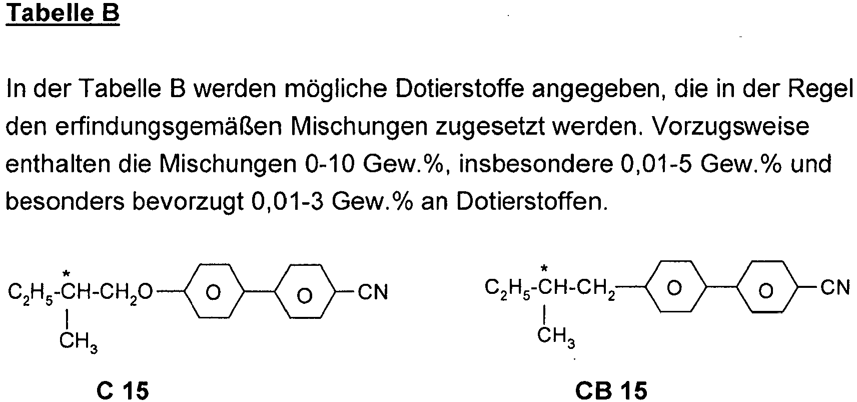

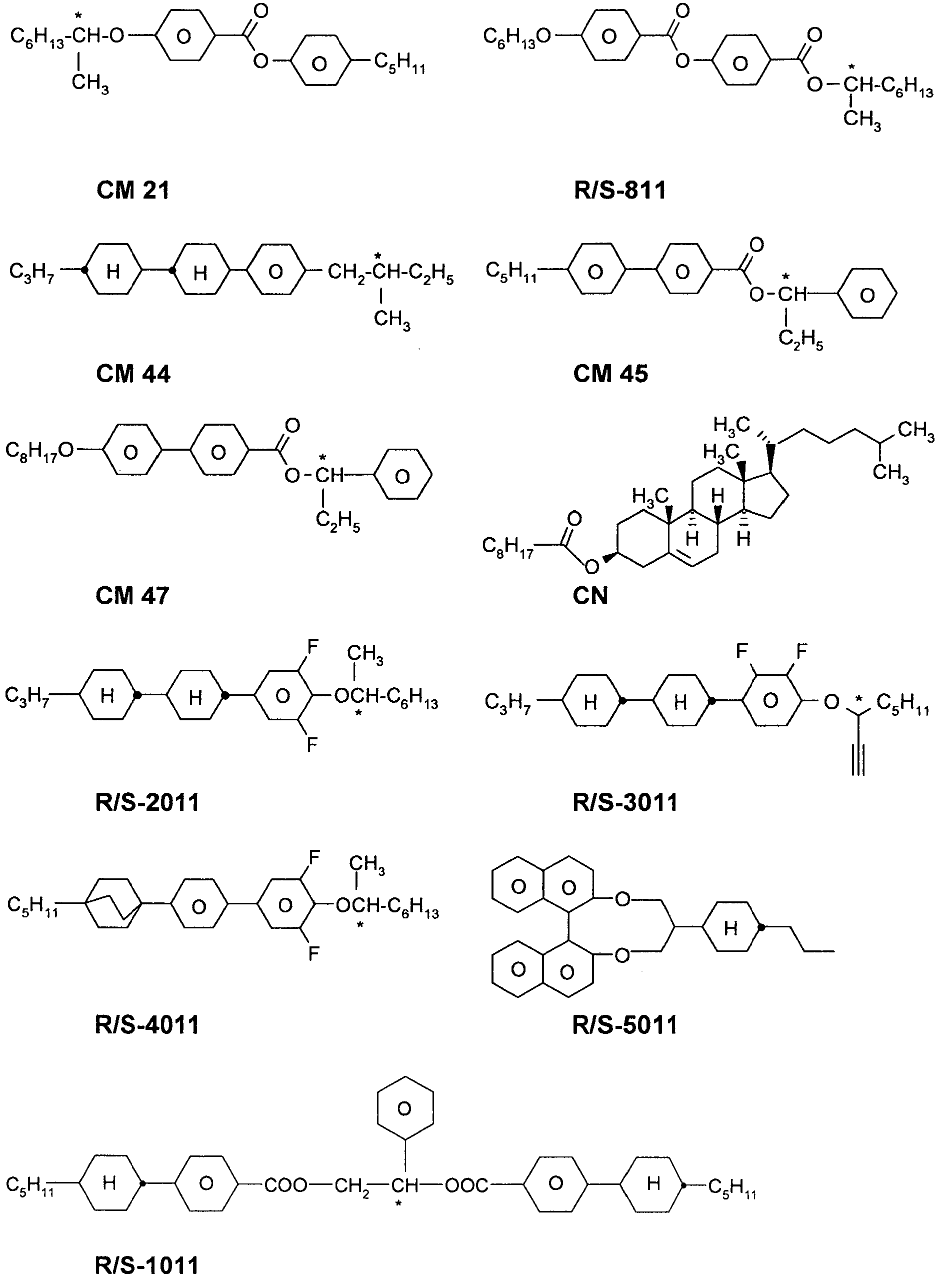

**Tabelle C Stabilisatoren, die beispielsweise den erfindungsgemäßen Mischungen in Mengen von 0-10 Gew.% zugesetzt werden können, werden nachfolgend genannt.**

| | |
|---|---|
| 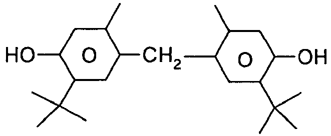 | 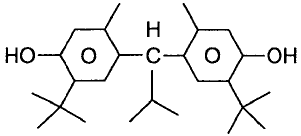 |
| 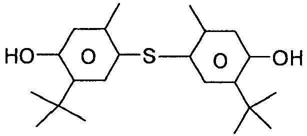 | 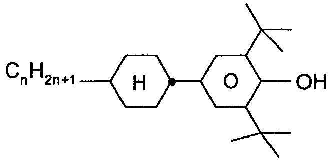 |
| | n = 1, 2, 3, 4, 5, 6 or 7 |
| 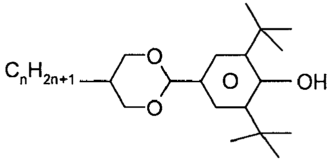 | 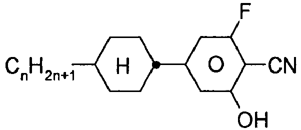 |
| n = 1, 2, 3, 4, 5, 6 or 7 | |
| 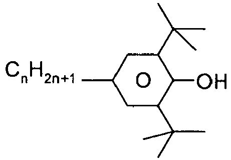 | 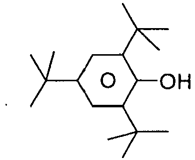 |
| n = 1, 2, 3, 4, 5, 6 or 7 | |
| 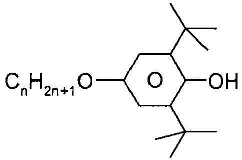 | 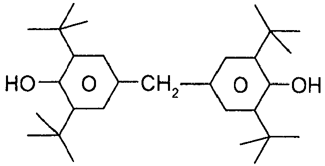 |
| 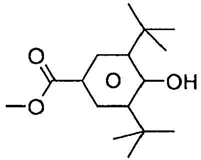 | 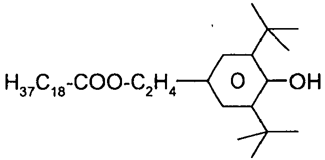 |
| 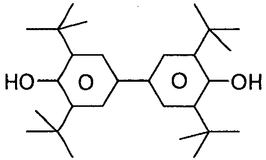 | 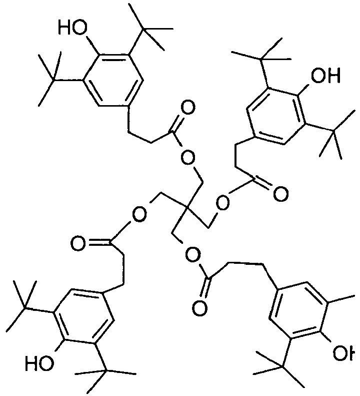 |
| 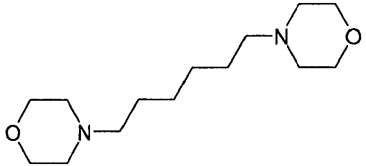 | |
| 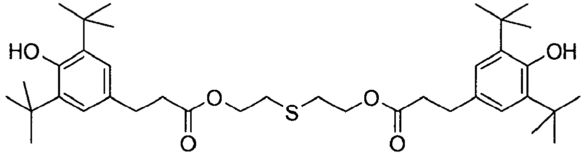 | |
| 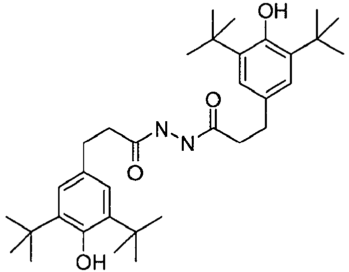 | 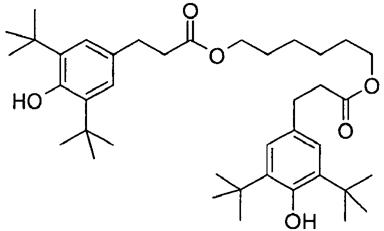 |
| 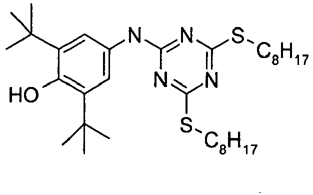 | 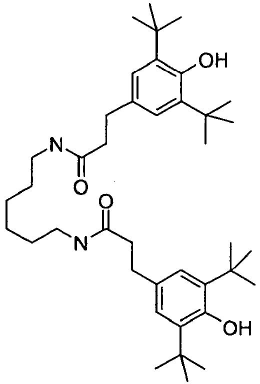 |
| 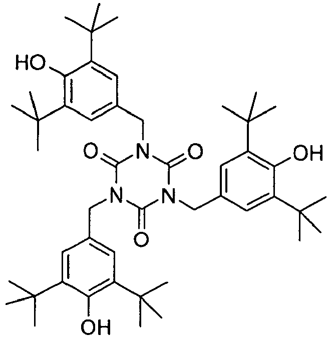 | 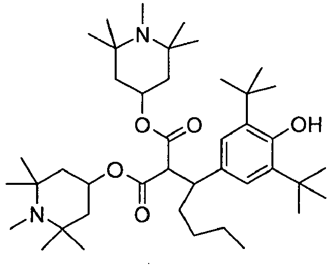 |
| 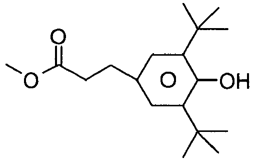 | 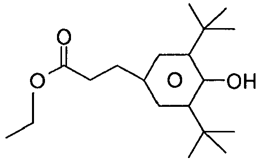 |
| 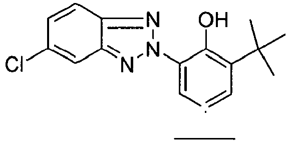 | 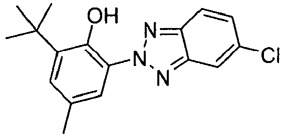 |
| 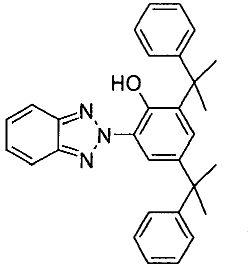 | 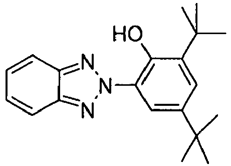 |
| 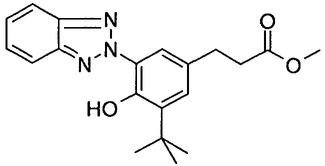 | 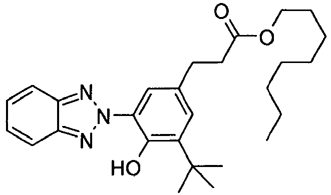 |
| 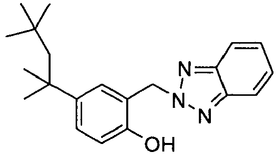 | 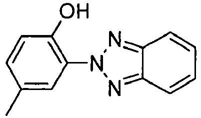 |
| 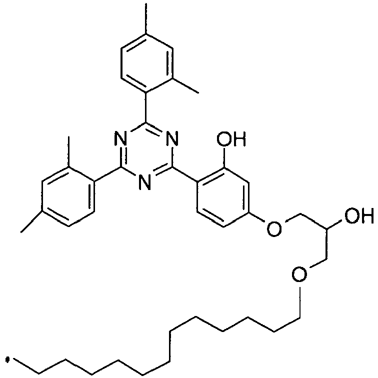 | 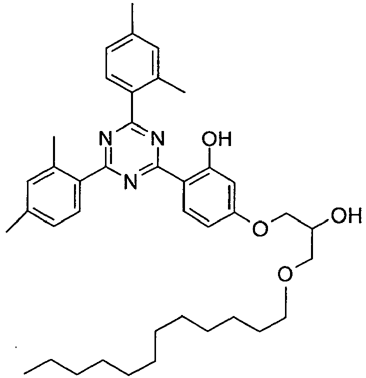 |
| 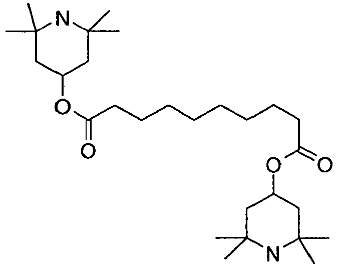 | 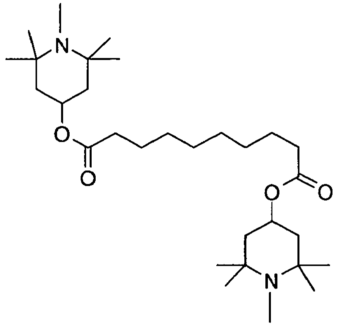 |
| 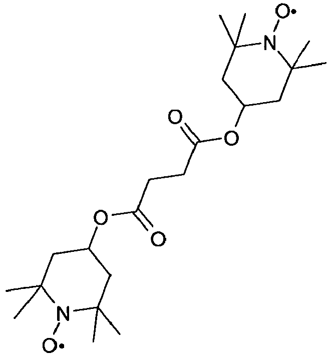 | 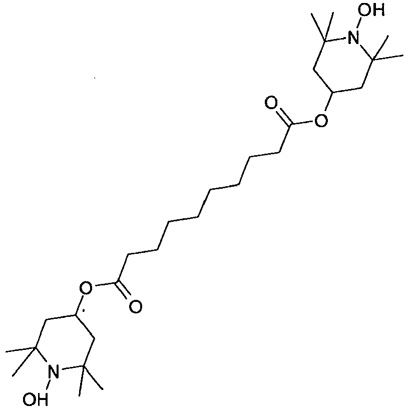 |
| 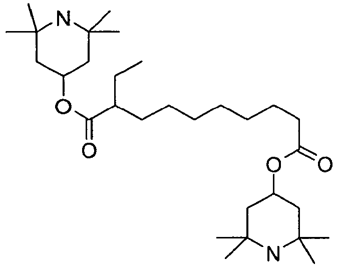 | 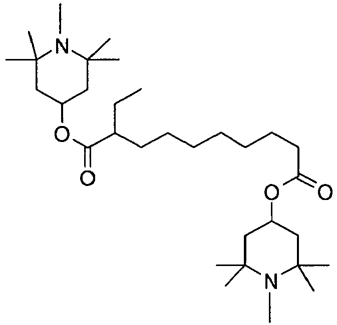 |
| 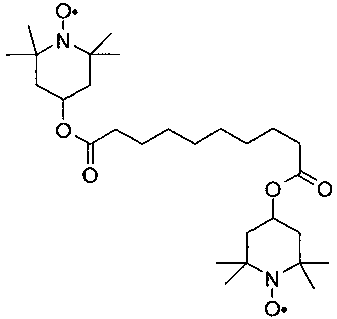 | 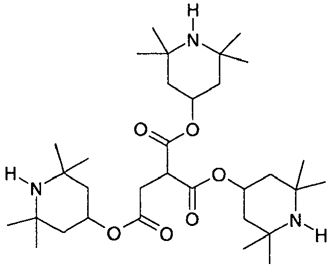 |
| 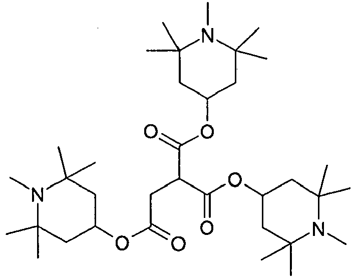 | 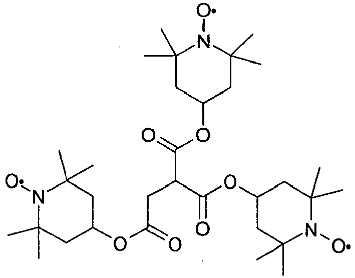 |
| 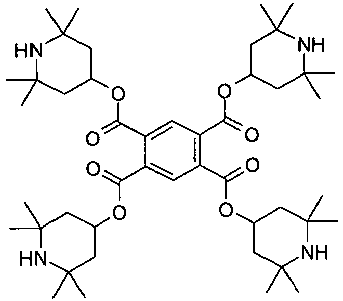 | 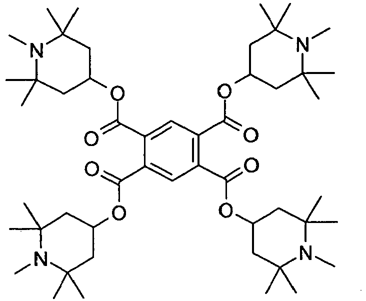 |
| 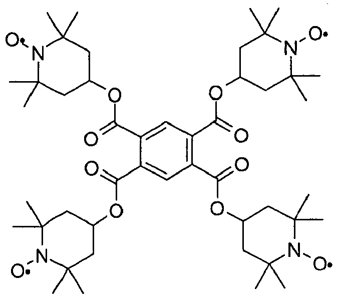 | 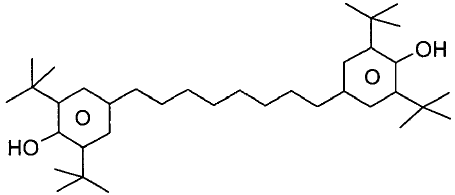 |

**Tabelle D In der Tabelle D sind Beispielverbindungen zusammengestellt, die in den FK-Medien gemäß der vorliegenden Erfindung vorzugsweise als reaktive mesogene Verbindungen verwendet werden können. Sofern die erfindungsgemäßen Mischungen ein oder mehrere reaktive Verbindungen enthalten, werden sie vorzugsweise in Mengen von 0,01-5 Gew.% eingesetzt. Gegebenenfalls muss für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z.B. Irgacure^{®} 651 (Fa. BASF).**

| | |
|---|---|
| 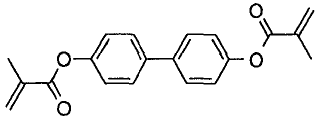 | RM-1 |
| 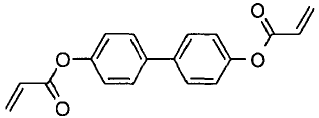 | RM-2 |
| 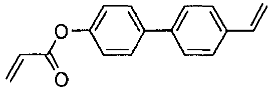 | RM-3 |
| 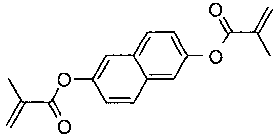 | RM-4 |
| 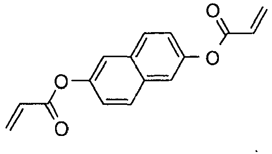 | RM-5 |
| 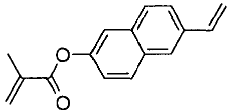 | RM-6 |
| 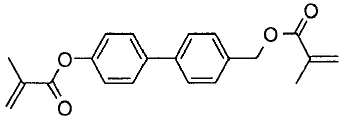 | RM-7 |
| 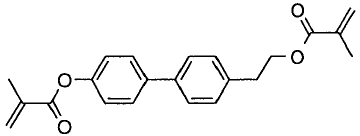 | RM-8 |
| 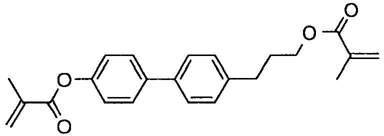 | RM-9 |
| 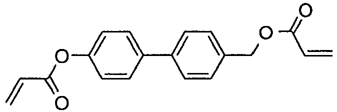 | RM-10 |
| 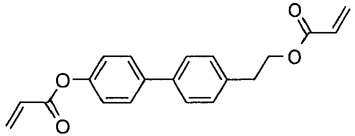 | RM-11 |
| 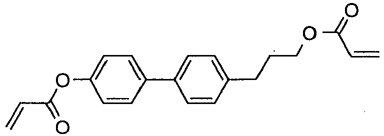 | RM-12 |
| 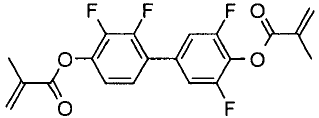 | RM-13 |
| 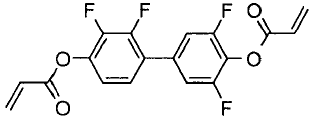 | RM-14 |
| 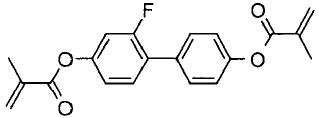 | RM-15 |
| 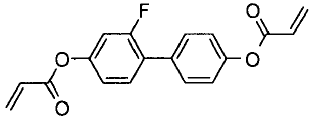 | RM-16 |
| 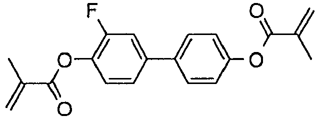 | RM-17 |
| 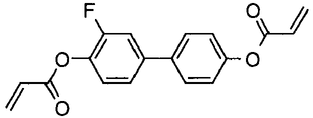 | RM-18 |
| 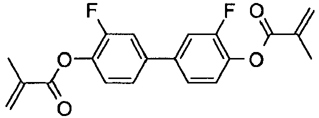 | RM-19 |
| 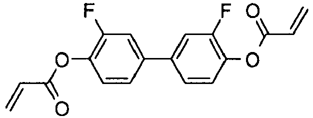 | RM-20 |
| 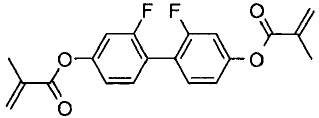 | RM-21 |
| 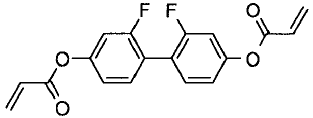 | RM-22 |
| 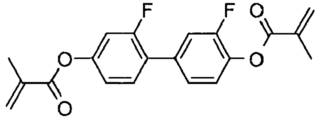 | RM-23 |
| 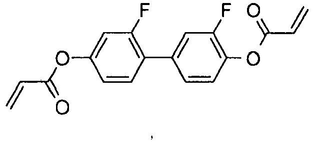 | RM-24 |
| 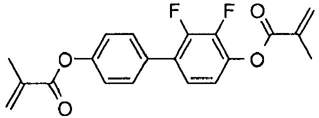 | RM-25 |
| 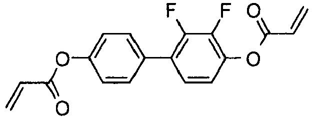 | RM-26 |
| 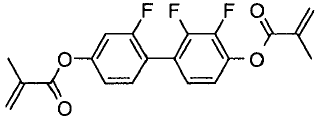 | RM-27 |
| 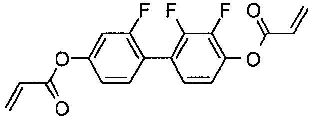 | RM-28 |
| 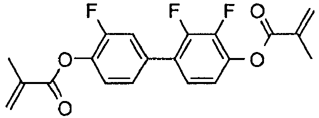 | RM-29 |
| 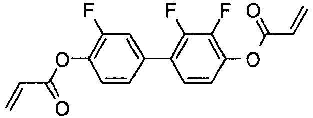 | RM-30 |
| 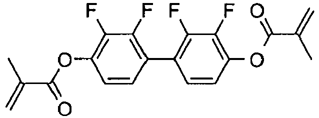 | RM-31 |
| 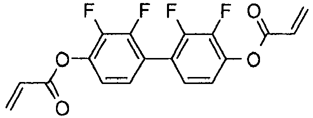 | RM-32 |
| 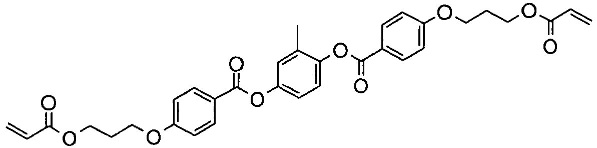 | RM-33 |
| 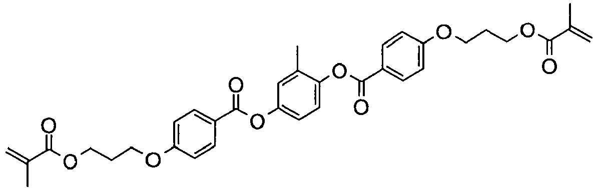 | RM-34 |
| 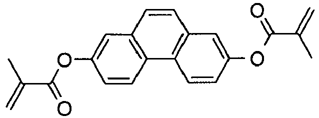 | RM-35 |
| 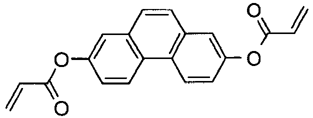 | RM-36 |
| 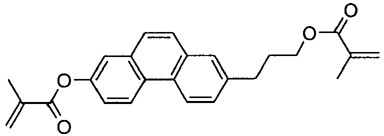 | RM-37 |
| 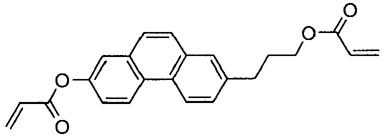 | RM-38 |
| 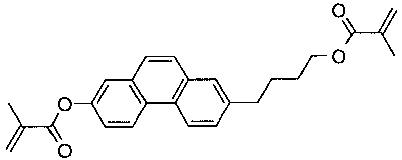 | RM-39 |
| 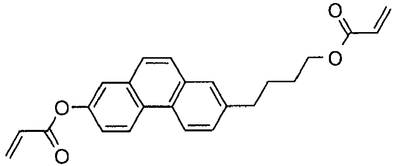 | RM-40 |
| 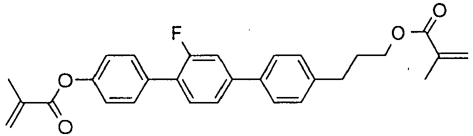 | RM-41 |
| 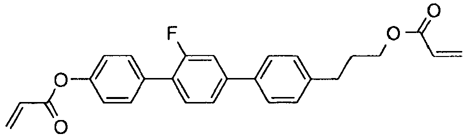 | RM-42 |
| 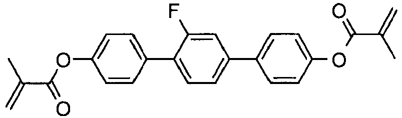 | RM-43 |
| 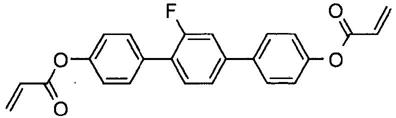 | RM-44 |
| 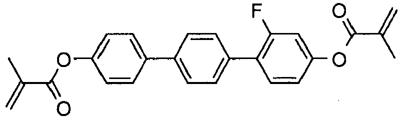 | RM-45 |
| 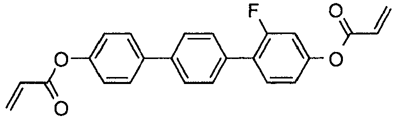 | RM-46 |
| 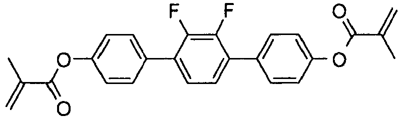 | RM-47 |
| 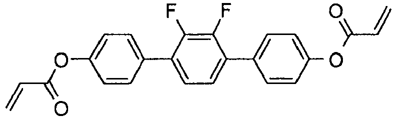 | RM-48 |
| 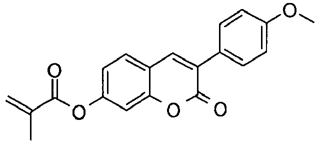 | RM-49 |
| 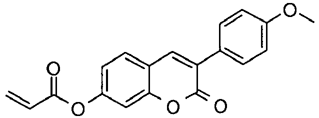 | RM-50 |
| 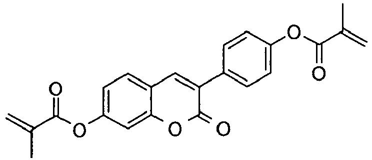 | RM-51 |
| 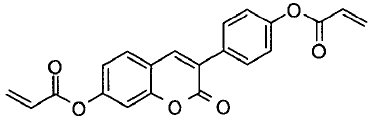 | RM-52 |
| 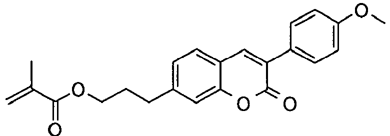 | RM-53 |
| 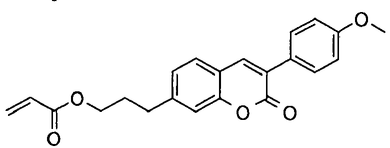 | RM-54 |
| 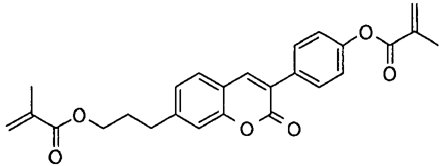 | RM-55 |
| 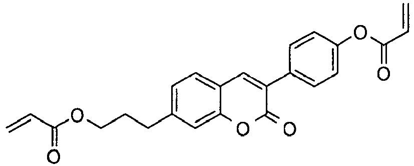 | RM-56 |
| 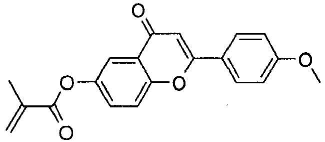 | RM-57 |
| 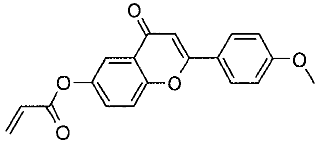 | RM-58 |
| 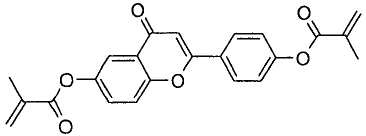 | RM-59 |
| 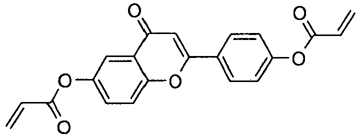 | RM-60 |
| 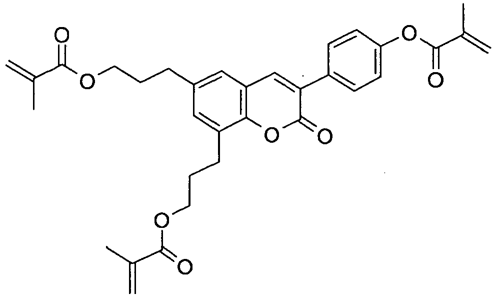 | RM-61 |
| 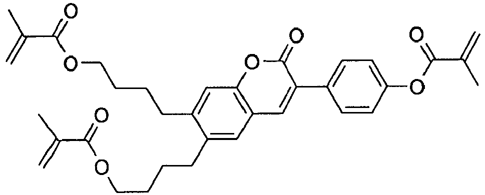 | RM-62 |
| 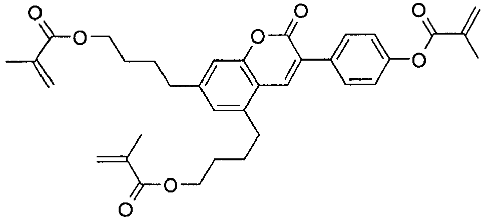 | RM-63 |
| 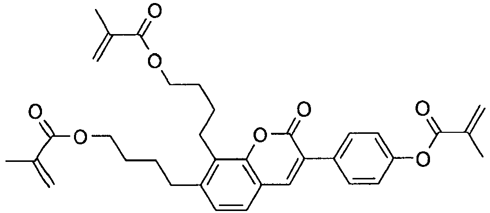 | RM-64 |
| 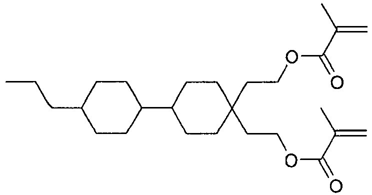 | RM-65 |
| 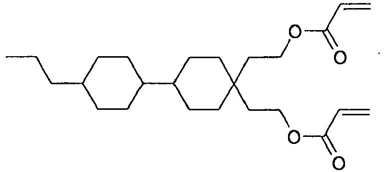 | RM-66 |
| 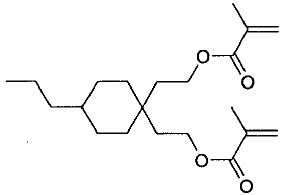 | RM-67 |
| 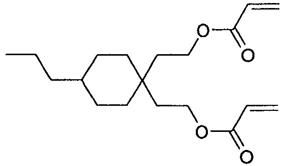 | RM-68 |
| 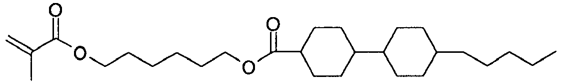 | RM-69 |
| 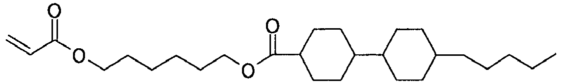 | RM-70 |
| 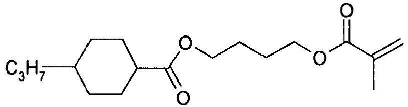 | RM-71 |
| 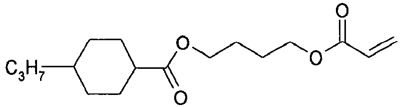 | RM-72 |
| 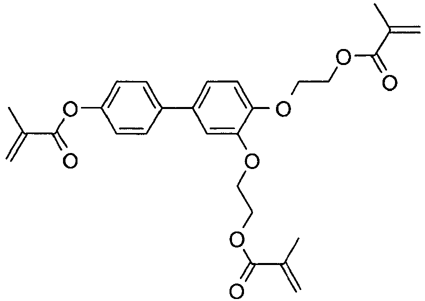 | RM-73 |
| 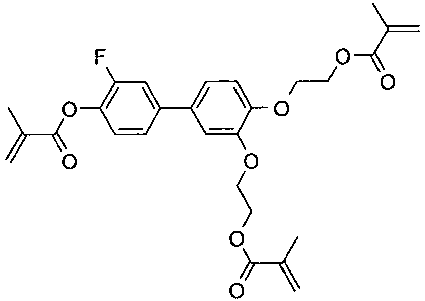 | RM-74 |
| 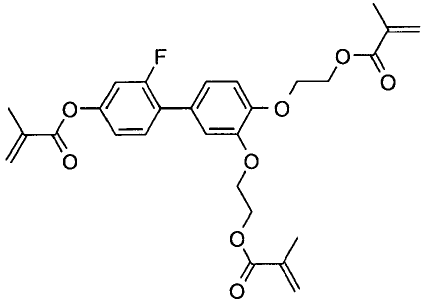 | RM-75 |
| 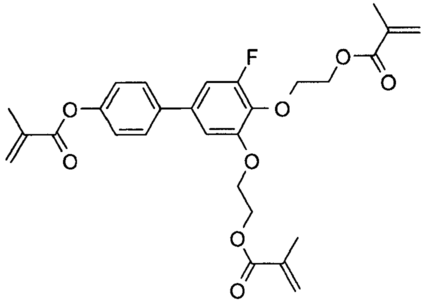 | RM-76 |
| 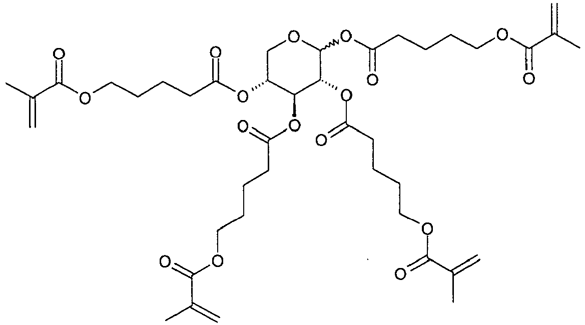 | RM-77 |
| 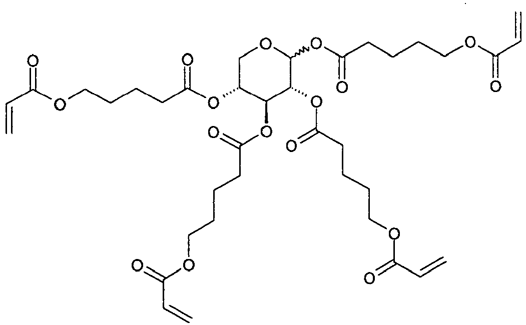 | RM-78 |
| 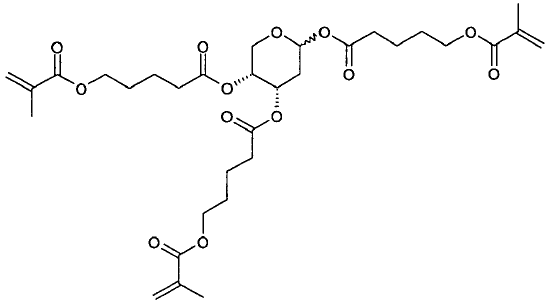 | RM-79 |
| 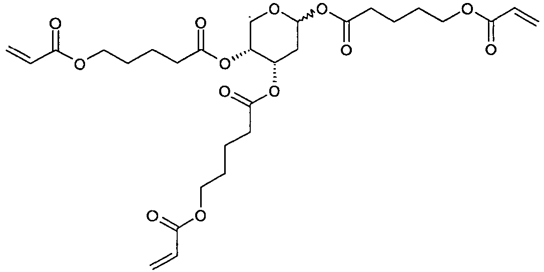 | RM-80 |
| 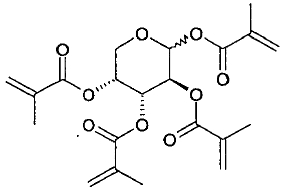 | RM-81 |
| 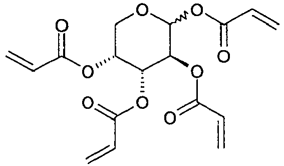 | RM-82 |
| 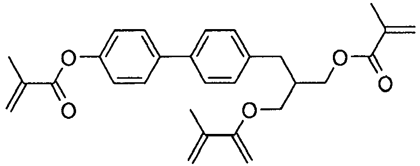 | RM-83 |
| 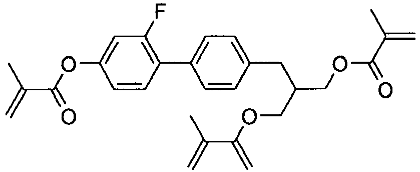 | RM-84 |
| 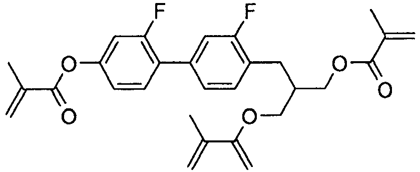 | RM-85 |
| 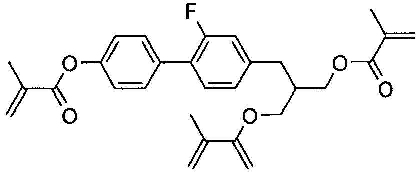 | RM-86 |
| 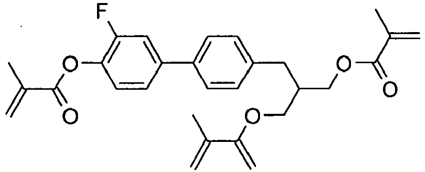 | RM-87 |
| 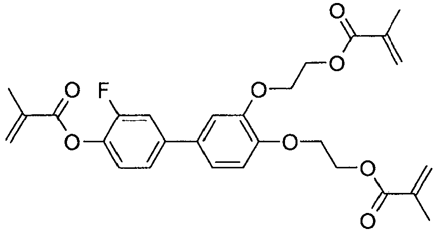 | RM-88 |
| 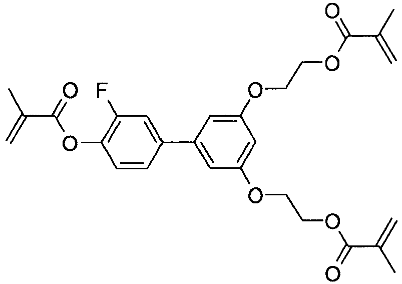 | RM-89 |
| 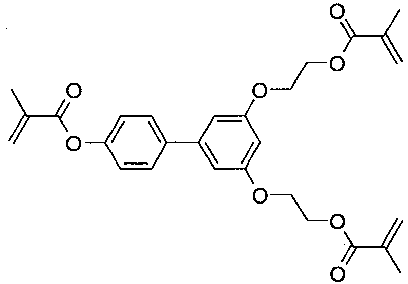 | RM-90 |
| 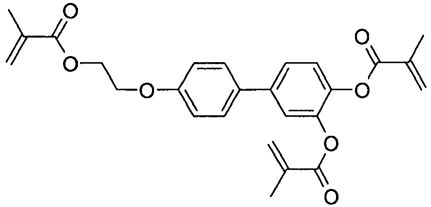 | RM-91 |
| 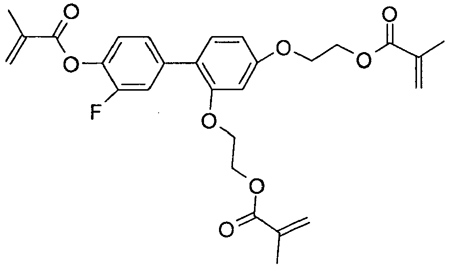 | RM-92 |
| 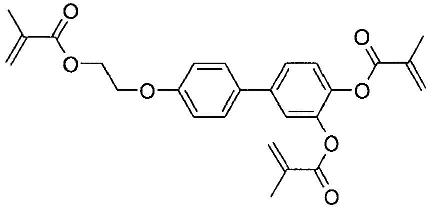 | RM-93 |
| 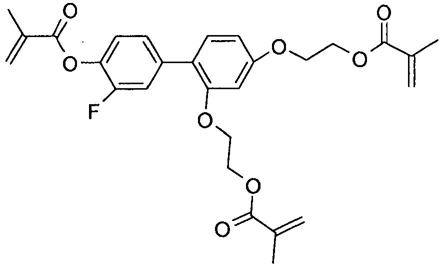 | RM-94 |
| 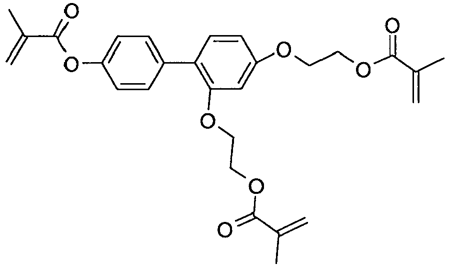 | RM-95 |
| 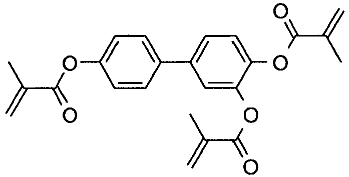 | RM-96 |
| 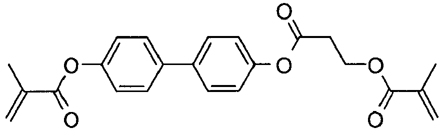 | RM-97 |
| 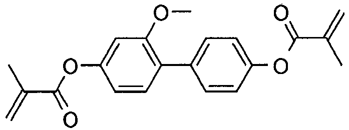 | RM-98 |
| 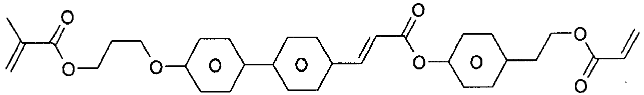 | RM-99 |
| 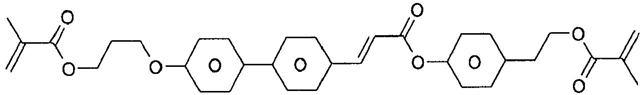 | RM-100 |

In einer bevorzugten Ausführungsform der vorliegenden Erfindung enthalten die mesogenen Medien eine oder mehrere Verbindungen ausgewählt aus der Gruppe der Verbindungen der Tabelle D.

Die folgenden Mischungsbeispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Δn die optische Anisotropie bei 589 nm und 20 °C,
- γ₁ die Rotationsviskosität (mPa·s) bei 20 °C,
- Δε die dielektrische Anisotropie bei 20 °C und 1 kHz (Δε = ε_{||} - ε_{⊥}, wobei ε_{∥} die Dielektrizitätskonstante parallel zu den Moleküllängsachsen und ε_{⊥} die Dielektrizitätskonstante senkrecht dazu bedeutet),
- V₁₀ die Spannung (V) für 10 % Transmission (Blickrichtung senkrecht zur Plattenoberfläche), (Schwellenspannung), bestimmt in einer TN Zelle (90 Grad Verdrillung) im 1. Minimum (d.h. bei einem dΔn-Wert von 0,5 µm) bei 20 °C,
- V₀ die kapazitiv bestimmte Freedericksschwellenspannung in einer antiparallel geriebenen Zelle bei 20 °C.

Alle physikalischen Eigenschaften werden nach "Merck Liquid Crystals, Physical Properties of Liquid Crystals" Status Nov. 1997, Merck KGaA, Deutschland bestimmt und gelten für eine Temperatur von 20 °C, sofern nicht explizit anders angegeben.

### Beispiele

**Beispiel 1 (Vergleichsbeispiel)**

| | | | |
|---|---|---|---|
| CC-3-V | 33,00% | Klärpunkt [°C]: | 75,5 |
| BCH-2F.F | 3,50% | Δn [589 nm, 20 °C]: | 0,1286 |
| BCH-3F.F | 6,00% | Δε [1 kHz, 20 °C]: | +3,8 |
| BCH-5F.F | 6,00% | γ₁ [mPa·s, 20 °C]: | 66 |
| PGP-2-3 | 5,50% | V₁₀ [V]: | 2,04 |
| PGP-2-4 | 5,00% | LTS bulk [h, -20 °C]: | >1000 |
| PGP-2-5 | 11,50% | S → N Übergang [°C]: | -22,5 |
| BCH-3F.F.F | 9,00% | | |
| BCH-5F.F.F | 9,00% | | |
| PCH-3-CI | 6,00% | | |
| CPP-3-F | 5,50% | | |

**Beispiel 2 (Vergleichsbeispiel)**

| | | | |
|---|---|---|---|
| PUQU-3-F | 11,00% | Klärpunkt [°C]: | 74,5 |
| CPP-2-F | 4,00% | Δn [589 nm, 20 °C]: | 0,1270 |
| CPP-3-F | 4,00% | Δε [1 kHz, 20 °C]: | +3,8 |
| BCH-3F.F.F | 3,00% | γ₁ [mPa·s, 20 °C]: | 60 |
| CP-3-CI | 10,50% | V₁₀ [V]: | 2,03 |
| CC-3-V | 27,00% | LTS bulk [h, -20 °C]: | >1000 |
| PGP-2-3 | 11,00% | S → N Übergang [°C]: | |
| PGP-2-4 | 11,00% | | |
| CCP-V-1 | 18,50% | | |

**Beispiel 3 (Verqleichsbeispiel)**

| | | | |
|---|---|---|---|
| PUQU-3-F | 8,00% | Klärpunkt [°C]: | 78,5 |
| BCH-3F.F.F | 14,00% | Δn [589 nm, 20 °C]: | 0,1320 |
| CPP-2-F | 6,00% | Δε [1 kHz, 20 °C]: | +4,2 |
| PCH-3Cl | 6,00% | γ₁ [mPa·s, 20 °C]: | 67 |
| CC-3-V | 33,00% | V₁₀ [V]: | 2,00 |
| CPGP-5-2 | 3,00% | LTS bulk [h, -20 °C]: | >1000 |
| CPGP-5-3 | 3,00% | S → N Übergang [°C]: | |
| PGP-2-3 | 10,00% | | |
| PGP-2-4 | 11,00% | | |
| CCP-V-1 | 6,00% | | |

**Beispiel 4 (Vergleichsbeispiel)**

| | | | |
|---|---|---|---|
| PUQU-3-F | 8,00% | Klärpunkt [°C]: | 75,5 |
| BCH-3F.F.F | 11,00% | Δn [589 nm, 20 °C]: | 0,1157 |
| CP-3-Cl | 15,00% | Δε [1 kHz, 20 °C]: | +3,9 |
| CC-3-V | 32,00% | γ₁ [mPa·s, 20 °C]: | 63 |
| CPGP-5-2 | 5,00% | V₁₀ [V]: | 2,00 |
| CPGP-5-3 | 4,00% | LTS bulk [h, -20 °C]: | >1000 |
| PGP-2-3 | 5,00% | S → N Übergang [°C]: | |
| PGP-2-4 | 5,00% | | |
| CCP-V-1 | 15,00% | | |

**Beispiel 5 (Vergleichsbeispiel)**

| | | | |
|---|---|---|---|
| CC-3-V | 32,00% | Klärpunkt [°C]: | 74 |
| CC-3-V1 | 5,00% | Δn [589 nm, 20 °C]: | 0,1156 |
| PCH-3Cl | 3,00% | Δε [1 kHz, 20 °C]: | +4,3 |
| PUQU-3-F | 18,00% | γ₁ [mPa·s, 20 °C]: | 55 |
| BCH-5F | 8,00% | V₁₀ [V]: | 1,97 |
| PGP-2-3 | 8,00% | LTS bulk [h, -20 °C]: | 912 |
| PGP-2-5 | 8,00% | S → N Übergang [°C]: | -20 |
| CCP-V-1 | 18,00% | | |

**Beispiel 6 (Vergleichsbeispiel)**

| | | | |
|---|---|---|---|
| PGU-2-F | 5,00% | Klärpunkt [°C]: | 75,5 |
| PGU-3-F | 7,00% | Δn [589 nm, 20 °C]: | 0,1258 |
| PUQU-3-F | 10,00% | Δε [1 kHz, 20 °C]: | +4,8 |
| CP-3-Cl | 5,00% | γ₁ [mPa·s, 20 °C]: | 59 |
| CCP-V-1 | 13,50% | V₁₀ [V]: | 1,90 |
| CCP-V2-1 | 7,00% | LTS bulk [h, -20 °C]: | >1000 |
| CC-3-V1 | 8,00% | S → N Übergang [°C]: | |
| CC-3-V | 27,50% | | |
| PGP-2-3 | 6,00% | | |
| PGP-2-4 | 6,00% | | |
| PGP-3-3 | 5,00% | | |

**Beispiel 7 (Vergleichsbeispiel)**

| | | | |
|---|---|---|---|
| CPGU-2-OT | 2,50% | Klärpunkt [°C]: | 77 |
| CPGU-3-OT | 3,00% | Δn [589 nm, 20 °C]: | 0,1266 |
| PGU-2-F | 5,00% | Δε [1 kHz, 20 °C]: | +4,7 |
| PGU-3-F | 5,00% | γ₁ [mPa·s, 20 °C]: | 58 |
| PUQU-2-F | 4,00% | V₁₀ [V]: | 1,90 |
| PUQU-3-F | 3,00% | LTS bulk [h, -20 °C]: | >1000 |
| CCP-V-1 | 13,00% | S → N Übergang [°C]: | |
| CC-3-V1 | 7,00% | | |
| PGP-2-3 | 6,00% | | |
| PGP-2-4 | 6,50% | | |
| PGP-2-5 | 7,00% | | |
| CC-3-V | 35,00% | | |
| PCH-3Cl | 3,00% | | |

**Beispiel 8 (Vergleichsbeispiel)**

| | | | |
|---|---|---|---|
| CC-3-V | 20,00% | Klärpunkt [°C]: | 75 |
| CC-3-V1 | 12,50% | Δn [589 nm, 20 °C]: | 0,1230 |
| PP-1-2V1 | 8,00% | Δε [1 kHz, 20 °C]: | +5,0 |
| PCH-3Cl | 3,00% | γ₁ [mPa·s, 20 °C]: | 65 |
| PUQU-3-F | 14,00% | V₁₀ [V]: | 1,96 |
| CGU-3-F | 6,50% | LTS bulk [h, -20 °C]: | >1000 |
| BCH-3F.F | 3,00% | S → N Übergang [°C]: | -20 |
| PGP-2-3 | 6,50% | | |
| PGP-2-4 | 6,00% | | |
| CCP-V-1 | 16,00% | | |
| CBC-33 | 2,00% | | |
| CCGU-3-F | 2,50% | | |

**Beispiel 9**

| | | | |
|---|---|---|---|
| CC-3-V | 42,00% | Klärpunkt [°C]: | 75 |
| PCH-3Cl | 5,00% | Δn [589 nm, 20 °C]: | 0,1362 |
| PP-1-2V1 | 7,00% | Δε [1 kHz, 20 °C]: | +5,5 |
| PGP-2-3 | 7,00% | γ₁ [mPa·s, 20 °C]: | 61 |
| PGP-2-4 | 8,00% | V₁₀ [V]: | 1,81 |
| PGP-2-5 | 10,00% | LTS bulk [h, -20 °C]: | >1000 |
| CPGU-3-OT | 5,00% | S → N Übergang [°C]: | -20 |
| APUQU-3-F | 9,00% | | |
| PGUQU-3-F | 7,00% | | |

**Beispiel 10 (Vergleichsbeispiel)**

| | | | |
|---|---|---|---|
| CCQU-5-F | 5,00% | Klärpunkt [°C]: | 80 |
| PUQU-2-F | 6,00% | Δn [589 nm, 20 °C]: | 0,1147 |
| PUQU-3-F | 11,00% | Δε [1 kHz, 20 °C]: | +5.6 |
| CC-3-V1 | 9,00% | γ₁ [mPa·s, 20 °C]: | 67 |
| CCP-V-1 | 20,00% | V₁₀ [V]: | 1,83 |
| CCGU-3-F | 6,00% | LTS bulk [h, -20 °C]: | >1000 |
| PP-1-2V1 | 2,00% | S → N Übergang [°C]: | |
| CC-3-V | 26,00% | | |
| PGP-2-3 | 7,00% | | |
| PGP-2-4 | | | 8,00% |
| GP-2-CI | | | 2,00% |

**Beispiel 11 (Vergleichsbeispiel)**

| | | | |
|---|---|---|---|
| CPGU-3-OT | 10,00% | Klärpunkt [°C]: | 77.5 |
| CC-3-V | 32,50% | Δn [589 nm, 20 °C]: | 0,1240 |
| CC-3-V1 | 6,00% | Δε [1 kHz, 20 °C]: | +4.6 |
| CCP-V-1 | 16,50% | γ₁ [mPa·s, 20 °C]: | 62 |
| PGP-2-4 | 6,50% | V₁₀ [V]: | 2,04 |
| PGP-2-5 | 7,00% | LTS bulk [h, -20 °C]: | >1000 |
| PP-1-2V1 | 8,00% | S → N Übergang [°C]: | |
| PUQU-3-F | 11,50% | | |
| GP-2-Cl | 2,00% | | |

**Beispiel 12 (Vergleichsbeispiel)**

| | | | |
|---|---|---|---|
| PGU-2-F | 5,00% | Klärpunkt [°C]: | 74,5 |
| PGU-3-F | 6,50% | Δn [589 nm, 20 °C]: | 0,1259 |
| PUQU-3-F | 10,00% | Δε [1 kHz, 20 °C]: | +4.8 |
| CCP-V-1 | 13,50% | γ₁ [mPa·s, 20 °C]: | 59 |
| CCP-V2-1 | 6,00% | V₁₀ [V]: | 1,92 |
| CC-3-V1 | 8,00% | LTS bulk [h, -20 °C]: | >1000 |
| CC-3-V | 38,00% | S → N Übergang [°C]: | |
| PGP-2-3 | 4,00% | | |
| PGP-2-4 | 4,00% | | |
| PGP-2-5 | 10,00% | | |
| GP-2-Cl | 3,00% | | |

**Beispiel 13 (Vergleichsbeispiel)**

| | | | |
|---|---|---|---|
| CPGU-2-F | 3,00% | Klärpunkt [°C]: | 74,5 |
| CPGU-3-F | 3,00% | Δn [589 nm, 20 °C]: | 0,1258 |
| PGU-2-F | 5,00% | Δε [1 kHz, 20 °C]: | +4.7 |
| PGU-3-F | 5,00% | γ₁ [mPa·s, 20 °C]: | 57 |
| PUQU-2-F | 4,00% | V₁₀ [V]: | 1,92 |
| PUQU-3-F | 3,00% | LTS bulk [h, -20 °C]: | >1000 |
| CCP-V-1 | 14,00% | S → N Übergang [°C]: | |
| CC-3-V1 | 6,00% | | |
| PGP-2-3 | 5,00% | | |
| PGP-2-4 | 5,00% | | |
| PGP-2-5 | 6,00% | | |
| CC-3-V | 35,00% | | |
| PCH-3Cl | 3,00% | | |
| PP-1-2V1 | 3,00% | | |

**Beispiel 14**

| | | | |
|---|---|---|---|
| CC-3-V | 45,50% | Klärpunkt [°C]: | 73 |
| PP-1-2V1 | 4,00% | Δn [589 nm, 20 °C]: | 0,1339 |
| PGP-2-3 | 7,00% | Δε [1 kHz, 20 °C]: | +7,6 |
| PGP-2-4 | 6,50% | γ₁ [mPa·s, 20 °C]: | 62 |
| PGP-2-5 | 5,00% | V₁₀ [V]: | 1,56 |
| PGUQU-3-F | 13,00% | LTS bulk [h, -20 °C]: | >1000 |
| CPGU-3-OT | 5,00% | S → N Übergang [°C]: | |
| PGU-3-F | 4,00% | | |
| APUQU-3-F | 7,00% | | |
| GP-2-Cl | 3,00% | | |

**Beispiel 15 (Vergleichsbeispiel)**

| | | | |
|---|---|---|---|
| CC-3-V | 33,00% | Klärpunkt [°C]: | 75,5 |
| BCH-2F.F | 3,00% | Δn [589 nm, 20 °C]: | 0,1298 |
| BCH-3F.F | 7,00% | Δε [1 kHz, 20 °C]: | +4,0 |
| BCH-5F.F | 8,00% | γ₁ [mPa·s, 20 °C]: | 69 |
| PGP-2-3 | 4,00% | V₁₀ [V]: | 2,01 |
| PGP-2-4 | 4,00% | LTS bulk [h, -20 °C]: | >1000 |
| PGP-2-5 | 13,00% | S → N Übergang [°C]: | -21 |
| BCH-3F.F.F | 10,00% | | |
| BCH-5F.F.F | 10,00% | | |
| PP-5-F | 4,00% | | |
| CPP-3-F | 4,00% | | |

**Beispiel 16 (Vergleichsbeispiel)**

| | | | |
|---|---|---|---|
| CC-3-V | 32,50% | Klärpunkt [°C]: | 75 |
| BCH-3F.F | 7,00% | Δn [589 nm, 20 °C]: | 0,1305 |
| BCH-5F.F | 7,00% | Δε [1 kHz, 20 °C]: | +4,2 |
| PGP-2-3 | 4,50% | γ₁ [mPa·s, 20 °C]: | 69 |
| PGP-2-4 | 4,50% | V₁₀ [V]: | 1,97 |
| PGP-2-5 | 13,00% | LTS bulk [h, -20 °C]: | >1000 |
| BCH-3F.F.F | 9,00% | S → N Übergang [°C]: | |
| BCH-5F.F.F | 10,00% | | |
| PP-5-F | 4,00% | | |
| CPP-3-F | 4,50% | | |
| CGU-3-F | 4,00% | | |

**Beispiel 17 (Vergleichsbeispiel)**

| | | | |
|---|---|---|---|
| CC-3-V | 36,00% | Klärpunkt [°C]: | 74 |
| PGP-2-3 | 6,00% | Δn [589 nm, 20 °C]: | 0,1295 |
| PGP-2-4 | 6,00% | Δε [1 kHz, 20 °C]: | +3,9 |
| PGP-2-5 | 13,00% | γ₁ [mPa·s, 20 °C]: | 58 |
| CGU-3-F | 5,50% | V₁₀ [V]: | 2,00 |
| CCPU-3-F | 3,00% | LTS bulk [h, -20 °C]: | >1000 |
| BCH-3F.F.F | 10,50% | S → N Übergang [°C]: | |
| BCH-5F.F.F | 10,50% | | |
| CPP-3-F | 5,00% | | |
| PP-5-F | 4,50% | | |

## Patentansprüche

1. Flüssigkristallines Medium, **dadurch gekennzeichnet, dass** es eine oder mehrere Verbindungen der Formel 1, und 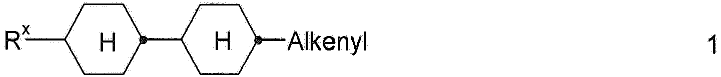 eine oder mehrere Verbindungen der Formel 2, und 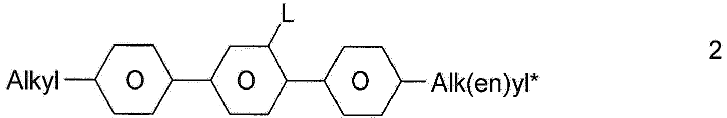 eine oder mehrere Verbindungen ausgewählt aus Formel 3, 4 und 5, 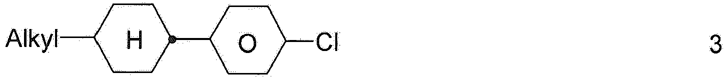 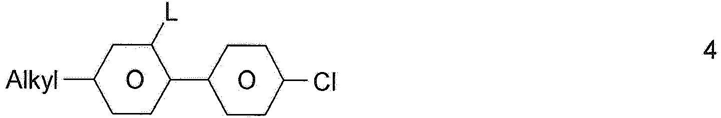 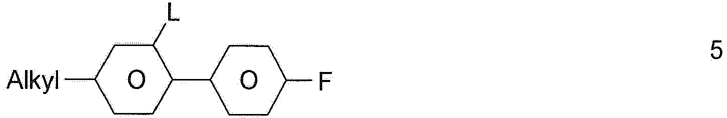 enthält,
worin die einzelnen Reste, jeweils unabhängig voneinander und bei jedem Auftreten gleich oder verschieden, die folgende Bedeutung besitzen:
Alkenyl C₂₋₆-Alkenyl,
R^{x} C₁₋₆-Alkyl oder C₂₋₆-Alkenyl,
Alkyl oder Alkyl* jeweils unabhängig voneinander C₁₋₆-Alkyl,
L H oder F,
Alk(en)yl* C₁₋₆-Alkyl oder C₂₋₆-Alkenyl,
und
es zusätzlich eine oder mehrere Verbindungen ausgewählt aus den Formeln XV und XVI enthält, 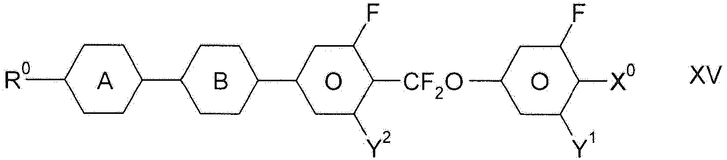 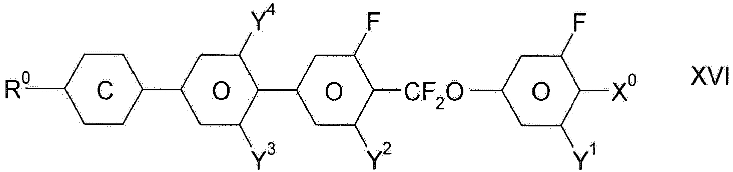 worin R⁰, X⁰ und Y¹⁻⁴ die in Anspruch 9 angegebenen Bedeutungen besitzen, 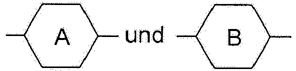 jeweils unabhängig voneinander 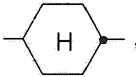 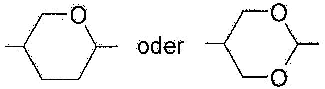 bedeuten, und 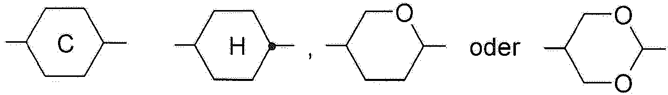 bedeutet, und es zusätzlich eine oder mehrere Verbindungen der Formel XXX enthält, 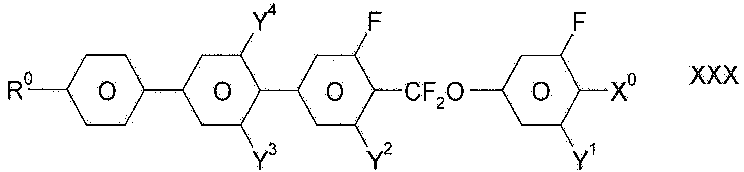 worin R⁰, X⁰ und Y¹⁻⁴ die in Anspruch 9 angegebenen Bedeutungen besitzen,
und das Medium mindestens drei Verbindungen der Formel PGP-n-m und/oder PGP-n-2V, 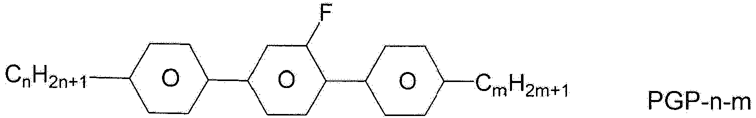 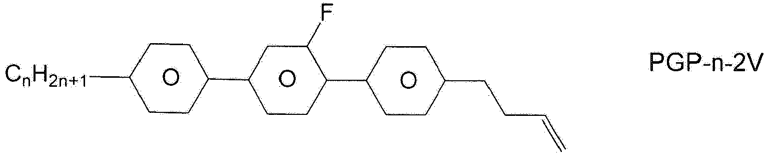 worin n und m jeweils unabhängig voneinander 2, 3, 4 oder 5 bedeuten,
enthält.

2. Flüssigkristallines Medium nach Anspruch 1, **dadurch gekennzeichnet, dass** es eine oder mehrere Verbindungen der Formel 1 ausgewählt aus den folgenden Formeln enthält 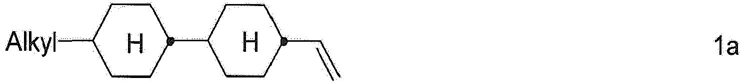 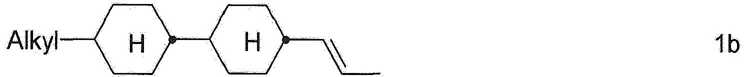 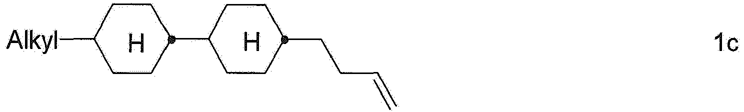 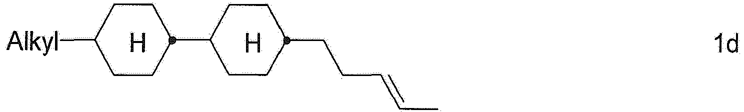 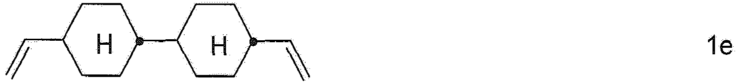 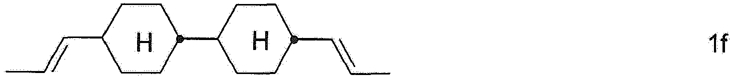 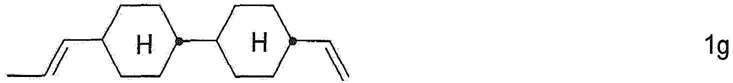 worin "Alkyl" die in Anspruch 1 angegebene Bedeutung besitzt.

3. Flüssigkristallines Medium nach Anspruch 1 oder 2, **dadurch gekennzeichnet, dass** es eine oder mehrere Verbindungen der Formel 2 ausgewählt aus den folgenden Formeln enthält:

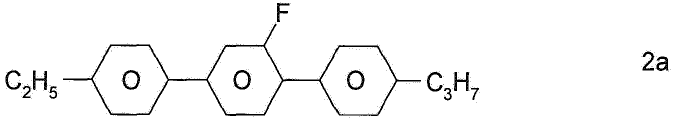

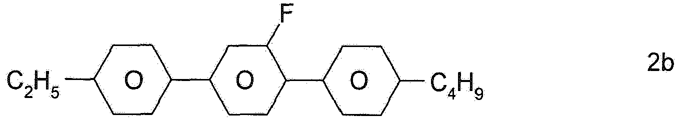

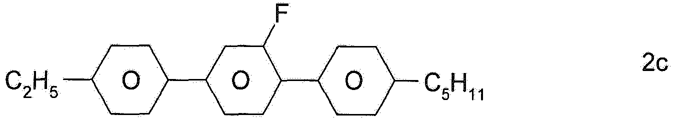

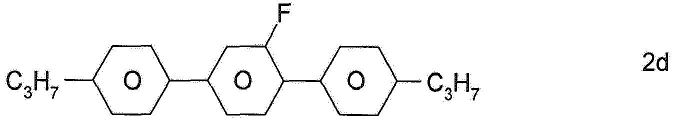

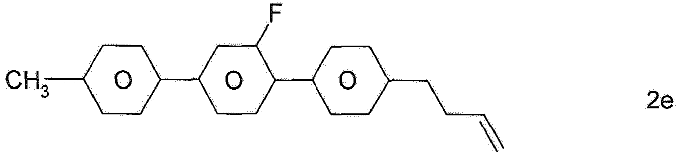

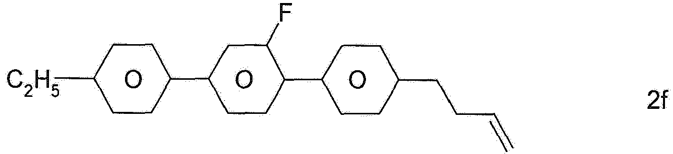

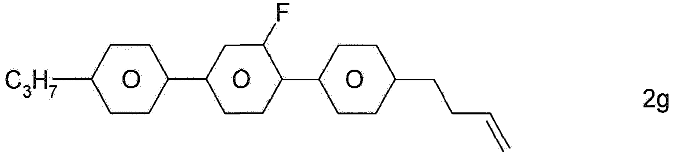

4. Flüssigkristallines Medium nach einem oder mehreren der Ansprüche 1 bis 3, **dadurch gekennzeichnet, dass** es eine oder mehrere Verbindungen der Formel 3 ausgewählt aus den folgenden Formeln enthält

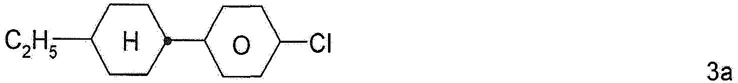

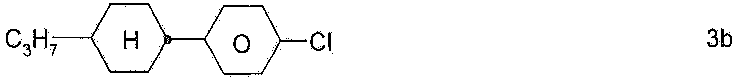

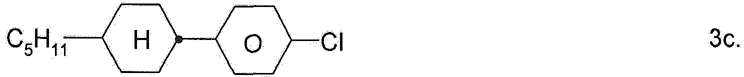

5. Flüssigkristallines Medium nach einem oder mehreren der Ansprüche 1 bis 4, **dadurch gekennzeichnet, dass** es eine oder mehrere Verbindungen der Formel 4 ausgewählt aus den folgenden Formeln enthält:

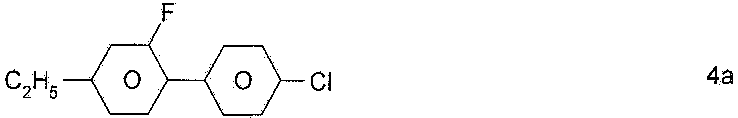

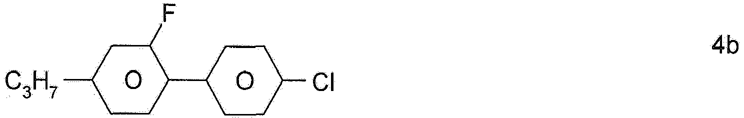

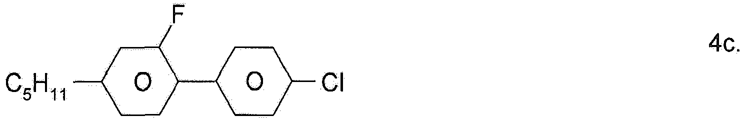

6. Flüssigkristallines Medium nach einem oder mehreren der Ansprüche 1 bis 5, **dadurch gekennzeichnet, dass** es eine oder mehrere Verbindungen der Formel 5 ausgewählt aus den folgenden Formeln enthält:

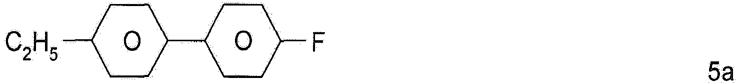

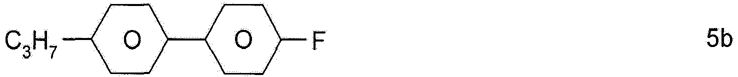

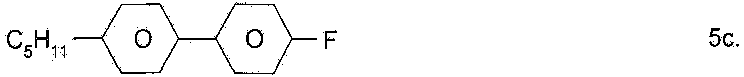

7. Flüssigkristallines Medium nach einem oder mehreren der Ansprüche 2 bis 6, enthaltend
eine oder mehrere Verbindungen ausgewählt aus den Formeln 1a und 1b, und
zwei oder mehrere Verbindungen ausgewählt aus den Formeln 2a bis 2d, und
eine Verbindung der Formel 3b oder 4b oder 5c.

8. Flüssigkristallines Medium nach einem oder mehreren der Ansprüche 1 bis 7, enthaltend 20 bis 65 Gew.% einer oder mehrerer Verbindungen der Formel 1, und 5 bis 30 Gew.% einer oder mehrerer Verbindungen der Formel 2, und 2 bis 20 Gew.% einer oder mehrerer Verbindungen ausgewählt aus den Formeln 3, 4 und 5.

9. Flüssigkristallines Medium nach einem oder mehreren der Ansprüche 1 bis 8, **dadurch gekennzeichnet, dass** es zusätzlich eine oder mehrere Verbindungen ausgewählt aus den Formeln II und/oder III enthält 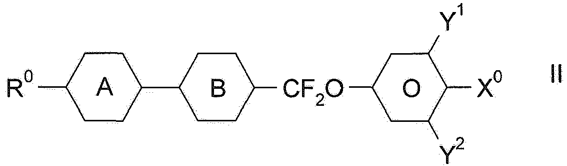 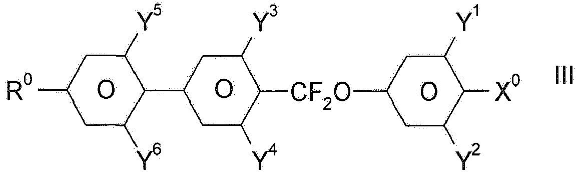 worin
R⁰ unsubstituiertes oder halogeniertes Alkyl oder Alkoxy mit 1 bis 15 C-Atomen, Cyclopentyl, Cyclobutyl, wobei in diesen Resten auch eine oder mehrere CH₂-Gruppen jeweils unabhängig voneinander durch -C=C-, -CF₂O-, -CH=CH-, 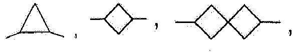 -O-, -CO-O- oder -O-CO- so ersetzt sein können, dass O-Atome nicht direkt miteinander verknüpft sind,
X⁰ F, Cl, halogeniertes Alkyl, halogeniertes Alkoxy, halogeniertes Alkenyl oder halogeniertes Alkenyloxy mit jeweils bis zu 6 C-Atomen,
Y¹⁻⁶ jeweils unabhängig voneinander H oder F, und 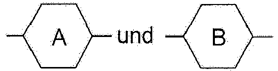 jeweils unabhängig voneinander 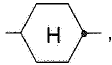 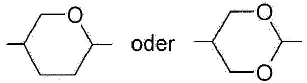 bedeuten.

10. Flüssigkristallines Medium nach einem oder mehreren der Ansprüche 1 bis 9, **dadurch gekennzeichnet, dass** es zusätzlich eine oder mehrere Verbindungen ausgewählt aus den Formeln IV bis VIII enthält, 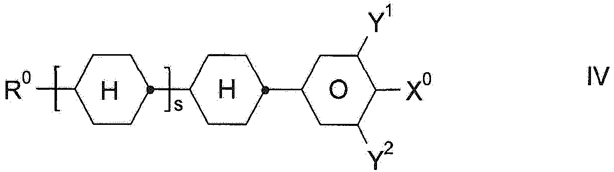 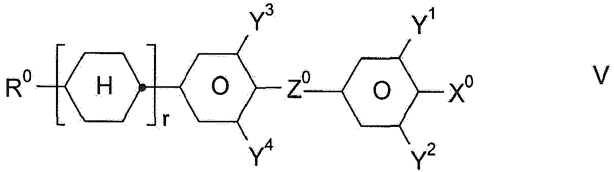 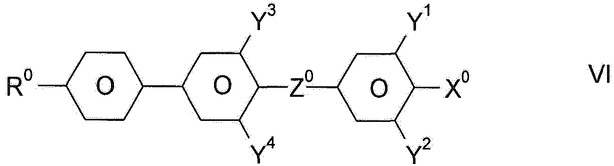 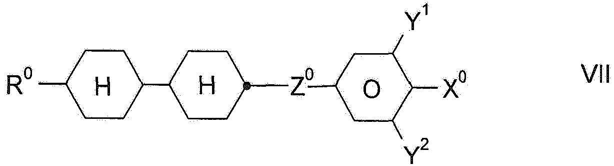 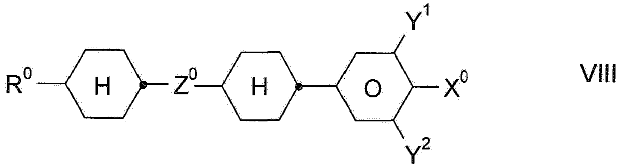 worin R⁰, X⁰ und Y¹⁻⁴ die in Anspruch 9 angegebenen Bedeutungen besitzen,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in Formel V und VI auch eine Einfachbindung, in Formel V und VIII auch -CF₂O-,
r 0 oder 1, und
s 0 oder 1
bedeuten.

11. Flüssigkristallines Medium nach einem oder mehreren der Ansprüche 1 bis 10, **dadurch gekennzeichnet, dass** es zusätzlich eine oder mehrere Verbindungen ausgewählt aus den Formeln IX bis XII enthält, 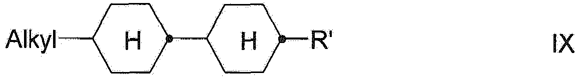 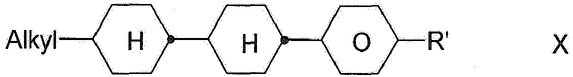 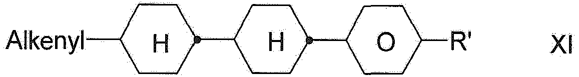 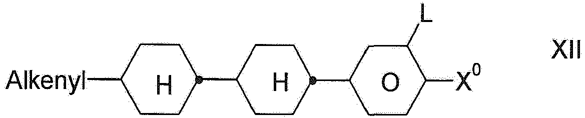 worin X⁰ die in Anspruch 9 angegebene Bedeutung besitzt, und
L H oder F,
"Alkyl" C₁₋₆-Alkyl,
R' C₁₋₆-Alkyl, C₁₋₆-Alkoxy oder C₂₋₆-Alkenyl, und
"Alkenyl" und "Alkenyl*"jeweils unabhängig voneinander C₂₋₆-Alkenyl bedeuten.

12. Flüssigkristallines Medium nach einem oder mehreren der Ansprüche 1 bis 11, **dadurch gekennzeichnet, dass** es zusätzlich eine oder mehrere Verbindungen der Formel XIII enthält, 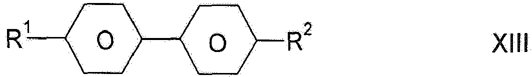 worin R¹ und R² jeweils unabhängig voneinander n-Alkyl, Alkoxy, Oxaalkyl, Fluoralkyl oder Alkenyl mit jeweils bis zu 6 C-Atomen bedeuten.

13. Flüssigkristallines Medium nach einem oder mehreren der Ansprüche 1 bis 12, **dadurch gekennzeichnet, dass** es zusätzlich eine oder mehrere Verbindungen ausgewählt den Verbindungen der folgenden Formeln enthält, 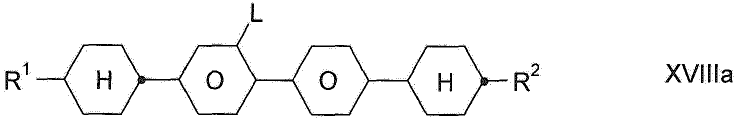 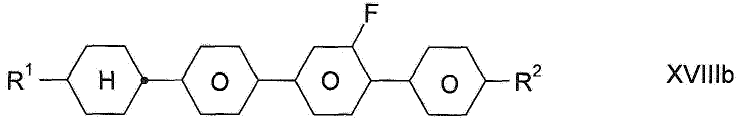 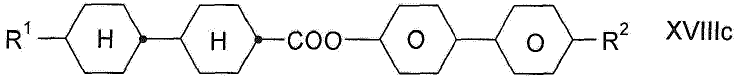 worin R¹ und R² jeweils unabhängig voneinander n-Alkyl, Alkoxy, Oxaalkyl, Fluoralkyl oder Alkenyl mit jeweils bis zu 6 C-Atomen bedeuten, und L H oder F bedeutet.

14. Flüssigkristallines Medium nach einem oder mehreren der Ansprüche 1 bis 13, **dadurch gekennzeichnet, dass** es zusätzlich eine oder mehrere Verbindungen ausgewählt der Gruppe der Verbindungen der Formeln XIX, XX, XXI, XXII, XXIII und XIV enthält, 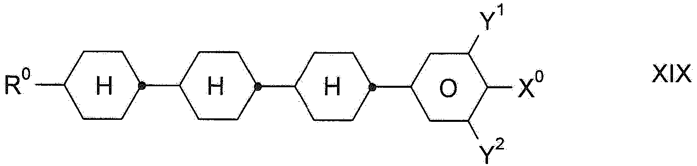 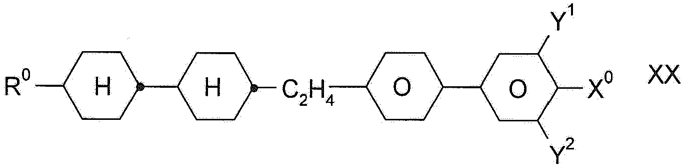 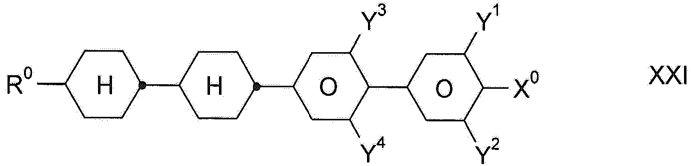 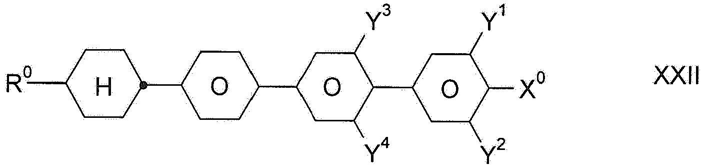 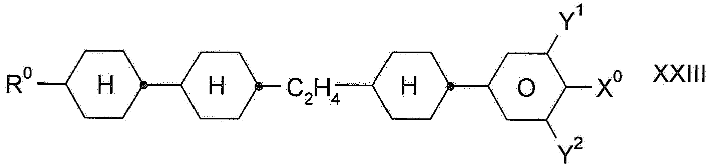 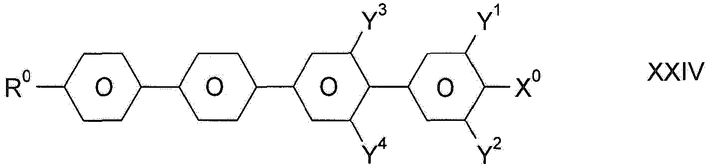 worin R⁰, X⁰ und Y¹⁻⁴ die in Anspruch 9 angegebene Bedeutung besitzen.

15. Flüssigkristallines Medium nach einem oder mehreren der Ansprüche 1 bis 14, **dadurch gekennzeichnet, dass** es zusätzlich ein oder mehrere Additiv(e) ausgewählt aus der Gruppe der UV-Stabilisatoren, Dotierstoffe und Antioxidantien enthält.

16. Flüssigkristallines Medium nach einem oder mehreren der Ansprüche 1 bis 15, **dadurch gekennzeichnet, dass** es zusätzlich eine oder mehrere polymerisierbare Verbindungen enthält.

17. Verfahren zur Herstellung eines flüssigkristallinen Mediums nach einem oder mehreren der Ansprüche 1 bis 16, **dadurch gekennzeichnet, dass** man eine oder mehrere Verbindungen der Formeln 1-5 wie in Anspruch 1 definiert mit weiteren mesogenen Verbindungen und gegebenenfalls noch mit ein oder mehreren Additiven und/oder mindestens einer polymerisierbaren Verbindung mischt.

18. Verwendung eines flüssigkristallinen Mediums nach einem oder mehreren der Ansprüche 1 bis 16 für elektrooptische Zwecke.

19. Verwendung eines flüssigkristallinen Mediums nach einem oder mehreren der Ansprüche 1 bis 16 in Shutter-Brillen, für 3D-Anwendungen, in TN-, PS-TN-, STN-, ECB-, OCB-, IPS-, PS-IPS-, HB-FFS-, FFS-, PS-FFS- und posi-VA-Anzeigen.

20. Elektrooptische Flüssigkristallanzeige enthaltend ein flüssigkristallines Medium nach einem oder mehreren der Ansprüche 1 bis 16.

21. Elektrooptische Flüssigkristallanzeige nach Anspruch 20, **dadurch gekennzeichnet, dass** sie eine TN-, PS-TN-, STN-, ECB-, OCB-, IPS-, PS-IPS-, FFS-, HB-FFS, PS-FFS- oder positiv-VA-Anzeige ist.

## Claims

1. Liquid-crystalline medium, **characterised in that** it comprises one or more compounds of the formula 1, 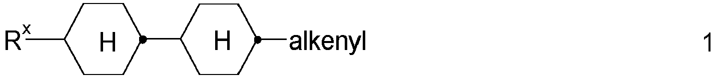 and one or more compounds of the formula 2, 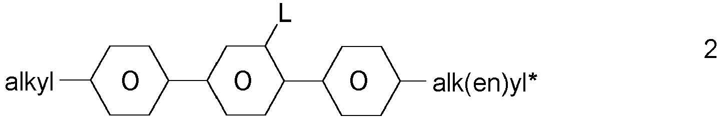 and one or more compounds selected from formulae 3, 4 and 5, 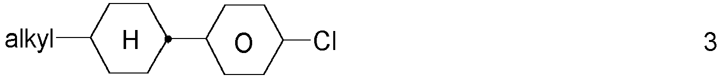 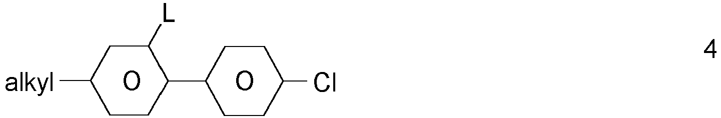 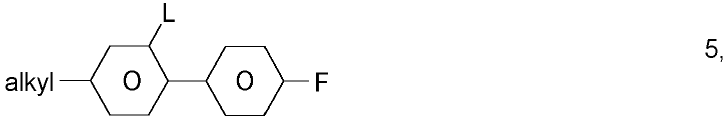 in which the individual radicals, in each case independently of one another and identically or differently on each occurrence, have the following meanings:
alkenyl denotes C₂₋₆-alkenyl,
R^{x} denotes C₁₋₆-alkyl or C₂₋₆-alkenyl,
alkyl and alkyl* in each case, independently of one another, denote C₁₋₆-alkyl,
L denotes H or F,
alk(en)yl* denotes C₁₋₆-alkyl or C₂₋₆-alkenyl,
and
it additionally comprises one or more compounds selected from the formulae XV and XVI, 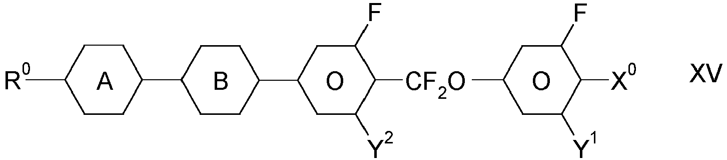 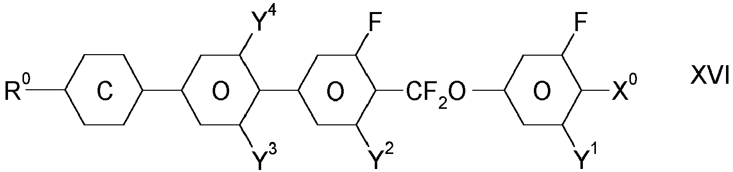 in which R⁰, X⁰ and Y¹⁻⁴ have the meanings indicated in Claim 9, 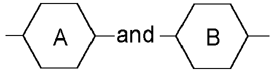 in each case, independently of one another, denote 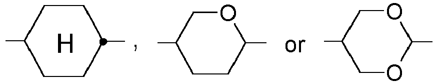 and 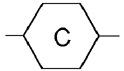 denotes 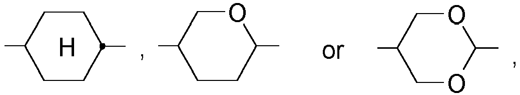 and it additionally comprises one or more compounds of the formula XXX, 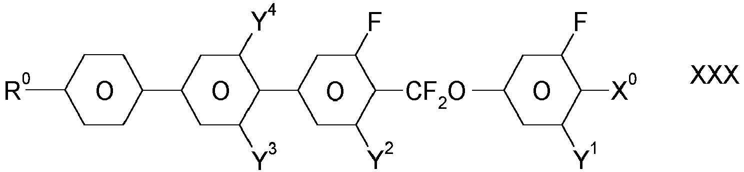 in which R⁰, X⁰ and Y¹⁻⁴ have the meanings indicated in Claim 9,
and the medium comprises at least three compounds of the formula PGP-n-m and/or PGP-n-2V, 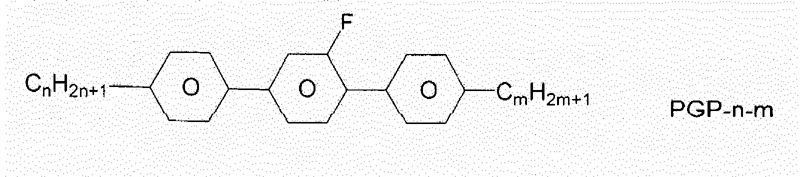 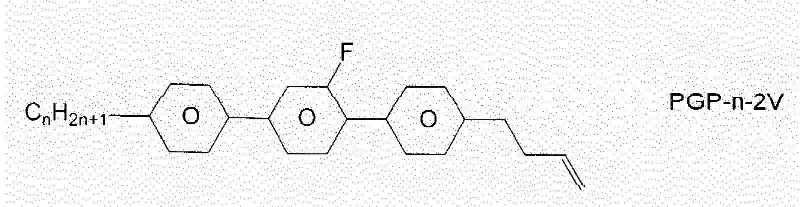 in which n and m in each case, independently of one another, denote 2, 3, 4 or 5.

2. Liquid-crystalline medium according to Claim 1, **characterised in that** it comprises one or more compounds of the formula 1 selected from the following formulae: 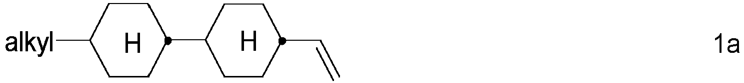 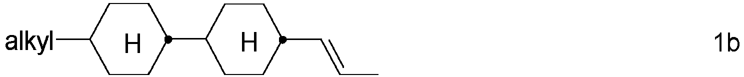 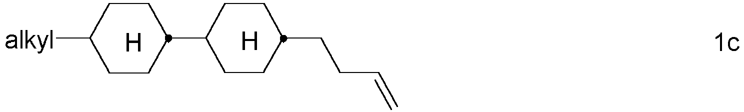 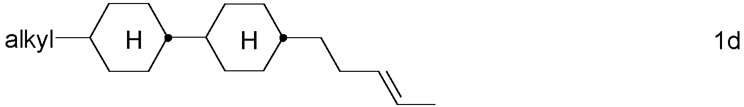 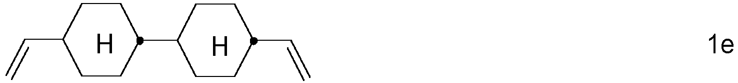 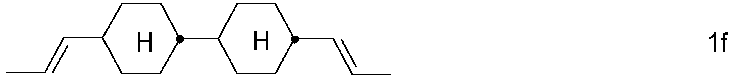 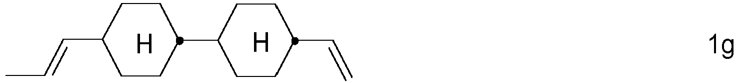 in which "alkyl" has the meaning indicated in Claim 1.

3. Liquid-crystalline medium according to Claim 1 or 2, **characterised in that** it comprises one or more compounds of the formula 2 selected from the following formulae:

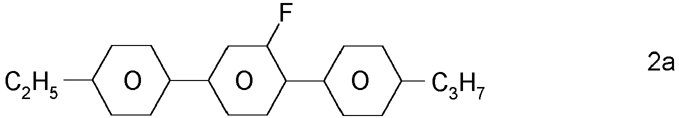

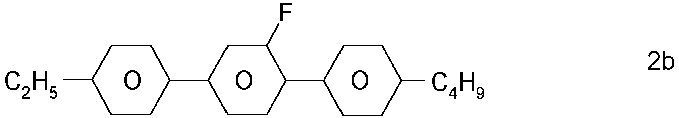

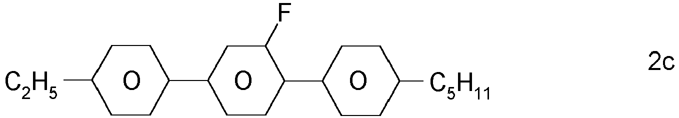

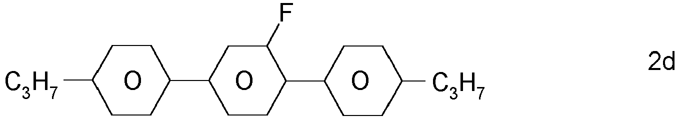

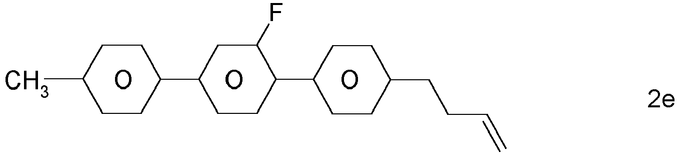

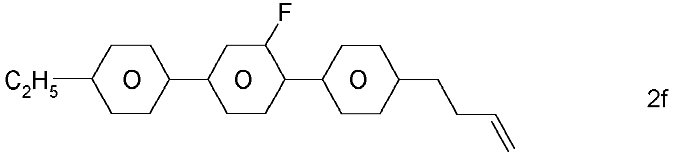

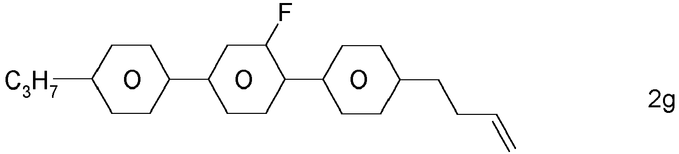

4. Liquid-crystalline medium according to one or more of Claims 1 to 3, **characterised in that** it comprises one or more compounds of the formula 3 selected from the following formulae:

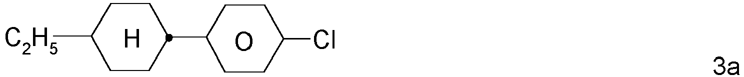

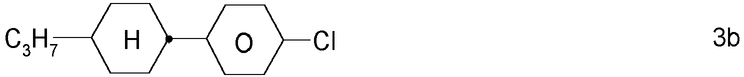

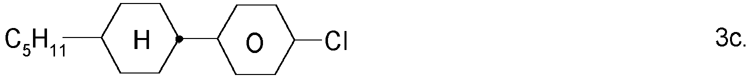

5. Liquid-crystalline medium according to one or more of Claims 1 to 4, **characterised in that** it comprises one or more compounds of the formula 4 selected from the following formulae:

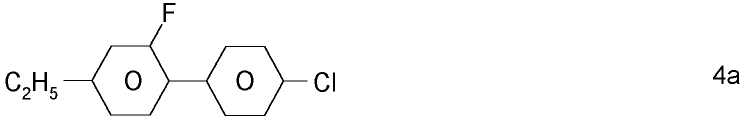

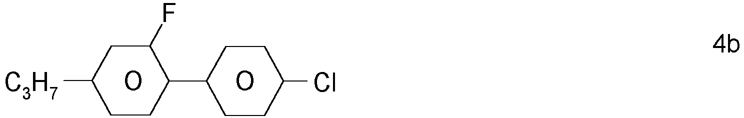

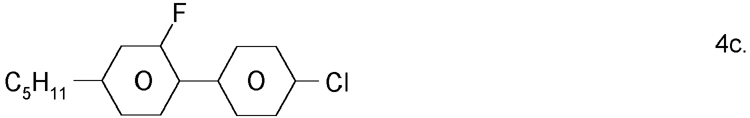

6. Liquid-crystalline medium according to one or more of Claims 1 to 5, **characterised in that** it comprises one or more compounds of the formula 5 selected from the following formulae:

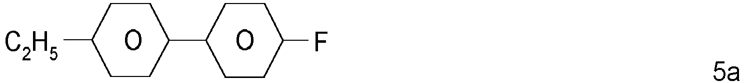

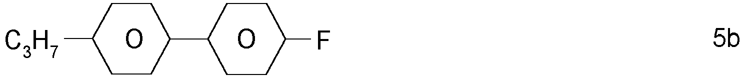

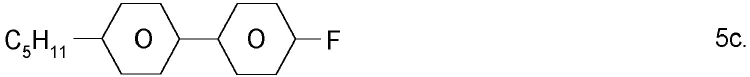

7. Liquid-crystalline medium according to one or more of Claims 2 to 6, comprising
one or more compounds selected from the formulae 1a and 1b, and
two or more compounds selected from the formulae 2a to 2d, and
a compound of the formula 3b or 4b or 5c.

8. Liquid-crystalline medium according to one or more of Claims 1 to 7, comprising
20 to 65% by weight of one or more compounds of the formula 1, and 5 to 30% by weight of one or more compounds of the formula 2, and 2 to 20% by weight of one or more compounds selected from the formulae 3, 4 and 5.

9. Liquid-crystalline medium according to one or more of Claims 1 to 8, **characterised in that** it additionally comprises one or more compounds selected from formulae II and/or III, 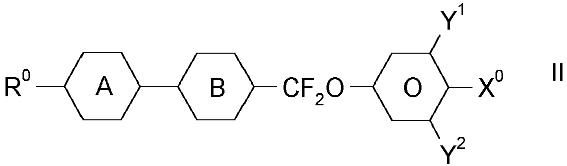 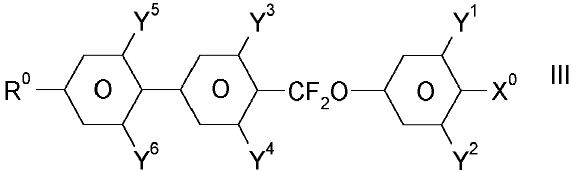 in which
R⁰ denotes unsubstituted or halogenated alkyl or alkoxy having 1 to 15 C atoms, cyclopentyl or cyclobutyl, where, in addition, one or more CH₂ groups in these radicals may in each case be replaced, independently of one another, by -C≡C-, -CF₂O-, -CH=CH-, 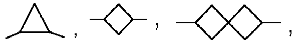 -O-, -CO-O-or -O-CO- in such a way that O atoms are not linked directly to one another,
X⁰ denotes F, Cl, halogenated alkyl, halogenated alkoxy, halogenated alkenyl or halogenated alkenyloxy, in each case having up to 6 C atoms,
Y¹⁻⁶ in each case, independently of one another, denote H or F, and 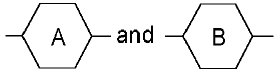 in each case, independently of one another, denote

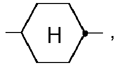

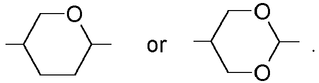

10. Liquid-crystalline medium according to one or more of Claims 1 to 9, **characterised in that** it additionally comprises one or more compounds selected from the formulae IV to VIII, 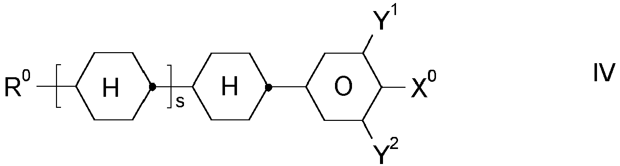 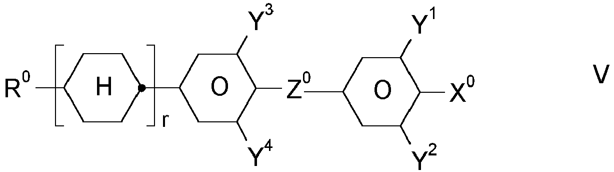 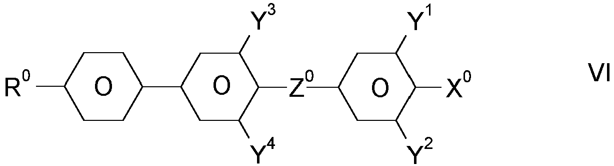 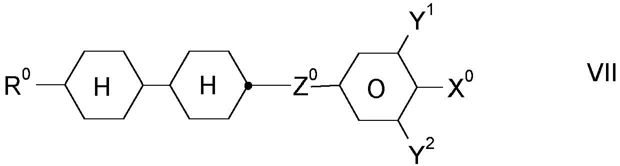 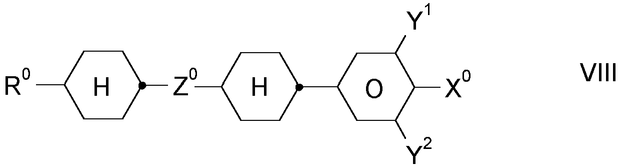 in which R⁰, X⁰ and Y¹⁻⁴ have the meanings indicated in Claim 9,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in formulae V and VI also a single bond, in formulae V and VIII also -CF₂O-,
r denotes 0 or 1, and
s denotes 0 or 1.

11. Liquid-crystalline medium according to one or more of Claims 1 to 10, **characterised in that** it additionally comprises one or more compounds selected from the formulae IX to XII, 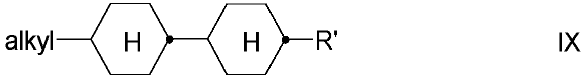 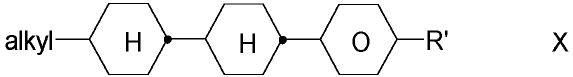 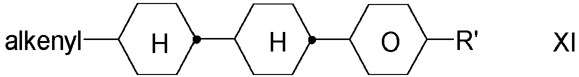 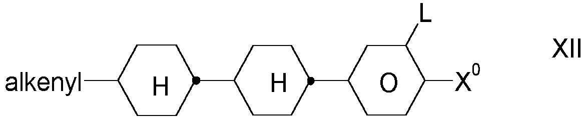 in which X⁰ has the meaning indicated in Claim 9, and
L denotes H or F,
"alkyl" denotes C₁₋₆-alkyl,
R' denotes C₁₋₆-alkyl, C₁₋₆-alkoxy or C₂₋₆-alkenyl, and
"alkenyl" and "alkenyl*" in each case, independently of one another, denote C₂₋₆-alkenyl.

12. Liquid-crystalline medium according to one or more of Claims 1 to 11, **characterised in that** it additionally comprises one or more compounds of the formula XIII, 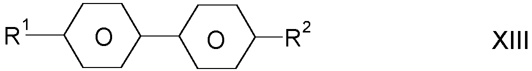 in which R¹ and R² in each case, independently of one another, denote n-alkyl, alkoxy, oxaalkyl, fluoroalkyl or alkenyl, in each case having up to 6 C atoms.

13. Liquid-crystalline medium according to one or more of Claims 1 to 12, **characterised in that** it additionally comprises one or more compounds selected from the compounds of the following formulae: 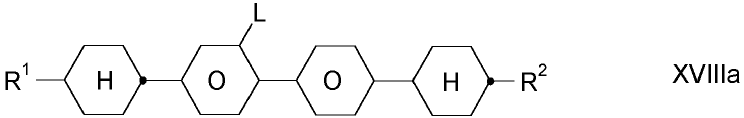 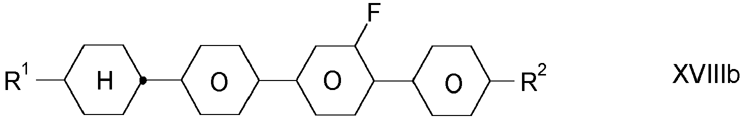 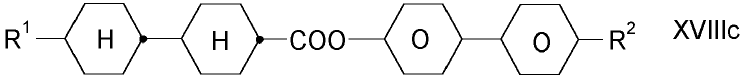 in which R¹ and R² in each case, independently of one another, denote n-alkyl, alkoxy, oxaalkyl, fluoroalkyl or alkenyl, in each case having up to 6 C atoms, and L denotes H or F.

14. Liquid-crystalline medium according to one or more of Claims 1 to 13, **characterised in that** it additionally comprises one or more compounds selected from the group of the compounds of the formulae XIX, XX, XXI, XXII, XXIII and XIV, 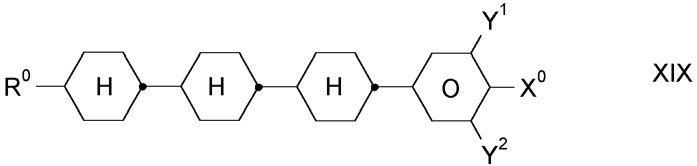 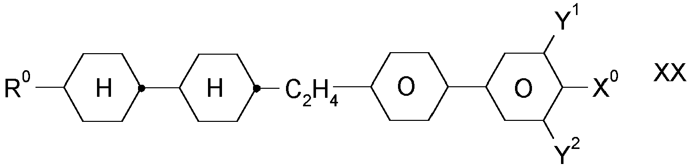 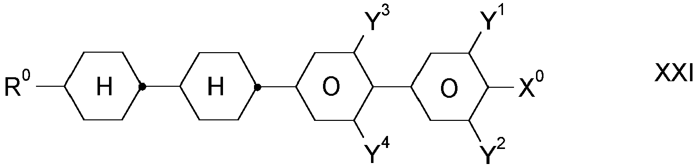 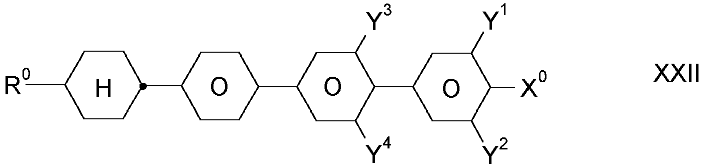 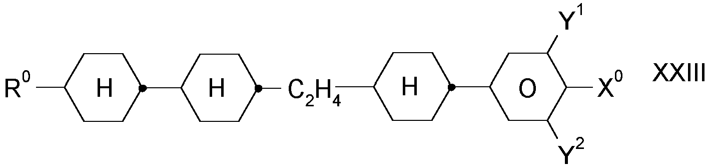 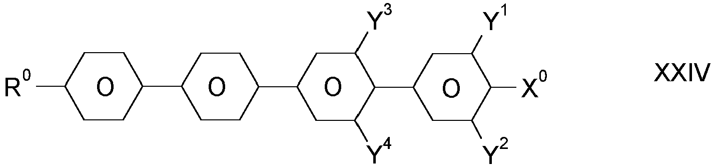 in which R⁰, X⁰ and Y¹⁻⁴ have the meanings indicated in Claim 9.

15. Liquid-crystalline medium according to one or more of Claims 1 to 14, **characterised in that** it additionally comprises one or more additive(s) selected from the group of the UV stabilisers, dopants and antioxidants.

16. Liquid-crystalline medium according to one or more of Claims 1 to 15, **characterised in that** it additionally comprises one or more polymerisable compounds.

17. Process for the preparation of a liquid-crystalline medium according to one or more of Claims 1 to 16, **characterised in that** one or more compounds of the formulae 1-5 as defined in Claim 1 are mixed with further mesogenic compounds and optionally also with one or more additives and/or at least one polymerisable compound.

18. Use of a liquid-crystalline medium according to one or more of Claims 1 to 16 for electro-optical purposes.

19. Use of a liquid-crystalline medium according to one or more of Claims 1 to 16 in shutter spectacles, for 3D applications, in TN, PS-TN, STN, ECB, OCB, IPS, PS-IPS, HB-FFS, FFS, PS-FFS and positive VA displays.

20. Electro-optical liquid-crystal display containing a liquid-crystalline medium according to one or more of Claims 1 to 16.

21. Electro-optical liquid-crystal display according to Claim 20, **characterised in that** it is a TN, PS-TN, STN, ECB, OCB, IPS, PS-IPS, FFS, HB-FFS, PS-FFS or positive VA display.

## Revendications

1. Milieu cristallin liquide, **caractérisé en ce qu'**il comprend un ou plusieurs composé(s) de la formule 1, 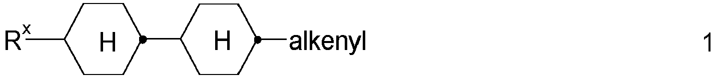 et un ou plusieurs composé(s) de la formule 2, 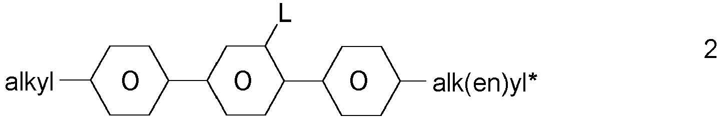 et un ou plusieurs composé(s) qui est/sont sélectionné(s) parmi les formules 3, 4 et 5, 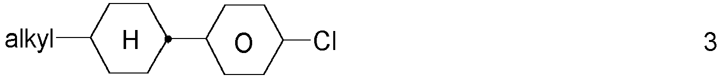 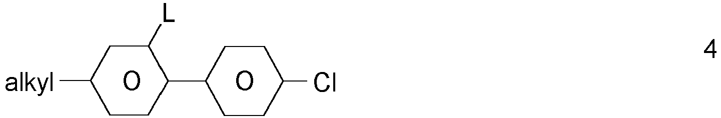 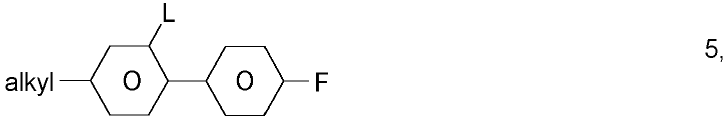 dans lesquelles les radicaux individuels présentent, dans chaque cas de manière indépendante les uns des autres et de manière identique ou différente pour chaque occurrence, les significations qui suivent :
alkenyl représente C₂₋₆-alkényle,
R^{x} représente C₁₋₆-alkyle ou C₂₋₆-alkényle,
alkyl et alkyl* représentent dans chaque cas, de manière indépendante l'un de l'autre, C₁₋₆-alkyle,
L représente H ou F,
alk(en)yl* représente C₁₋₆-alkyle ou C₂₋₆-alkényle,
et
il comprend de façon additionnelle un ou plusieurs composé(s) qui est/ sont sélectionné(s) parmi les formules XV et XVI, 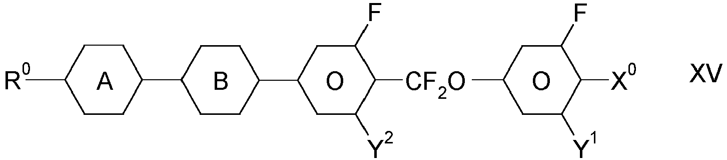 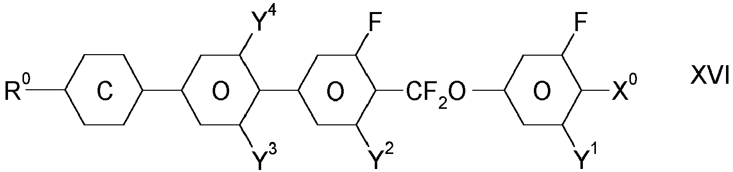 dans lesquelles R⁰, X⁰ et Y¹⁻⁴ présentent les significations qui sont indiquées selon la revendication 9, 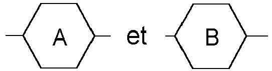 représentent dans chaque cas, de manière indépendante l'un de l'autre, 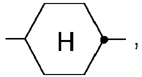 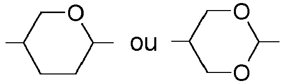 et 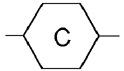 représente 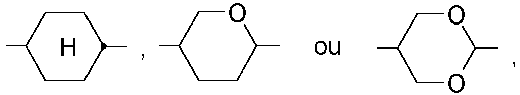 et il comprend de façon additionnelle un ou plusieurs composé(s) de la formule XXX, 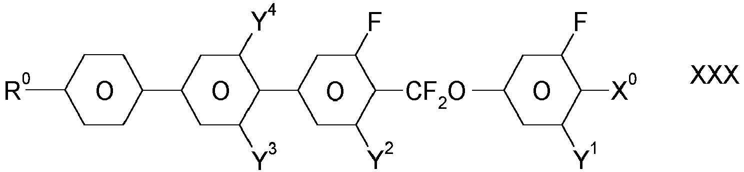 dans laquelle R⁰, X⁰ et Y¹⁻⁴ présentent les significations qui sont indiquées selon la revendication 9,
et le milieu comprend au moins trois composés des formules PGP-n-m et/ou PGP-n-2V, 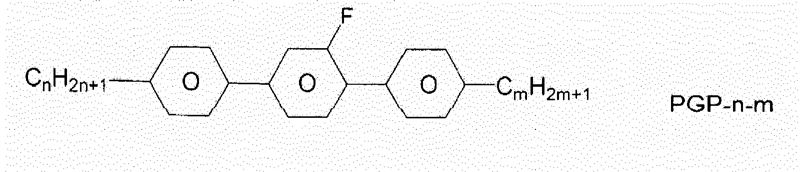 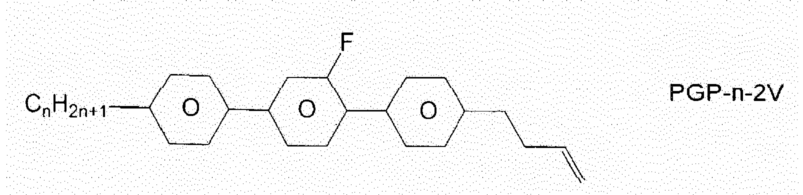 dans lesquelles n et m représentent dans chaque cas, de manière indépendante l'un de l'autre, 2, 3, 4 ou 5.

2. Milieu cristallin liquide selon la revendication 1, **caractérisé en ce qu'**il comprend un ou plusieurs composé(s) de la formule 1 qui est/sont sélectionné(s) parmi les formules qui suivent : 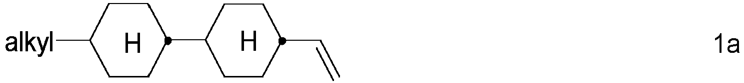 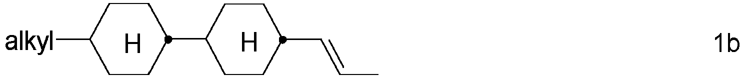 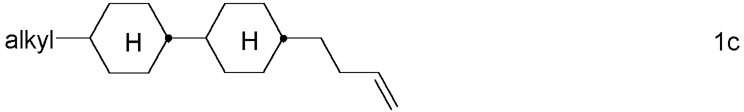 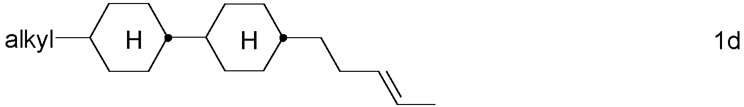 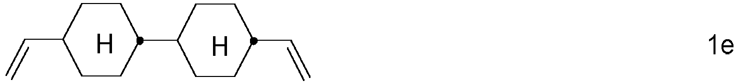 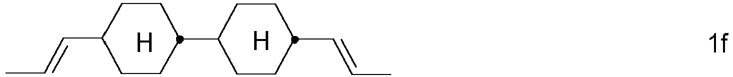 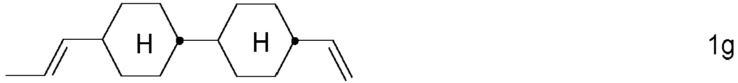 dans lesquelles "alkyl" présente la signification qui a été indiquée selon la revendication 1.

3. Milieu cristallin liquide selon la revendication 1 ou 2, **caractérisé en ce qu'**il comprend un ou plusieurs composé(s) de la formule 2 qui est/sont sélectionné(s) parmi les formules qui suivent :

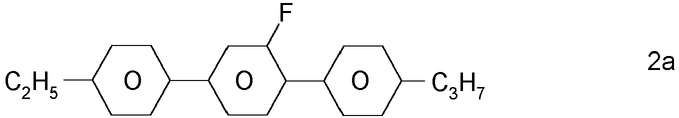

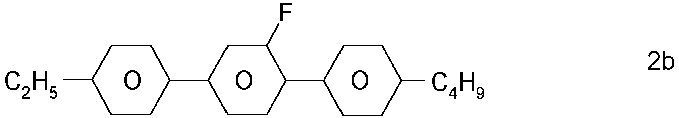

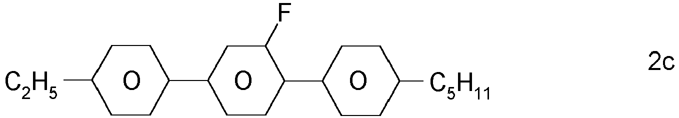

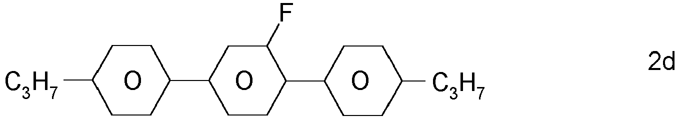

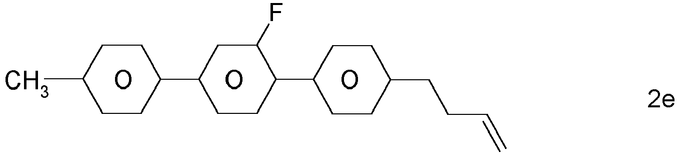

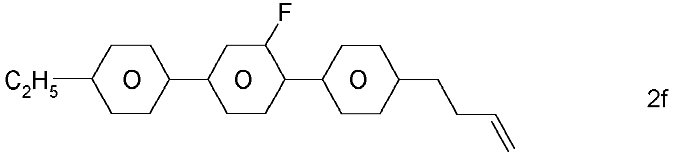

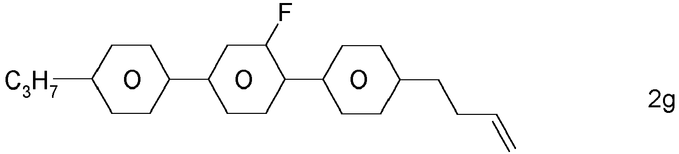

4. Milieu cristallin liquide selon une ou plusieurs des revendications 1 à 3, **caractérisé en ce qu'**il comprend un ou plusieurs composé(s) de la formule 3 qui est/sont sélectionné(s) parmi les formules qui suivent :

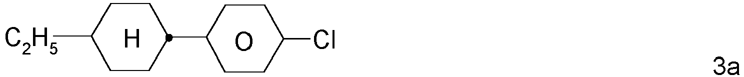

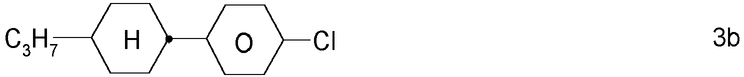

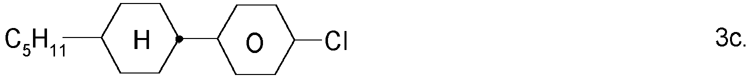

5. Milieu cristallin liquide selon une ou plusieurs des revendications 1 à 4, **caractérisé en ce qu'**il comprend un ou plusieurs composé(s) de la formule 4 qui est/sont sélectionné(s) parmi les formules qui suivent :

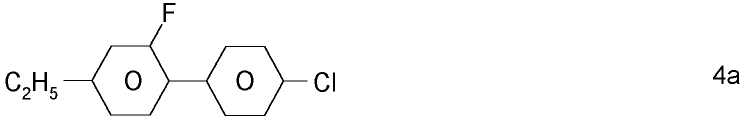

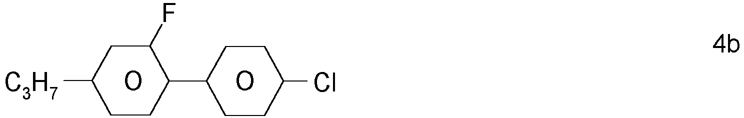

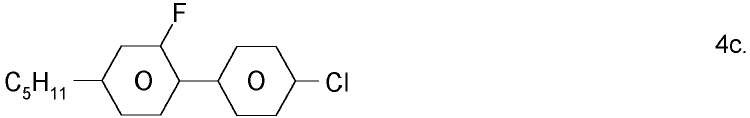

6. Milieu cristallin liquide selon une ou plusieurs des revendications 1 à 5 5, **caractérisé en ce qu'**il comprend un ou plusieurs composé(s) de la formule 5 qui est/sont sélectionné(s) parmi les formules qui suivent :

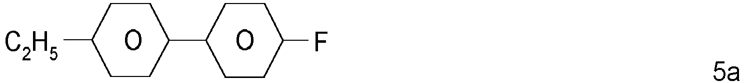

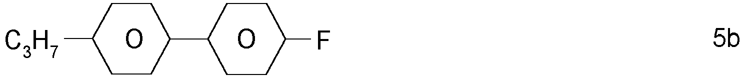

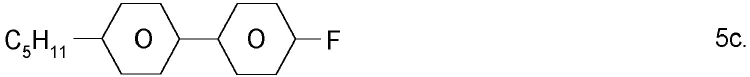

7. Milieu cristallin liquide selon une ou plusieurs des revendications 2 à 6, comprenant
un ou plusieurs composé(s) qui est/sont sélectionné(s) parmi les formules 1a et 1b, et
deux composés ou plus qui sont sélectionnés parmi les formules 2a à 2d, et
un composé de la formule 3b ou 4b ou 5c.

8. Milieu cristallin liquide selon une ou plusieurs des revendications 1 à 7, comprenant
de 20 à 65 % en poids d'un ou de plusieurs composé(s) de la formule 1, et
de 5 à 30 % en poids d'un ou de plusieurs composé(s) de la formule 2, et
de 2 à 20 % en poids d'un ou de plusieurs composé(s) qui est/sont sélectionné(s) parmi les formules 3, 4 et 5.

9. Milieu cristallin liquide selon une ou plusieurs des revendications 1 à 8, **caractérisé en ce qu'**il comprend de façon additionnelle un ou plusieurs composé(s) qui est/sont sélectionné(s) parmi les formules II et/ou III, 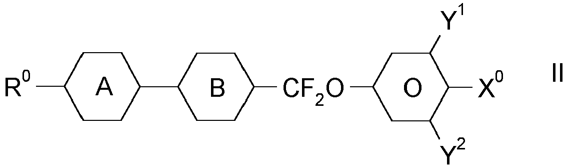 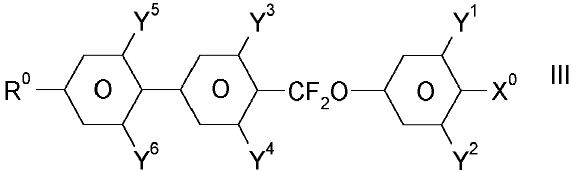 dans lesquelles
R⁰ représente alkyle ou alcoxy non substitué ou halogéné qui comporte de 1 à 15 atome(s) de C, cyclopentyle ou cyclobutyle, où, en outre, un ou plusieurs groupe(s) CH₂ dans ces radicaux peut/peuvent dans chaque cas être remplacé(s), de manière indépendante les uns des autres, par -C≡C-, -CF₂O-, -CH=CH-, 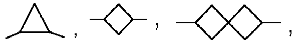 -O-, -CO-O- ou -O-CO- de telle sorte que des atomes de O ne soient pas liés directement les uns aux autres,
X⁰ représente F, Cl, alkyle halogéné, alcoxy halogéné, alkényle halogéné ou alkényloxy halogéné, dans chaque cas qui comporte jusqu'à 6 atomes de C,
Y¹⁻⁶ représentent dans chaque cas, de manière indépendante les uns des autres, H ou F, et 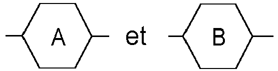 représentent dans chaque cas, de manière indépendante l'un de l'autre,

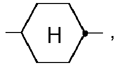

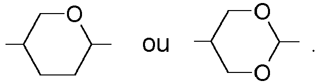

10. Milieu cristallin liquide selon une ou plusieurs des revendications 1 à 9, **caractérisé en ce qu'**il comprend de façon additionnelle un ou plusieurs composé(s) qui est/sont sélectionné(s) parmi les formules IV à VIII, 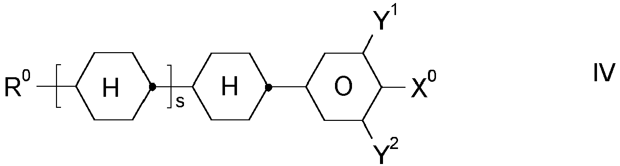 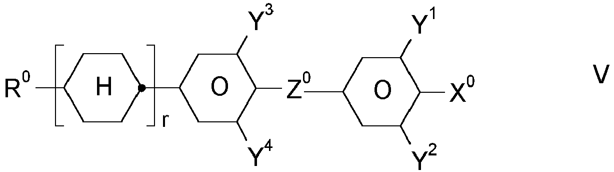 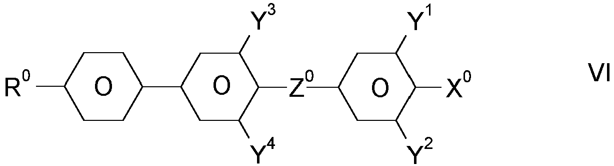 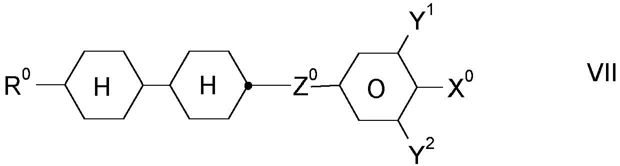 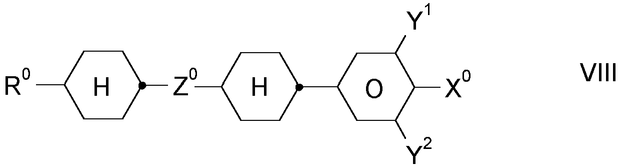 dans lesquelles R⁰, X⁰ et Y¹⁻⁴ présentent les significations qui ont été indiquées selon la revendication 9,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO- ou -OCF₂-, dans les formules V et VI également une liaison simple, dans les formules V et VIII également -CF₂O-,
r représente 0 ou 1, et
s représente 0 ou 1.

11. Milieu cristallin liquide selon une ou plusieurs des revendications 1 à 10, **caractérisé en ce qu'**il comprend de façon additionnelle un ou plusieurs composé(s) qui est/sont sélectionné(s) parmi les formules IX à XII, 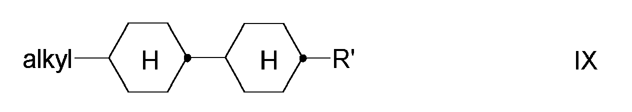 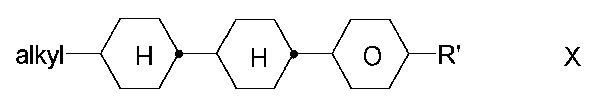 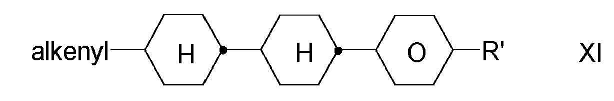 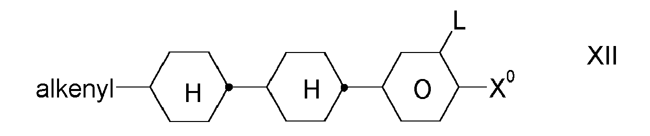 dans lesquelles X⁰ présente la signification qui a été indiquée selon la revendication 9, et
L représente H ou F,
"alkyl" représente C₁₋₆-alkyle,
R' représente C₁₋₆-alkyle, C₁₋₆-alcoxy ou C₂₋₆-alkényle, et
"alkenyl" et "alkenyl*" représentent dans chaque cas, de manière indépendante l'un de l'autre, C₂₋₆-alkényle.

12. Milieu cristallin liquide selon une ou plusieurs des revendications 1 à 11, **caractérisé en ce qu'**il comprend de façon additionnelle un ou plusieurs composé(s) de la formule XIII, 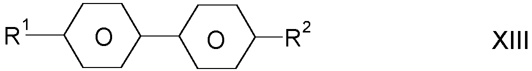 dans laquelle R¹ et R² représentent dans chaque cas, de manière indépendante l'un de l'autre, n-alkyle, alcoxy, oxaalkyle, fluoroalkyle ou alkényle, dans chaque cas qui comporte jusqu'à 6 atomes de C.

13. Milieu cristallin liquide selon une ou plusieurs des revendications 1 à 12, **caractérisé en ce qu'**il comprend de façon additionnelle un ou plusieurs composé(s) qui est/sont sélectionné(s) parmi les composés des formules qui suivent : 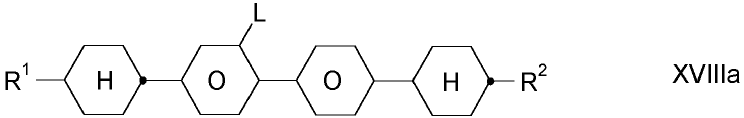 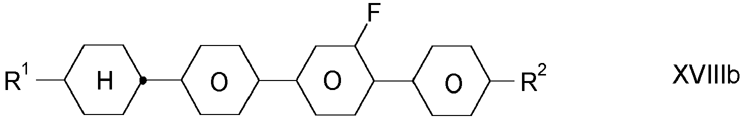 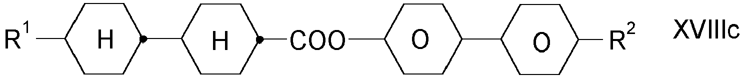 dans lesquelles R¹ et R² représentent dans chaque cas, de manière indépendante l'un de l'autre, n-alkyle, alcoxy, oxaalkyle, fluoroalkyle ou alkényle, dans chaque cas qui comporte jusqu'à 6 atomes de C, et L représente H ou F.

14. Milieu cristallin liquide selon une ou plusieurs des revendications 1 à 13, **caractérisé en ce qu'**il comprend de façon additionnelle un ou plusieurs composé(s) qui est/sont sélectionné(s) parmi le groupe des composés des formules XIX, XX, XXI, XXII, XXIII et XIV, 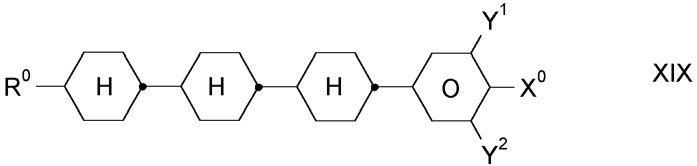 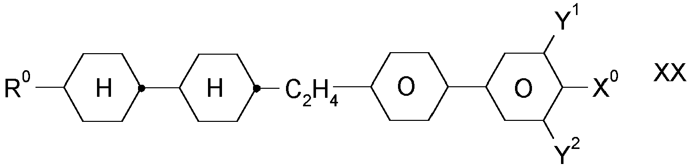 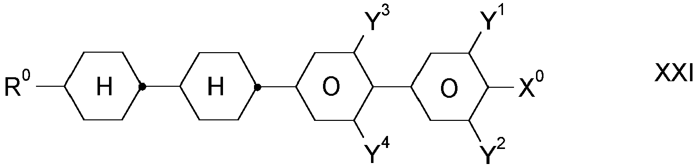 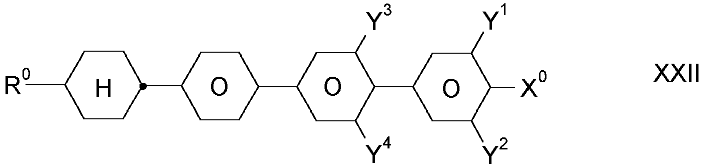 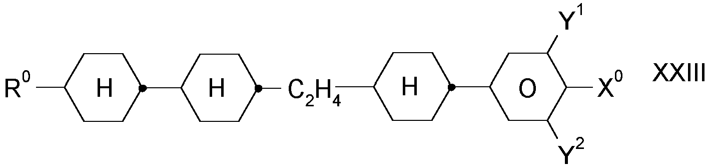 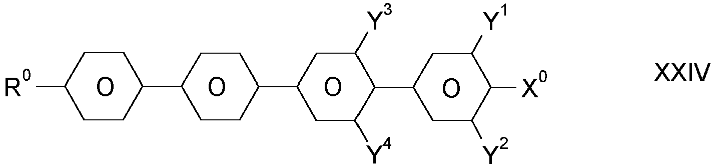 dans lesquelles R⁰, X⁰ et Y¹⁻⁴ présentent les significations qui ont été indiquées selon la revendication 9.

15. Milieu cristallin liquide selon une ou plusieurs des revendications 1 à 14, **caractérisé en ce qu'**il comprend de façon additionnelle un ou plusieurs additif(s) qui est/sont sélectionné(s) parmi le groupe qui est constitué par les stabilisateurs UV, les dopants et les antioxydants.

16. Milieu cristallin liquide selon une ou plusieurs des revendications 1 à 15, **caractérisé en ce qu'**il comprend de façon additionnelle un ou plusieurs composé(s) polymérisable(s).

17. Procédé pour la préparation d'un milieu cristallin liquide selon une ou plusieurs des revendications 1 à 16, **caractérisé en ce qu'**un ou plusieurs composé(s) des formules 1-5 comme il a été défini selon la revendication 1 est/sont mélangé(s) avec d'autres composés mésogènes et en option, également avec un ou plusieurs additif(s) et/ou au moins un composé polymérisable.

18. Utilisation d'un milieu cristallin liquide selon une ou plusieurs des revendications 1 à 16 à des fins électrooptiques.

19. Utilisation d'un milieu cristallin liquide selon une ou plusieurs des revendications 1 à 16 dans les lunettes à obturateur, pour les applications 3D, dans les affichages TN, PS-TN, STN, ECB, OCB, IPS, PS-IPS, HB-FFS, FFS, PS-FFS et VA positifs.

20. Affichage électrooptique à cristaux liquides contenant un milieu cristallin liquide selon une ou plusieurs des revendications 1 à 16.

21. Affichage électrooptique à cristaux liquides selon la revendication 20, **caractérisé en ce qu'**il s'agit d'un affichage TN, PS-TN, STN, ECB, OCB, IPS, PS-IPS, FFS, HB-FFS, PS-FFS ou VA positif.
